# EUROPÄISCHE PATENTANMELDUNG

(11) **EP 3 916 995 A1**
(43) Veröffentlichungstag der Anmeldung: **01.12.2021**
(21) Anmeldenummer: 20176561.7
(22) Anmeldetag: 26.05.2020
(51) Int. Cl.: H02P 6/10, H02J 50/10, H02J 50/80, H02K 11/042, H02K 11/35, H02K 41/03, H02P 25/06, H02P 29/40, H02P 29/50, B65G 49/08

(54) **PLANARANTRIEBSSYSTEM UND VERFAHREN ZUM BETREIBEN EINES PLANARANTRIEBSSYSTEMS**

(71) Anmelder: Beckhoff Automation GmbH, 33415 Verl (DE)
(72) Erfinder: BENTFELD, Lukas, 33129 Delbrück (DE); BRINKMANN, Rolf, 32107 Bad Salzuflen (DE); JEBRAMCIK, Patrick, 33334 Gütersloh (DE); KAULMANN, Tim, 33104 Paderborn (DE)
(74) Vertreter: Patentanwaltskanzlei WILHELM & BECK

(57) **Zusammenfassung**

Die Erfindung betrifft ein Planarantriebssystem. Das Planarantriebssystem weist einen Stator und einen Läufer auf. Der Stator weist mehrere bestrombare Statorleiter auf. Der Läufer weist eine Magneteinrichtung mit wenigstens einem Läufermagneten auf. Zwischen bestromten Statorleitern des Stators und der Magneteinrichtung des Läufers ist eine magnetische Wechselwirkung hervorrufbar, um den Läufer anzutreiben. Der Stator ist ausgebildet, das Bestromen von Statorleitern derart durchzuführen, dass mit Hilfe von bestromten Statorleitern ein magnetisches Wechselfeld erzeugbar ist. Der Läufer weist wenigstens eine Läuferspule auf, in welcher aufgrund des magnetischen Wechselfelds eine Wechselspannung induzierbar ist. Das Planarantriebssystem ist ausgebildet zur Datenübertragung von dem Stator zu dem Läufer, indem der Stator ausgebildet ist zum zeitweisen Beeinflussen des Bestromens von Statorleitern, um dadurch zeitweise eine Veränderung in Bezug auf die in der wenigstens einen Läuferspule des Läufers induzierbare Wechselspannung hervorzurufen. Die Erfindung betrifft des Weiteren ein Verfahren zum Betreiben eines Planarantriebssystems.

## Beschreibung

Die vorliegende Erfindung betrifft ein Planarantriebssystem. Die Erfindung betrifft des Weiteren ein Verfahren zum Betreiben eines Planarantriebssystems.

Planarantriebssysteme können in unterschiedlichen Gebieten zur Anwendung kommen. Mögliche Beispiele sind die Automatisierungstechnik, insbesondere die Fertigungstechnik, die Handhabungstechnik und die Verfahrenstechnik. Mit Hilfe eines Planarantriebssystems kann ein bewegliches Element, welches zum Beispiel Bestandteil einer Anlage oder Maschine sein kann, in mindestens zwei linear unabhängigen Richtungen bewegt oder positioniert werden. Ein Planarantriebssystem kann einen permanenterregten elektromagnetischen Planarmotor mit einem planaren Stator und wenigstens einem über dem Stator in wenigstens zwei Richtungen beweglichen Läufer umfassen.

Der Stator eines Planarantriebssystems kann eine Mehrzahl an bestrombaren Statorleitern aufweisen. Der Läufer kann eine Magneteinrichtung mit mehreren Permanentmagneten aufweisen. Ein Antreiben des Läufers kann durch Bestromen von Statorleitern des Stators erfolgen. Auf diese Weise kann eine magnetische Wechselwirkung zwischen bestromten Statorleitern und der Magneteinrichtung des Läufers hervorgerufen werden, wodurch der Läufer schwebend über dem Stator gehalten sowie über diesem bewegt werden kann.

Die Aufgabe der vorliegenden Erfindung besteht darin, ein verbessertes Planarantriebssystem anzugeben, welches sich für eine Datenübertragung zwischen einem Stator und einem Läufer eignet. Es ist weiterhin Aufgabe der Erfindung, ein entsprechendes Verfahren zum Betreiben eines Planarantriebssystems anzugeben.

Diese Aufgabe wird durch die Merkmale der unabhängigen Patentansprüche gelöst. Weitere vorteilhafte Ausführungsformen der Erfindung sind in den abhängigen Ansprüchen angegeben.

Gemäß einem Aspekt der Erfindung wird ein Planarantriebssystem vorgeschlagen. Das Planarantriebssystem weist einen Stator und einen Läufer auf. Der Stator weist mehrere bestrombare Statorleiter auf. Der Läufer weist eine Magneteinrichtung mit wenigstens einem Läufermagneten auf. Zwischen bestromten Statorleitern des Stators und der Magneteinrichtung des Läufers kann eine magnetische Wechselwirkung hervorgerufen werden, um den Läufer anzutreiben. Der Stator ist ausgebildet, das Bestromen von Statorleitern derart durchzuführen, dass mit Hilfe von bestromten Statorleitern ein magnetisches Wechselfeld erzeugt werden kann. Der Läufer weist wenigstens eine Läuferspule auf, in welcher aufgrund des magnetischen Wechselfelds eine Wechselspannung induziert werden kann. Das Planarantriebssystem ist ausgebildet zur Datenübertragung von dem Stator zu dem Läufer. Zu diesem Zweck ist der Stator ausgebildet zum zeitweisen Beeinflussen des Bestromens von Statorleitern, um dadurch zeitweise eine Veränderung in Bezug auf die in der wenigstens einen Läuferspule des Läufers induzierbare Wechselspannung hervorzurufen.

Das vorgeschlagene Planarantriebssystem eignet sich für eine zuverlässige Datenübertragung von dem Stator zu dem Läufer. Hierbei fungieren bestromte Statorleiter des Stators als Primärwicklungen bzw. Primärspulen, mit deren Hilfe ein sich zeitlich änderndes Magnetfeld erzeugt wird. Zu diesem Zweck kann in den betreffenden Statorleitern ein sich zeitlich ändernder elektrischer Strom bzw. Wechselstrom hervorgerufen werden. Die wenigstens eine Läuferspule des Läufers dient als Sekundärwicklung bzw. Sekundärspule, in welcher aufgrund des magnetischen Wechselfelds eine elektrische Wechselspannung induziert wird. Der Stator ist dazu ausgebildet, die Bestromung von Statorleitern zeitweise zu beeinflussen. Dies hat eine Veränderung in Bezug auf das durch den Stator erzeugte magnetische Wechselfeld, und damit auch in Bezug auf die in der wenigstens einen Läuferspule des Läufers induzierbare Wechselspannung zur Folge. Durch zeitweises Beeinflussen der Bestromung von Statorleitern kann in entsprechender Weise zeitweise eine Veränderung in Bezug auf die Induktionsspannung hervorgerufen, und kann hierauf basierend eine Informationsübertragung von dem Stator zu dem Läufer verwirklicht werden.

Im Folgenden werden weitere mögliche Details und Ausführungsformen näher beschrieben, welche für das Planarantriebssystem in Betracht kommen können.

Das Beeinflussen der Bestromung von Statorleitern des Stators kann zum Beispiel derart erfolgen, dass im Vergleich zu einer unbeeinflussten Bestromung von Statorleitern ein schwächeres oder stärkeres magnetisches Wechselfeld erzeugt, und somit in entsprechender Weise eine kleinere oder größere elektrische Wechselspannung in der wenigstens einen Läuferspule des Läufers induziert wird. Ferner besteht die Möglichkeit, dass infolge der Beeinflussung der Bestromung von Statorleitern das Erzeugen des magnetischen Wechselfelds unterdrückt oder im Wesentlichen unterdrückt wird, und dadurch keine Wechselspannung oder nur eine kleine bzw. vernachlässigbar kleine Wechselspannung in der Läuferspule induziert wird.

Um Datensignale bzw. Symbole von dem Stator zu dem Läufer zu übermitteln, kann die Beeinflussung der Bestromung von Statorleitern intermittierend bzw. pulsförmig erfolgen, um hierdurch eine intermittierend bzw. pulsförmig auftretende Veränderung in Bezug auf das durch den Stator erzeugte magnetische Wechselfeld und damit in Bezug auf die in der wenigstens einen Läuferspule induzierte Wechselspannung hervorzurufen. Zum Erfassen der Veränderung der Spannungsinduktion und damit des Sendens der Datensignale kann der Läufer, wie weiter unten näher erläutert wird, eine Spannungsmesseinrichtung zum Messen der in der Läuferspule induzierten Wechselspannung aufweisen. Durch Auswerten der gemessenen Induktionsspannung kann auf die von dem Stator erzeugten Datensignale geschlossen bzw. können diese ermittelt werden.

Das Erzeugen des magnetischen Wechselfelds durch den Stator und das Induzieren der elektrischen Wechselspannung in der wenigstens einen Läuferspule des Läufers kann nicht nur im Rahmen der Datenkommunikation, sondern auch zur drahtlosen bzw. induktiven Energieübertragung von dem Stator zu dem Läufer genutzt werden.

In diesem Zusammenhang weist der Läufer gemäß einer Ausführungsform einen Gleichrichter zum Umwandeln der induzierten Wechselspannung in eine Gleichspannung auf. Mit der Gleichspannung kann wenigstens eine weitere Einrichtung, welche Bestandteil des Läufers und/oder auf dem Läufer angeordnet sein kann, elektrisch versorgt werden. Der Gleichrichter kann ein Brückengleichrichter oder ein synchroner Gleichrichter sein. Des Weiteren kann der Gleichrichter als Spannungsverstärker bzw. Spannungsverdoppler ausgeführt sein.

In einer weiteren Ausführungsform weist das Planarantriebssystem eine Hauptsteuervorrichtung auf. Mit Hilfe der Hauptsteuervorrichtung kann der Betrieb des Planarantriebsystems gesteuert werden. Hierunter fällt zum Beispiel das Bestromen von Statorleitern. Auch die Datenübertragung von dem Stator zu dem Läufer kann durch die Hauptsteuervorrichtung gesteuert bzw. initiiert werden.

In einer weiteren Ausführungsform, welche in diesem Zusammenhang zum Zwecke der Datenübertragung von dem Stator zu dem Läufer zur Anwendung kommen kann, weist der Stator eine Beeinflussungseinrichtung zum zeitweisen Beeinflussen des Bestromens von Statorleitern auf. Die Beeinflussungseinrichtung des Stators kann durch die Hauptsteuervorrichtung des Planarantriebssystems angesteuert werden. Die Hauptsteuervorrichtung kann hierzu entsprechende Ansteuer- bzw. Datensignale an die Beeinflussungseinrichtung übermitteln, anhand derer die Beeinflussungseinrichtung das zeitweise Beeinflussen der Bestromung von Statorleitern vornehmen kann.

In einer weiteren Ausführungsform ist der Stator ausgebildet, das Bestromen von Statorleitern durch eine Stromregelung auf Basis einer Pulsweitenmodulation (engl. Puls Width Modulation, PWM) durchzuführen. Die Beeinflussungseinrichtung ist ausgebildet zum zeitweisen Beeinflussen der Stromregelung. Durch das Beeinflussen der Stromregelung mittels der Beeinflussungseinrichtung kann in zuverlässiger Weise auf das Bestromen von Statorleitern eingewirkt werden, um eine entsprechende Veränderung in Bezug auf das magnetische Wechselfeld und dadurch in Bezug auf die in der wenigstens einen Läuferspule des Läufers induzierbare Wechselspannung hervorzurufen.

In der vorgenannten Ausführungsform können zu bestromende Statorleiter mit einer mittels Pulsweitenmodulation getakteten elektrischen Spannung, und infolgedessen mit durch eine PWM-Taktfrequenz bzw. durch ein Zeitraster der Pulsweitenmodulation vorgegebenen periodischen Spannungspulsen beaufschlagt werden. Auf diese Weise kann der in bestromten Statorleitern erzeugte elektrische Strom mit einem Wechselstromanteil, dem sogenannten Rippelstrom, überlagert sein. Dies liegt an einer glättenden Wirkung der als Primärspulen dienenden Statorleiter, wodurch der in bestromten Statorleitern fließende Strom der pulsweitenmodulierten Spannung derart folgt, dass ein sägezahnartiger bzw. dreieckförmiger Stromverlauf vorliegt. Der Strom kann hierbei um einen Mittelwert hin und her pendeln. Das Auftreten des Rippelstroms ist mit einem sich zeitlich ändernden Magnetfeld verbunden, so dass wie oben angegeben eine elektrische Wechselspannung in der wenigstens einen Läuferspule des Läufers induziert werden kann.

In einer weiteren Ausführungsform, in welcher ausgenutzt wird, dass aufgrund der Stromregelung auf Basis der Pulsweitenmodulation ein Rippelstrom in bestromten Statorleitern des Stators und dadurch das magnetische Wechselfeld erzeugt werden kann, ist die für die Datenübertragung von dem Stator zu dem Läufer genutzte Beeinflussungseinrichtung ausgebildet, die Stromregelung derart zu beeinflussen, dass eine Veränderung in Bezug auf den Rippelstrom in bestromten Statorleitern hervorgerufen wird.

Es ist zum Beispiel möglich, das Auftreten des Rippelstroms in bestromten Statorleitern zeitweise zu unterdrücken. In entsprechender Weise kann hierdurch zeitweise das Erzeugen des magnetischen Wechselfelds und somit das Induzieren der Wechselspannung in der wenigstens einen Läuferspule des Läufers unterdrückt bzw. im Wesentlichen unterdrückt werden.

Möglich ist es auch, durch die Beeinflussung einen vergrößerten oder verkleinerten Rippelstrom in bestromten Statorleitern hervorzurufen. Hierbei kann der Rippelstrom eine gegenüber dem unbeeinflussten Zustand vergrößerte oder verkleinerte Schwingungsbreite (Spitze-Tal-Wert, engl. Peak-to-Peak Amplitude) aufweisen.

Das Antreiben des Läufers beruht wie oben angegeben auf einer magnetischen Wechselwirkung zwischen bestromten Statorleitern des Stators und der Magneteinrichtung des Läufers. Hierbei kann der Läufer schwebend über dem Stator gehalten sowie zusätzlich auch bewegt werden. Wie weiter unten näher erläutert wird, können die Statorleiter des Stators zu unabhängig voneinander bestrombaren Mehrphasensystemen zusammengeschaltet sein. Zum Antreiben des Läufers kann, in Abhängigkeit einer Position des Läufers, ein Teil der Statorleiter bzw. der Mehrphasensysteme gleichzeitig bestromt werden. Das Antreiben des Läufers kann auf dem Mittelwert des in bestromten Statorleitern fließenden Stroms basieren. Der durch die pulsweitenmodulierte Bestromung bedingte Rippelstrom kann hingegen keinen oder einen lediglich geringen und dadurch vernachlässigbaren Einfluss auf das Antreiben des Läufers haben.

Im Rahmen der Stromregelung können für Statorleiter bzw. Mehrphasensysteme des Stators unterschiedliche elektrische Sollstromwerte vorgegeben werden, so dass auch durch die Statorleiter im Mittel unterschiedliche elektrische Ströme fließen können. Im Vergleich zu dem überlagerten Rippelstrom können derartige Stromänderungen wesentlich langsamer sein bzw. sich auf wesentlich größere Zeiträume beziehen. Insofern kann die Stromregelung als Gleichstromregelung bzw. DC-Stromregelung (engl. Direct Current) bezeichnet werden.

Für das Durchführen der Stromregelung weist der Stator gemäß einer weiteren Ausführungsform mehrere Stromregeleinrichtungen, mit den Statorleitern bzw. Mehrphasensystemen verbundene Endstufeneinrichtungen und Strommesseinrichtungen auf. Die Endstufeneinrichtungen können mehrere Endstufen umfassen. Die Strommesseinrichtungen können ausgebildet sein, Iststromwerte von Statorleitern bzw. Mehrphasensystemen zu erfassen. Dies kann durch Abtasten erfolgen. Die Iststromwerte können, zusammen mit Sollstromwerten, den Stromregeleinrichtungen übermittelt werden. Die Stromregeleinrichtungen können ausgebildet sein, basierend auf den Iststromwerten und Sollstromwerten Steuersignale zu erzeugen. Die Steuersignale, bei welchen es sich um pulsweitenmodulierte Steuersignale handeln kann, können an die Endstufeneinrichtungen angelegt werden. Hierauf basierend können mit Hilfe der Endstufeneinrichtungen pulsweitenmodulierte bzw. getaktete Spannungspulse an Statorleiter bzw. Mehrphasensysteme des Stators angelegt werden, wodurch diese periodisch bestromt werden. Die Endstufeneinrichtungen können zu diesem Zweck mit einer Zwischenkreisspannung versorgt werden. Die Zwischenkreisspannung kann durch einen Zwischenkreis des Stators bereitgestellt werden.

Wie oben angegeben wurde, kann das Planarantriebssystem eine Hauptsteuervorrichtung aufweisen. Die Hauptsteuervorrichtung kann ausgebildet sein, Sollstromwerte für das Bestromen von Statorleitern bzw. Mehrphasensystemen des Stators zu erzeugen. Die Sollstromwerte können an die vorstehend genannten Stromregeleinrichtungen übermittelt werden.

Die Hauptsteuervorrichtung kann des Weiteren zum Festlegen eines Systemtakts des Planarantriebssystems ausgebildet sein, nach welchem sich der zeitliche Ablauf des Betriebs des Planarantriebssystems richten kann. Basierend auf dem Systemtakt können in diesem Zusammenhang zeitliche Parameter der Stromregelung wie die PWM-Taktfrequenz vorgegeben sein.

Die PWM-Taktfrequenz kann im kHz-Bereich, beispielsweise im zweistelligen kHz-Bereich liegen und zum Beispiel 64kHz betragen. Dies gilt in entsprechender Weise für die Frequenz des magnetischen Wechselfelds und damit für die Frequenz der in der Läuferspule induzierten Wechselspannung.

Wie oben angedeutet wurde, sind die Statorleiter des Stators gemäß einer weiteren Ausführungsform zu unabhängig voneinander bestrombaren Mehrphasensystemen zusammengeschaltet. Jedes Mehrphasensystem kann mehrere aus Statorleitern gebildete Spulen aufweisen. Insofern können die Mehrphasensysteme auch als Spulensysteme bzw. Mehrspulensysteme bezeichnet werden. Zum Antreiben des Läufers kann ein Teil der Mehrphasensysteme gleichzeitig bestromt bzw. pulsweitenmoduliert bestromt werden. Das Bestromen von mehreren Mehrphasensystemen kann zeitlich synchron oder im Wesentlichen zeitlich synchron erfolgen.

Der Stator kann ferner ausgebildet sein, Mehrphasensysteme desselben mit einem Mehrphasenstrom zu beaufschlagen. Hierbei kann jede Spule eines bestromten Mehrphasensystems mit einer entsprechenden Phase des Stroms gespeist werden. Die zu diesem Zweck mit Hilfe des Stators durchgeführte Stromregelung kann auf Basis einer mittenzentrierten Pulsweitenmodulation (engl. Center Aligned PWM) erfolgen, bei welcher die Spulen eines Mehrphasensystems mit bezüglich der PWM-Taktfrequenz bzw. eines Zeitrasters der Pulsweitenmodulation mittig zueinander zentrierten Spannungspulsen beaufschlagt werden.

Die Mehrphasensysteme des Stators können Dreiphasensysteme bzw. Dreispulensysteme sein, welche jeweils drei aus Statorleitern gebildete und mit jeweils einem gemeinsamen Sternpunkt zusammengeschaltete Spulen umfassen. Im Betrieb des Planarantriebssystems können derartige Spulensysteme mit einem Dreiphasenstrom beaufschlagt werden. Mit Bezug auf diese Ausgestaltung können die Endstufeneinrichtungen in Form von Schaltungen mit dreifachen Halbbrücken verwirklicht sein.

Hinsichtlich der unabhängigen Bestromung von Mehrphasensystemen kann der Stator des Weiteren ausgebildet sein, für jedes Mehrphasensystem eine eigene Stromregelung durchzuführen. Hierzu kann der Stator für jedes Mehrphasensystem eine Stromregeleinrichtung und eine Endstufeneinrichtung aufweisen. Auch kann der Stator für jedes Mehrphasensystem eine Strommesseinrichtung aufweisen. Alternativ kann der Stator jeweils für eine Gruppe aus mehreren Mehrphasensystemen eine Strommesseinrichtung aufweisen, was eine kostengünstige Bauform des Stators ermöglicht.

In einer weiteren Ausführungsform weist der Stator des Planarantriebssystems ein oder mehrere Statormodule auf. Bei einer Ausgestaltung mit mehreren Statormodulen können diese lateral nebeneinander angeordnet sein. Ein solches Statormodul kann mehrere der oben genannten Komponenten, also mehrere Statorleiter bzw. Mehrphasensysteme, Stromregeleinrichtungen, Endstufeneinrichtungen und Strommesseinrichtungen aufweisen. Des Weiteren kann das bzw. jedes Statormodul einen Zwischenkreis und eine Modulsteuervorrichtung aufweisen. Die Modulsteuervorrichtung kann zum Beispiel in Form eines FPGAs (engl. Field Programmable Gate Array) verwirklicht sein.
Ferner kann die Modulsteuervorrichtung die Stromregeleinrichtungen des betreffenden Statormoduls und, je nach Ausführungsform, gegebenenfalls wenigstens eine weitere Einrichtung aufweisen.

Bei der vorstehend genannten weiteren Einrichtung der Modulsteuervorrichtung eines Statormoduls kann es sich um die oben beschriebene und zur Datenübertragung von dem Stator zu dem Läufer genutzte Beeinflussungseinrichtung handeln, welche zum Beeinflussen der Bestromung von Statorleitern bzw. von wenigstens einem Mehrphasensystem eingesetzt werden kann. Für die Beeinflussungseinrichtung können ferner folgende Ausgestaltungen zur Anwendung kommen.

In einer weiteren Ausführungsform ist die Beeinflussungseinrichtung ausgebildet, ein bei der Stromregelung durchgeführtes Beaufschlagen von Statorleitern bzw. von wenigstens einem Mehrphasensystem des Stators mit Spannungspulsen zu unterdrücken. Hierbei können in gezielter Weise zeitweise einzelne oder mehrere Spannungspulse abgeschaltet werden. Das Abschalten von Spannungspulsen ist mit einem Unterdrücken des in den betreffenden Statorleitern bzw. Mehrphasensystemen fließenden Rippelstroms verbunden, wodurch das Erzeugen des magnetischen Wechselfelds und damit des Auftreten der Induktionsspannung in der wenigstens einen Läuferspule des Läufers unterdrückt bzw. im Wesentlichen unterdrückt werden kann. Durch das Auslassen von Spannungspulsen, was auch als Austasten bezeichnet werden kann, können ferner parasitäre kapazitive Kopplungen zwischen dem Stator und dem Läufer, welche gegebenenfalls eine bei dem Läufer im Rahmen der Datenübertragung zum Erfassen von Veränderungen der Induktionsspannung durchgeführte Spannungsmessung beeinträchtigen können, reduziert bzw. unterdrückt werden.

In einer weiteren Ausführungsform, in welcher die Statorleiter des Stators wie oben angegeben zu unabhängig voneinander bestrombaren Mehrphasensystemen zusammengeschaltet sind und bestromte Mehrphasensysteme bei der Stromregelung mit mittig zueinander zentrierten Spannungspulsen beaufschlagt werden, ist die Beeinflussungseinrichtung ausgebildet, die Stromregelung wenigstens eines Mehrphasensystems derart zu beeinflussen, dass das Mehrphasensystem mit Spannungspulsen mit übereinstimmenden Pulsbreiten beaufschlagt wird. Dieser Ausführungsform liegt zugrunde, dass ein Mehrphasensystem bei der Stromregelung üblicherweise bzw. im unbeeinflussten Zustand mit mittig zueinander zentrierten Spannungspulsen mit unterschiedlichen Pulsbreiten elektrisch angesteuert wird, wodurch auch ein Rippelstrom in dem Mehrphasensystem fließt. Sofern die Spannungspulse gleiche Pulsbreiten aufweisen, unterbleibt das Vorliegen des Rippelstroms. Durch zeitweises Ansteuern eines Mehrphasensystems mit mittig zueinander zentrierten Spannungspulsen mit übereinstimmenden Pulsbreiten kann infolgedessen ein Unterdrücken des in dem Mehrphasensystem fließenden Rippelstroms hervorgerufen, und somit auch das Auftreten der Induktionsspannung in der wenigstens einen Läuferspule des Läufers unterdrückt bzw. im Wesentlichen unterdrückt werden.

Um die vorgenannten Ausgestaltungen zu verwirklichen, kann folgende Ausführungsform für die zur Datenübertragung von dem Stator zu dem Läufer vorgesehene Beeinflussungseinrichtung in Betracht kommen. Hierbei ist die Beeinflussungseinrichtung ausgebildet, die von wenigstens einer zur Stromregelung eingesetzten Stromregeleinrichtung des Stators erzeugten Steuersignale bzw. das Übermitteln der von wenigstens einer Stromregeleinrichtung erzeugten Steuersignale zu unterbrechen, so dass die Steuersignale nicht an wenigstens eine Endstufeneinrichtung angelegt werden. Stattdessen kann die wenigstens eine Endstufeneinrichtung derart betrieben bzw. angesteuert werden, dass ein Unterdrücken des Rippelstroms in wenigstens einem Mehrphasensystem hervorgerufen, und damit das Auftreten der Induktionsspannung in der wenigstens einen Läuferspule des Läufers unterdrückt bzw. im Wesentlichen unterdrückt werden kann. Dies kann zum Beispiel dadurch erfolgen, dass mit Hilfe der Beeinflussungseinrichtung geänderte Steuersignale an die wenigstens eine Endstufeneinrichtung angelegt werden.

Die Beeinflussungseinrichtung kann zu diesem Zweck zum Beispiel eine Datensteuereinrichtung und eine Unterbrechungseinrichtung aufweisen. Mit Hilfe der Unterbrechungseinrichtung kann das Unterbrechen der von wenigstens einer Stromregeleinrichtung erzeugten Steuersignale erfolgen. Auch das Anlegen von geänderten Steuersignalen an wenigstens eine Endstufeneinrichtung kann mit Hilfe der Unterbrechungseinrichtung durchgeführt werden. Die Datensteuereinrichtung kann zum Ansteuern bzw. zeitweisen Ansteuern der Unterbrechungseinrichtung eingesetzt werden, um das Unterbrechen und damit das Unterdrücken des Rippelstroms in wenigstens einem Mehrphasensystem zeitweise vorzunehmen. Die Datensteuereinrichtung kann durch die Hauptsteuervorrichtung des Planarantriebssystems angesteuert werden, welche der Datensteuereinrichtung Datensignale übermitteln kann. Hierauf basierend kann die Datensteuereinrichtung die Unterbrechungseinrichtung ansteuern.

In einer weiteren Ausführungsform ist die Beeinflussungseinrichtung zum Beeinflussen bzw. Ändern von bei der Stromregelung verwendeten Sollstromwerten ausgebildet. Auf diese Weise können zum Beispiel beeinflusste bzw. geänderte Sollstromwerte an wenigstens eine Stromregeleinrichtung übermittelt werden. Hierdurch kann die Stromregelung wenigstens eines Mehrphasensystems beeinflusst werden, und kann dadurch eine Veränderung in Bezug auf das magnetische Wechselfeld und die in der wenigstens einen Läuferspule des Läufers induzierbare Wechselspannung bewirkt werden.

In einer weiteren Ausführungsform ist die Beeinflussungseinrichtung zum Beeinflussen wenigstens einer Stromregeleinrichtung und damit zum Beeinflussen der von der wenigstens einen Stromregeleinrichtung erzeugten Steuersignale ausgebildet. Hierdurch können beeinflusste bzw. geänderte Steuersignale an wenigstens eine Endstufeneinrichtung angelegt werden. Auch auf diese Weise kann die Stromregelung wenigstens eines Mehrphasensystems beeinflusst werden, und kann eine Veränderung in Bezug auf das magnetische Wechselfeld und die in der wenigstens einen Läuferspule des Läufers induzierbare Wechselspannung hervorgerufen werden.

Der Stator kann eine Beeinflussungseinrichtung oder, bei einer Ausgestaltung des Stators mit mehreren Statormodulen, jeweils eine Beeinflussungseinrichtung pro Statormodul aufweisen. Mit Hilfe einer Beeinflussungseinrichtung kann die Stromregelung von einem oder mehreren Mehrphasensystemen zeitweise beeinflusst werden. Möglich ist es auch, dass der Stator für jedes Mehrphasensystem und damit jede Stromregeleinrichtung eine eigene Beeinflussungseinrichtung aufweist. Eine oder mehrere Beeinflussungseinrichtungen können jeweils in einer Modulsteuervorrichtung eines Statormoduls integriert sein. Des Weiteren können eine oder mehrere Beeinflussungseinrichtungen durch die Hauptsteuervorrichtung des Planarantriebssystems angesteuert werden. Hierzu kann die Hauptsteuervorrichtung entsprechende Ansteuer- bzw. Datensignale an eine oder mehrere Beeinflussungseinrichtungen übermitteln. Auf diese Weise kann die Stromregelung von wenigstens einem Mehrphasensystem beeinflusst werden.

Im Betrieb des Planarantriebssystems können mehrere Mehrphasensysteme gleichzeitig bestromt werden, um den Läufer anzutreiben. Bei einer Ausgestaltung des Stators mit mehreren Statormodulen können mehrere gleichzeitig bestromte Mehrphasensysteme auch Bestandteile von mehreren benachbarten Statormodulen sein. Bei einer gleichzeitigen Bestromung von mehreren Mehrphasensystemen können sich der Läufer und damit die wenigstens eine Läuferspule des Läufers im Einflussbereich der mehreren Mehrphasensysteme befinden und dem Einfluss eines resultierenden magnetischen Wechselfelds ausgesetzt sein, welches durch eine Überlagerung mehrerer magnetischer Wechselfelder, jeweils hervorgerufen durch die in den Mehrphasensystemen fließenden Rippelströme, gebildet ist. Die in der Läuferspule induzierte Wechselspannung kann abhängig sein von dem resultierenden magnetischen Wechselfeld.

Mit Bezug auf die Datenübertragung von dem Stator zu dem Läufer besteht die Möglichkeit, die Bestromung von wenigstens einem Mehrphasensystem zu beeinflussen. Sofern ein Beeinflussen der Bestromung von mehreren Mehrphasensystemen erfolgt, kann dies mit Hilfe von einer oder mehreren Beeinflussungseinrichtungen des Stators durchgeführt werden. Ferner kann die Beeinflussung der mehreren Mehrphasensysteme zeitlich synchron zueinander erfolgen.

Hinsichtlich der Datenübertragung von dem Stator zu dem Läufer ist der Stator gemäß einer weiteren Ausführungsform ausgebildet, das zeitweise Beeinflussen des Bestromens von Statorleitern bzw. von wenigstens einem Mehrphasensystem in modulierter Form durchzuführen. In dieser Ausgestaltung erfolgt die Datenübertragung von dem Stator zu dem Läufer unter Anwendung einer Modulation. Auf diese Weise ist eine sichere Datenübertragung möglich. Die eingesetzte Modulation kann zum Beispiel eine Phasenmodulation, Amplitudenmodulation oder Frequenzmodulation sein.

Eine solche Datenübertragung von dem Stator zu dem Läufer unter Einsatz einer Modulation kann mit Hilfe von einer oder mehreren Beeinflussungseinrichtungen des Stators verwirklicht werden. Die Beeinflussungseinrichtung(en) kann bzw. können von der Hauptsteuervorrichtung des Planarantriebssystems angesteuert werden, um die Bestromung von Statorleitern bzw. die Stromregelung wenigstens eines Mehrphasensystems entsprechend moduliert zu beeinflussen.

Mit Bezug auf die vorgenannte Ausgestaltung kann im Rahmen der Datenübertragung von dem Stator zu dem Läufer durch das zeitweise bzw. modulierte Beeinflussen der Bestromung von Statorleitern eine Modulation eines zu sendenden Nutzsignals auf ein Trägersignal bzw. eine Trägerfrequenz eines Trägersignals erfolgen. Das Nutzsignal kann die für die Übermittlung vorgesehenen Datensignale bzw. Symbole umfassen. Das auf diese Weise mit dem Nutzsignal modulierte Trägersignal kann in der bei dem Läufer gemessenen Induktionsspannung enthalten sein, so dass durch Auswerten derselben auf das Nutzsignal geschlossen werden kann.

Die bei der Datenübertragung von dem Stator zu dem Läufer verwendete Trägerfrequenz kann kleiner sein als die PWM-Taktfrequenz der Stromregelung. Die PWM-Taktfrequenz kann ein Vielfaches der Trägerfrequenz sein. Die Trägerfrequenz kann im kHz-Bereich, zum Beispiel im einstelligen kHz-Bereich liegen. Möglich ist zum Beispiel der Frequenzbereich von 1kHz bis 2kHz.

Um eine hohe Robustheit der Datenübertragung von dem Stator zu dem Läufer zu ermöglichen, kann der Stator ferner ausgebildet sein, das Senden von Datensignalen bzw. Symbolen jeweils auf eine vorgegebene Länge ausgedehnt durchzuführen, indem die betreffenden Symbole mit einer vorgegebenen Wiederholung gesendet werden. Auf diese Weise wird der Informationsgehalt eines Symbols, zum Beispiel eines Bits oder Dibits, dadurch übermittelt, dass das betreffende Symbol mehrfach hintereinander gesendet wird. Diese Vorgehensweise hat zwar eine Verringerung der übertragbaren Datenrate zur Folge, führt jedoch zu einer Erhöhung der Störfestigkeit.

Im Hinblick auf das Durchführen der Datenübertragung in modulierter Form können ferner weitere Ausgestaltungen in Betracht kommen. Möglich ist zum Beispiel eine Modulation auf eine pseudozufällige Sequenz bzw. die Verwendung einer Pseudozufalls-Sequenz als Trägersignal, oder auch zum Beispiel der Einsatz von mehreren Trägerfrequenzen.

Mit Bezug auf den Läufer des Planarantriebssystems können ferner folgende Ausgestaltungen zur Anwendung kommen.

In einer weiteren Ausführungsform weist der Läufer, wie oben angedeutet wurde, eine Spannungsmesseinrichtung zum Messen der in der wenigstens einen Läuferspule induzierten Wechselspannung auf. Anhand der gemessenen Induktionsspannung kann die infolge des Beeinflussens der Bestromung von Statorleitern bzw. von wenigstens einem Mehrphasensystem hervorgerufene Veränderung in Bezug auf die Induktionsspannung erfasst, und können infolgedessen von dem Stator erzeugte Datensignale bzw. Symbole ermittelt werden. Die Spannungsmesseinrichtung kann mit der wenigstens einen Läuferspule des Läufers verbunden sein.

In einer weiteren Ausführungsform weist der Läufer eine Verarbeitungseinrichtung zum Auswerten der gemessenen induzierten Wechselspannung auf. Die Verarbeitungseinrichtung kann mit Hilfe der durch den oben beschriebenen Gleichrichter bereitgestellten Gleichspannung versorgt werden. Die Verarbeitungseinrichtung kann mit der vorstehend beschriebenen Spannungsmesseinrichtung verbunden sein. Durch das Auswerten können die von dem Stator erzeugten Datensignale bzw. Symbole ermittelt werden. Sofern die Datenübertragung von dem Stator zu dem Läufer wie oben angegeben unter Anwendung einer Modulation erfolgt, kann die Verarbeitungseinrichtung ausgebildet sein, das Auswerten der gemessenen Induktionsspannung durch eine Korrelation unter Verwendung wenigstens eines Referenzsignals durchzuführen.

Hierbei können jeweils für die Länge eines Symbols Spannungsmesswerte der Induktionsspannung mit dem wenigstens einen Referenzsignal multipliziert, und können die Produkte aufsummiert werden. Sofern ein Symbol wie oben angegeben in wiederholter Form mehrfach hintereinander gesendet wird, handelt es sich bei der Länge um die ausgedehnte Länge des mehrfach gesendeten Symbols. Das Durchführen der Datenkommunikation von dem Stator zu dem Läufer unter Einsatz einer Modulation hat zur Folge, dass alle Anteile eines der Auswertung zugrunde gelegten Spannungssignals der Induktionsspannung bis auf das Nutzsignal unkorreliert zu dem Referenzsignal sein können. Mit Hilfe der Korrelation kann infolgedessen eine über die Symbol-Länge einstellbare Unterdrückung von Störgrößen, und damit eine Verbesserung des Signal-Rausch-Verhältnisses erzielt werden. Das wenigstens eine Referenzsignal kann eine auf das Trägersignal bzw. dessen Trägerfrequenz abgestimmte Frequenz oder eine der Trägerfrequenz entsprechende Frequenz aufweisen.

Mit Bezug auf die wenigstens eine Läuferspule des Läufers sind unterschiedliche Ausgestaltungen denkbar. Es ist zum Beispiel möglich, dass die wenigstens eine Läuferspule des Läufers in Form eines gewickelten bzw. umlaufenden metallischen Drahts verwirklicht ist. In einer weiteren möglichen Ausgestaltung weist der Läufer wenigstens eine Leiterplatte (engl. Printed Circuit Board, PCB) auf. Die wenigstens eine Leiterplatte kann mehrlagig ausgeführt sein. Die wenigstens eine Läuferspule des Läufers kann hierbei in Form von einer oder mehreren spiralförmigen metallischen Leiterbahnen der wenigstens einen Leiterplatte verwirklicht sein.

Der Läufer kann zum Beispiel eine einzelne Leiterplatte mit einer oder mehreren spiralförmigen Leiterbahnen aufweisen, welche eine oder mehrere Läuferspulen bilden können. Des Weiteren kann der Läufer mehrere separate Leiterplatten mit jeweils einer oder mehreren spiralförmigen Leiterbahnen aufweisen, welche jeweils eine oder mehrere Läuferspulen bilden können. Mehrere spiralförmige Leiterbahnen bzw. Läuferspulen können elektrisch bzw. elektrisch in Serie miteinander verbunden sein.

Der wenigstens eine Läufermagnet der Magneteinrichtung des Läufers kann ein Permanentmagnet sein.

Des Weiteren kann die Magneteinrichtung des Läufers mehrere Läufermagnete aufweisen. Die Läufermagnete können derart angeordnet sein, dass die Läufermagnete einen Bereich umgeben. Ferner kann die Magneteinrichtung eine rechteckige bzw. quadratische Kontur besitzen.

In einer weiteren Ausführungsform ist die wenigstens eine Läuferspule des Läufers in dem von den Läufermagneten der Magneteinrichtung umgebenen Bereich angeordnet. Bei dieser Ausführungsform kann eine mehrlagige Leiterplatte mit mehreren übereinander angeordneten Lagen und mehreren übereinander angeordneten spiralförmigen Leiterbahnen zum Einsatz kommen. In dieser Ausgestaltung kann die Leiterplatte relativ einfach in dem Läufer integriert sein. Hierbei kann der Läufer eine freistellende Ausnehmung in dessen Mitte aufweisen, innerhalb welcher die Leiterplatte angeordnet sein kann. Die Anzahl der Lagen der Leiterplatte und der spiralförmigen Leiterbahnen kann zum Beispiel sechs oder acht betragen. Die verwendete Leiterplatte kann zum Beispiel eine Dicke von 1mm besitzen.

In einer weiteren Ausführungsform weist der Läufer mehrere Läuferspulen auf, welche in einem Bereich unterhalb der Magneteinrichtung des Läufers angeordnet sind. Auch in dieser Ausführungsform kann eine mehrlagige Leiterplatte mit mehreren Lagen und mehreren übereinander angeordneten spiralförmigen Leiterbahnen zum Einsatz kommen. Im Bereich jeder Lage können ferner mehrere nebeneinander angeordnete spiralförmige Leiterbahnen vorhanden sein. Die Leiterplatte kann an der Unterseite des Läufers angeordnet sein, und sich über die gesamte oder im Wesentlichen gesamte Fläche des Läufers erstrecken. Da in dieser Ausführungsform die Flughöhe des Läufers um die Dicke der Leiterplatte verringert sein kann, kann es in Betracht kommen, eine relativ flache Leiterplatte einzusetzen. Die verwendete Leiterplatte kann zum Beispiel zwei Lagen, und eine Dicke von zum Beispiel 0,3mm aufweisen.

In einer weiteren Ausführungsform weist der Läufer mehrere Läuferspulen auf, welche im Bereich von lateralen Außenseiten des Läufers angeordnet sind. In dieser Ausführungsform können mehrere mehrlagige Leiterplatten mit mehreren Lagen und mehreren übereinander angeordneten spiralförmigen Leiterbahnen eingesetzt werden. Die verwendeten Leiterplatten können zum Beispiel sechs oder acht Lagen, sowie eine Dicke von zum Beispiel 1mm aufweisen. Ferner können die Leiterplatten in Abstandshaltern des Läufers integriert sein, welche im Bereich der lateralen Außenseiten des Läufers vorhanden sein können.

Auch weitere der oben genannten Komponenten des Läufers wie der Gleichrichter, die Spannungsmesseinrichtung und die Verarbeitungseinrichtung können auf der bzw. auf wenigstens einer Leiterplatte des Läufers angeordnet sein.

In einer weiteren Ausführungsform weist der Läufer eine Läuferspule in einem die Magneteinrichtung lateral umgebenden Bereich auf. Die Läuferspule kann dabei in Form eines gewickelten Drahts verwirklicht sein. Möglich ist auch die Verwendung einer die Magneteinrichtung umlaufenden Leiterplatte mit spiralförmigen Leiterbahnen, durch welche die Läuferspule gebildet sein kann.

In einer weiteren Ausführungsform ist das Planarantriebssystem ausgebildet zur Datenübertragung von dem Läufer zu dem Stator. Zu diesem Zweck ist der Läufer ausgebildet zum zeitweisen Belasten der wenigstens einen Läuferspule, um dadurch zeitweise eine erhöhte Stromaufnahme von bestromten Statorleitern des Stators hervorzurufen.

In der vorgenannten Ausführungsform wird das Verfahren der Lastmodulation genutzt. Das elektrische Belasten der Läuferspule hat zur Folge, dass aus dem mit Hilfe des Stators erzeugten magnetischen Wechselfeld Energie entzogen bzw. in verstärkter Form entzogen wird. Die Energieentnahme aufgrund des Belastens der Läuferspule führt infolgedessen zu einem erhöhten Stromverbrauch von bestromten Statorleitern des Stators. Durch zeitweises Belasten der Läuferspule kann in entsprechender Weise zeitweise eine erhöhte Stromaufnahme von bestromten Statorleitern des Stators hervorgerufen, und kann hierauf basierend eine Informationsübertragung von dem Läufer zu dem Stator verwirklicht werden.

Für das zeitweise Belasten der wenigstens einen Läuferspule kann der Läufer ausgebildet sein, die Läuferspule kurzzuschließen.

In einer weiteren Ausführungsform ist der Läufer ausgebildet, für das zeitweise elektrische Belasten der wenigstens einen Läuferspule einen Spulenteil der wenigstens einen Läuferspule kurzzuschließen. Auf diese Weise kann sichergestellt werden, dass während der Belastung der Läuferspule die Induktionsspannung nicht bzw. nur zu einem Teil einbricht, wodurch die induktive Energieübertragung von dem Stator zu dem Läufer aufrechterhalten werden kann.

Für das Kurzschließen weist der Läufer gemäß einer weiteren Ausführungsform eine Schalteinrichtung auf. Die Schalteinrichtung kann mit der wenigstens einen Läuferspule verbunden sein. Ferner kann die Schalteinrichtung in Form eines Transistors ausgebildet sein. Durch entsprechendes Ansteuern der Schalteinrichtung kann der Kurzschluss hervorgerufen und wieder aufgehoben werden, und kann insofern der erhöhte Stromverbrauch des Stators bewirkt und wieder beendet werden.

In einer weiteren Ausführungsform weist der Läufer einen Lastwiderstand auf, über welchen der Spulenteil der wenigstens einen Läuferspule kurzgeschlossen wird. Der Lastwiderstand kann mit der wenigstens einen Läuferspule verbunden sein. Mit Hilfe des Lastwiderstands lässt sich die Größe der Energieentnahme aus dem magnetischen Wechselfeld bei der Belastung der Läuferspule festlegen.

In einer weiteren Ausführungsform ist der zum Kurzschließen genutzte Spulenteil ein unterster Spulenteil der wenigstens einen Läuferspule. Dieser Spulenteil, welcher eine spiralförmige Leiterbahn der wenigstens einen Läuferspule umfassen kann, kann im Betrieb des Planarantriebssystems dem Stator zugewandt sein. Auch kann der betreffende Spulenteil im Vergleich zu einem anderen Spulenteil der wenigstens einen Läuferspule den kleinsten Abstand zu den Statorleitern des Stators besitzen. Auf diese Weise kann eine hohe induktive Kopplung zwischen dem zum Kurzschließen genutzten Spulenteil des Läufers und bestromten Statorleitern des Stators erzielt werden. Der durch das Kurzschließen hervorgerufene Effekt, eine erhöhte Stromaufnahme bei dem Stator zu bewirken, kann dadurch möglichst groß sein.

In einer weiteren Ausführungsform liegt in dem zum Kurschließen genutzten Spulenteil ein größerer Leiterquerschnitt vor als in wenigstens einem anderen Spulenteil der wenigstens einen Läuferspule. Auf diese Weise kann der zum Kurzschließen genutzte Spulenteil eine hohe bzw. gegenüber einem anderen Spulenteil höhere Spulengüte besitzen. Dies begünstigt ebenfalls ein Vorliegen einer hohen induktiven Kopplung zwischen dem zum Kurzschließen genutzten Spulenteil und bestromten Statorleitern des Stators.

In einer weiteren Ausführungsform weist der Läufer eine Steuereinrichtung zum Steuern des zeitweisen Belastens der wenigstens einen Läuferspule auf. Die Steuereinrichtung kann mit der oben beschriebenen Schalteinrichtung des Läufers verbunden sein, und zum Ansteuern der Schalteinrichtung ausgebildet sein. Auch kann die Steuereinrichtung mit Hilfe der durch den oben beschriebenen Gleichrichter bereitgestellten Gleichspannung versorgt werden. Des Weiteren kann es sich bei der Steuereinrichtung um die oben beschriebene und im Rahmen der Datenübertragung von dem Stator zu dem Läufer zum Auswerten der gemessenen Induktionsspannung genutzte Verarbeitungseinrichtung handeln.

Bei einer Ausgestaltung des Läufers mit mehreren Läuferspulen kann das oben beschriebene Kurzschließen eines Spulenteils sich auf lediglich eine Läuferspule, oder auch auf mehrere bzw. sämtliche Läuferspulen des Läufers beziehen. Mit Bezug auf die letztere Variante kann der zum Kurzschließen genutzte Spulenteil zum Beispiel aus miteinander verbundenen Teilabschnitten bzw. Leiterbahnen von mehreren Läuferspulen gebildet sein. Die betreffenden Teilabschnitte können seriell miteinander verbunden sein, und unterste, also im Betrieb des Planarantriebssystems dem Stator zugewandte Teilabschnitte der Läuferspulen sein.

Um Datensignale bzw. Symbole von dem Läufer zu dem Stator zu übermitteln, kann die Belastung der Läuferspule intermittierend bzw. pulsförmig erfolgen, um hierdurch eine intermittierend bzw. pulsförmig auftretende erhöhte Stromaufnahme bei dem Stator hervorzurufen. Zum Erfassen der erhöhten Stromaufnahme und damit des Sendens der Datensignale kann der Stator, wie weiter unten näher erläutert wird, eine Summenstrommesseinrichtung zum Messen eines Summenstroms von bestromten Statorleitern aufweisen. Durch Auswerten des gemessenen Summenstroms kann auf die von dem Läufer erzeugten Datensignale geschlossen bzw. können diese ermittelt werden.

In einer weiteren Ausführungsform ist der Läufer ausgebildet, das zeitweise Belasten der wenigstens einen Läuferspule in modulierter Form durchzuführen. Die eingesetzte Modulation kann zum Beispiel eine Phasenmodulation, Amplitudenmodulation oder Frequenzmodulation sein. Eine solche Datenübertragung unter Einsatz einer Modulation kann mit Hilfe der Steuereinrichtung und der Schalteinrichtung des Läufers verwirklicht werden. Durch das Belasten der Läuferspule kann hierbei eine Modulation eines zu sendenden Nutzsignals auf ein Trägersignal bzw. eine Trägerfrequenz eines Trägersignals erfolgen. Das Nutzsignal kann die für die Übermittlung vorgesehenen Datensignale bzw. Symbole umfassen. Das auf diese Weise mit dem Nutzsignal modulierte Trägersignal kann in dem bei dem Stator gemessenen Summenstrom enthalten sein, so dass durch Auswerten desselben auf das Nutzsignal geschlossen werden kann. Die Trägerfrequenz kann kleiner sein als die PWM-Taktfrequenz der Stromregelung. Die Trägerfrequenz kann im kHz-Bereich, zum Beispiel im einstelligen kHz-Bereich liegen. Möglich ist zum Beispiel der Frequenzbereich von 1kHz bis 2kHz. Der Läufer kann ferner ausgebildet sein, das Senden von Datensignalen bzw. Symbolen jeweils auf eine vorgegebene Länge ausgedehnt durchzuführen, indem die betreffenden Symbole mit einer vorgegebenen Wiederholung gesendet werden. Für das Durchführen der Datenübertragung in modulierter Form sind ferner weitere Ausgestaltungen denkbar. Möglich ist zum Beispiel eine Modulation auf eine pseudozufällige Sequenz bzw. die Verwendung einer Pseudozufalls-Sequenz als Trägersignal, oder auch zum Beispiel der Einsatz von mehreren Trägerfrequenzen.

In einer weiteren Ausführungsform weist der Stator, wie oben angedeutet wurde, eine Summenstrommesseinrichtung zum Messen eines Summenstroms von bestromten Statorleitern bzw. Mehrphasensystemen auf. Anhand des gemessenen Summenstroms kann die infolge des Belastens der wenigstens einen Läuferspule des Läufers hervorgerufene erhöhte Stromaufnahme des Stators erfasst, und können infolgedessen von dem Läufer erzeugte Datensignale ermittelt werden. Die Summenstrommesseinrichtung kann zwischen einem Zwischenkreis und mehreren zum Bestromen von Statorleitern bzw. Mehrphasensystemen eingesetzten Endstufeneinrichtungen des Stators angeordnet, und mit dem Zwischenkreis und den Endstufeneinrichtungen verbunden sein. Auf diese Weise kann die Summenstrommesseinrichtung den Stromverbrauch der betreffenden Mehrphasensysteme erfassen. Bei einer Ausgestaltung des Stators mit mehreren Statormodulen kann jedes Statormodul eine Summenstrommesseinrichtung aufweisen. Diese kann zwischen dem Zwischenkreis und den Endstufeneinrichtungen des jeweiligen Statormoduls angeordnet sein. Der mit Hilfe einer Summenstrommesseinrichtung gemessene Summenstrom kann sich auf den dazugehörigen Zwischenkreis beziehen.

In einer weiteren Ausführungsform weist der Stator einen Bandpassfilter zum Filtern des gemessenen Summenstroms auf. Der Bandpassfilter kann mit der vorstehend beschriebenen Summenstrommesseinrichtung verbunden und dieser nachgeordnet sein. Diese Ausgestaltung kann zur Anwendung kommen, wenn die Datenübertragung von dem Läufer zu dem Stator wie oben angegeben unter Einsatz einer Modulation erfolgt. Hierbei kann der Bandpassfilter einen Durchlassbereich im Bereich der eingesetzten Trägerfrequenz aufweisen. Bei einer Ausgestaltung des Stators mit mehreren Statormodulen kann jedes Statormodul einen Bandpassfilter aufweisen. Dieser kann der Summenstrommesseinrichtung des jeweiligen Statormoduls nachgeordnet sein.

In einer weiteren Ausführungsform weist der Stator eine Auswerteeinrichtung zum Auswerten des Summenstroms auf. Die Auswerteeinrichtung kann mit dem vorstehend beschriebenen Bandpassfilter verbunden und diesem nachgeordnet sein, und dadurch zum Auswerten des gemessenen und gefilterten Summenstroms vorgesehen sein. Durch das Auswerten können die von dem Läufer erzeugten Datensignale bzw. Symbole ermittelt werden. Des Weiteren kann das Auswerten ein Erzeugen von Auswertesignalen bzw. Auswertedaten durch die Auswerteeinrichtung umfassen, welche die von dem Läufer übermittelten Datensignale bzw. Symbole wiedergeben. Sofern die Datenübertragung von dem Läufer zu dem Stator wie oben angegeben unter Anwendung einer Modulation erfolgt, kann die Auswerteeinrichtung ausgebildet sein, das Auswerten des gemessenen und gefilterten Summenstroms durch eine Korrelation unter Verwendung wenigstens eines Referenzsignals durchzuführen.

Die Hauptsteuervorrichtung des Planarantriebssystems kann ebenfalls im Rahmen der Auswertung miteinbezogen sein. In dieser Hinsicht können der Hauptsteuervorrichtung die von der Auswerteeinrichtung erzeugten Auswertesignale, und bei einer Ausgestaltung des Stators mit mehreren Statormodulen, die von einer oder mehreren Auswerteeinrichtungen der jeweiligen Statormodule erzeugten Auswertesignale übermittelt werden. Die Hauptsteuervorrichtung kann zum Weiterverarbeiten der von dem Stator kommenden Auswertesignale ausgebildet sein, um hierauf basierend die von dem Läufer erzeugten Datensignale bzw. Symbole zu ermitteln.

Mit Bezug auf die Datenübertragung von dem Läufer zu dem Stator kann die Verwendung eines Referenztakts in Betracht kommen. Als Referenztakt kann das von dem Stator erzeugte magnetische Wechselfeld bzw. dessen Frequenz verwendet werden.

In diesem Sinne ist der Läufer gemäß einer weiteren Ausführungsform ausgebildet, das zeitweise Belasten der wenigstens einen Läuferspule zeitlich abgestimmt auf das mit Hilfe des Stators erzeugte magnetische Wechselfeld durchzuführen. Zu diesem Zweck kann die oben genannte und zum Messen der in der Läuferspule induzierten Wechselspannung eingesetzte Spannungsmesseinrichtung des Läufers eingesetzt werden. Basierend auf der gemessenen Wechselspannung kann deren Frequenz und damit die Frequenz des magnetischen Wechselfelds ermittelt werden, und kann hierauf abgestimmt das Belasten der Läuferspule durchgeführt werden.

Wie oben angegeben wurde, kann der Läufer eine Steuereinrichtung zum Steuern des zeitweisen Belastens der wenigstens einen Läuferspule aufweisen. Die Steuereinrichtung kann hierbei mit der vorstehend beschriebenen Spannungsmesseinrichtung verbunden, und zum Auswerten der gemessenen Wechselspannung ausgebildet sein. Anhand der gemessenen Wechselspannung kann die Steuereinrichtung die Frequenz der Wechselspannung und damit die Frequenz des magnetischen Wechselfelds ermitteln. Hierauf abgestimmt kann die Steuereinrichtung das Belasten der wenigstens einen Läuferspule, was wie oben angegeben in modulierter Form erfolgen kann, vornehmen.

In entsprechender Weise ist der Stator bzw. die oder jede Auswerteeinrichtung des Stators gemäß einer weiteren Ausführungsform ausgebildet, das Auswerten des Summenstroms zeitlich abgestimmt auf das mit Hilfe des Stators erzeugte magnetische Wechselfeld durchzuführen. Auf diese Weise kann ein bei der Auswertung eingesetztes Referenzsignal möglichst gut auf das Trägersignal synchronisiert werden.

Gemäß einem weiteren Aspekt der Erfindung wird ein Verfahren zum Betreiben eines Planarantriebssystems vorgeschlagen. Das Planarantriebssystem kann wie oben beschrieben bzw. gemäß einer oder mehrerer der oben beschriebenen Ausführungsformen ausgebildet sein. Das Planarantriebssystem weist einen Stator und einen Läufer auf. Der Stator weist mehrere bestrombare Statorleiter auf. Der Läufer weist eine Magneteinrichtung mit wenigstens einem Läufermagneten auf. Durch Bestromen von Statorleitern des Stators wird eine magnetische Wechselwirkung zwischen bestromten Statorleitern und der Magneteinrichtung des Läufers hervorgerufen, um den Läufer anzutreiben. Das Bestromen von Statorleitern wird derart durchgeführt, dass mit Hilfe von bestromten Statorleitern ein magnetisches Wechselfeld erzeugt wird. Der Läufer weist wenigstens eine Läuferspule auf, in welcher aufgrund des magnetischen Wechselfelds eine Wechselspannung induziert wird. In dem Verfahren wird ferner eine Datenübertragung von dem Stator zu dem Läufer durchgeführt. Zu diesem Zweck wird das Bestromen von Statorleitern des Stators zeitweise beeinflusst, wodurch zeitweise eine Veränderung in Bezug auf die in der wenigstens einen Läuferspule des Läufers induzierte Wechselspannung hervorgerufen wird.

Mit Hilfe des vorgeschlagenen Verfahrens kann eine zuverlässige Datenübertragung von dem Stator zu dem Läufer bewirkt werden. Die Datenübertragung erfolgt durch zeitweises Beeinflussen der Bestromung von Statorleitern des Stators, wodurch zeitweise eine Veränderung in Bezug auf das durch den Stator erzeugte magnetische Wechselfeld, und dadurch zeitweise eine Veränderung in Bezug auf die in der wenigstens einen Läuferspule des Läufers induzierte Wechselspannung hervorgerufen wird. Durch intermittierendes bzw. pulsförmiges Beeinflussen der Bestromung von Statorleitern können infolgedessen Datensignale bzw. Symbole von dem Stator zu dem Läufer übermittelt werden.

Für das Verfahren können dieselben Merkmale, Details und Ausführungsformen zur Anwendung kommen und können dieselben Vorteile in Betracht kommen, wie sie oben mit Bezug auf das Planarantriebssystem erläutert wurden.

Beispielsweise kann durch das Beeinflussen der Bestromung von Statorleitern erzielt werden, dass im Vergleich zu einer unbeeinflussten Bestromung ein schwächeres oder stärkeres magnetisches Wechselfeld erzeugt, und damit eine kleinere oder größere elektrische Wechselspannung in der wenigstens einen Läuferspule induziert wird. Es ist auch möglich, dass durch das Beeinflussen der Bestromung das Erzeugen des magnetischen Wechselfelds, und damit das Induzieren der Wechselspannung unterdrückt oder im Wesentlichen unterdrückt wird.

Die Induktionsspannung kann nicht nur im Rahmen der Datenübertragung, sondern auch zur induktiven Energieübertragung von dem Stator zu dem Läufer genutzt werden. In diesem Sinne kann ferner ein Gleichrichten und dadurch Umwandeln der induzierten Wechselspannung in eine Gleichspannung erfolgen. Dies kann mit Hilfe eines Gleichrichters des Läufers durchgeführt werden.

Das zeitweise Beeinflussen des Bestromens von Statorleitern kann mit Hilfe wenigstens einer Beeinflussungseinrichtung des Stators durchgeführt werden. Die wenigstens eine Beeinflussungseinrichtung kann durch eine Hauptsteuervorrichtung des Planarantriebssystems angesteuert werden.

In einer weiteren Ausführungsform wird das Bestromen von Statorleitern durch eine Stromregelung auf Basis einer Pulsweitenmodulation durchgeführt. Das zeitweise Beeinflussen des Bestromens von Statorleitern, was wie vorstehend angegeben mittels wenigstens einer Beeinflussungseinrichtung des Stators durchgeführt werden kann, erfolgt durch ein Beeinflussen der Stromregelung.

In der vorgenannten Ausführungsform können zu bestromende Statorleiter mit einer mittels Pulsweitenmodulation getakteten elektrischen Spannung, und infolgedessen mit periodischen Spannungspulsen elektrisch angesteuert werden. Auf diese Weise kann ein Rippelstrom in bestromten Statorleitern, und dadurch das magnetische Wechselfeld erzeugt werden. Dies führt, wie oben angegeben, zur Induktion einer elektrischen Wechselspannung in der wenigstens einen Läuferspule des Läufers.

In einer weiteren Ausführungsform, in welcher ausgenutzt wird, dass aufgrund der Stromregelung auf Basis der Pulsweitenmodulation ein Rippelstrom in bestromten Statorleitern des Stators und dadurch das magnetische Wechselfeld erzeugt wird, wird das Beeinflussen der Stromregelung derart durchgeführt, dass eine Veränderung in Bezug auf den Rippelstrom in bestromten Statorleitern hervorgerufen wird. Möglich ist zum Beispiel ein zeitweises Unterdrücken des Rippelstroms, wodurch das Erzeugen des magnetischen Wechselfelds und damit das Auftreten der Induktionsspannung in der wenigstens einen Läuferspule des Läufers zeitweise unterdrückt bzw. im Wesentlichen unterdrückt werden kann.

Die Statorleiter des Stators können zu unabhängig voneinander bestrombaren Mehrphasensystemen zusammengeschaltet sein. Mit Bezug auf die Stromregelung können die Mehrphasensysteme mit mittig zueinander zentrierten Spannungspulsen beaufschlagt werden. Für jedes bestromte Mehrphasensystem kann eine eigene Stromregelung durchgeführt werden. Das Durchführen der Stromregelung kann mit Hilfe von Bestandteilen des Stators wie Stromregeleinrichtungen, mit den Statorleitern bzw. Mehrphasensystemen verbundenen Endstufeneinrichtungen und Strommesseinrichtungen durchgeführt werden.

In einer weiteren Ausführungsform erfolgt das Beeinflussen der Stromregelung dadurch, dass ein bei der Stromregelung durchgeführtes Beaufschlagen von Statorleitern bzw. von wenigstens einem Mehrphasensystem des Stators mit Spannungspulsen unterdrückt wird. Hierbei können zeitweise einzelne oder mehrere Spannungspulse ausgelassen werden. Dieses Vorgehen führt zu einem Unterdrücken des in den betreffenden Statorleitern bzw. Mehrphasensystemen fließenden Rippelstroms, wodurch das Erzeugen des magnetischen Wechselfelds und damit des Induzieren der Wechselspannung in der wenigstens einen Läuferspule des Läufers unterdrückt bzw. im Wesentlichen unterdrückt werden kann.

In einer weiteren Ausführungsform, in welcher die Statorleiter des Stators wie oben angegeben zu unabhängig voneinander bestrombaren Mehrphasensystemen zusammengeschaltet sind und bestromte Mehrphasensysteme bei der Stromregelung mit mittig zueinander zentrierten Spannungspulsen beaufschlagt werden, wird die Stromregelung wenigstens eines Mehrphasensystems derart beeinflusst, dass das Mehrphasensystem mit Spannungspulsen mit übereinstimmenden Pulsbreiten beaufschlagt wird. Auf diese Weise kann ebenfalls ein Unterdrücken des in dem Mehrphasensystem fließenden Rippelstroms hervorgerufen, und kann dadurch das Auftreten der Induktionsspannung in der wenigstens einen Läuferspule des Läufers unterdrückt bzw. im Wesentlichen unterdrückt werden.

Der Stator kann wie oben angegeben mehrere Statormodule aufweisen. Jedes Statormodul kann mehrere Statorleiter bzw. Mehrphasensysteme, Stromregeleinrichtungen, Endstufeneinrichtungen und Strommesseinrichtungen aufweisen. Des Weiteren kann jedes Statormodul eine oder mehrere zum Beeinflussen der Bestromung von Statorleitern bzw. von wenigstens einem Mehrphasensystem eingesetzte Beeinflussungseinrichtungen aufweisen.

In einer weiteren Ausführungsform wird das zeitweise Beeinflussen des Bestromens von Statorleitern bzw. von wenigstens einem Mehrphasensystem in modulierter Form, also unter Anwendung einer Modulation, durchgeführt. Die verwendete Modulation kann zum Beispiel eine Phasenmodulation, Amplitudenmodulation oder Frequenzmodulation sein.

In einer weiteren Ausführungsform wird ein Messen der induzierten Wechselspannung durchgeführt, um die Veränderung in Bezug auf die induzierte Wechselspannung zu erfassen. Auf der Grundlage der gemessenen Induktionsspannung kann die infolge des Beeinflussens der Bestromung von Statorleitern bzw. von wenigstens einem Mehrphasensystem hervorgerufene Veränderung in Bezug auf die Induktionsspannung festgestellt, und kann auf die von dem Stator erzeugten Datensignale bzw. Symbole geschlossen werden. Das Messen der induzierten Wechselspannung kann mit Hilfe einer Spannungsmesseinrichtung des Läufers durchgeführt werden.

In einer weiteren Ausführungsform wird ein Auswerten der gemessenen induzierten Wechselspannung durchgeführt. Durch das Auswerten können die von dem Stator erzeugten Datensignale bzw. Symbole ermittelt werden. Das Auswerten kann ein Korrelieren der gemessenen Induktionsspannung mit wenigstens einem Referenzsignal umfassen. Das Auswerten kann mit Hilfe einer Verarbeitungseinrichtung des Läufers durchgeführt werden.

In einer weiteren Ausführungsform wird eine Datenübertragung von dem Läufer zu dem Stator durchgeführt. Zu diesem Zweck wird die wenigstens eine Läuferspule des Läufers zeitweise belastet und dadurch zeitweise eine erhöhte Stromaufnahme von bestromten Statorleitern des Stators hervorgerufen. Durch intermittierendes bzw. pulsförmiges Belasten der Läuferspule können infolgedessen Datensignale bzw. Symbole von dem Läufer zu dem Stator übermittelt werden.

Das zeitweise Belasten der wenigstens einen Läuferspule kann durch Kurzschließen der Läuferspule erfolgen.

In einer weiteren Ausführungsform wird für das zeitweise Belasten der wenigstens einen Läuferspule ein Spulenteil der wenigstens einen Läuferspule kurzgeschlossen.

Das Kurzschließen des Spulenteils kann über einen Lastwiderstand erfolgen. Das Kurzschließen kann mit Hilfe einer Schalteinrichtung des Läufers durchgeführt werden. Das zeitweise Belasten der wenigstens einen Läuferspule kann mit Hilfe einer Steuereinrichtung des Läufers gesteuert werden. Die vorgenannte Schalteinrichtung kann hierzu durch die Steuereinrichtung angesteuert werden.

In einer weiteren Ausführungsform wird das zeitweise Belasten der wenigstens einen Läuferspule in modulierter Form, also unter Einsatz einer Modulation, durchgeführt. Die verwendete Modulation kann zum Beispiel eine Phasenmodulation, Amplitudenmodulation oder Frequenzmodulation sein.

In einer weiteren Ausführungsform wird das zeitweise Belasten der wenigstens einen Läuferspule zeitlich abgestimmt auf das mit Hilfe des Stators erzeugte magnetische Wechselfeld durchgeführt. Zu diesem Zweck kann die induzierte Wechselspannung gemessen und deren Frequenz ermittelt werden. Das Messen der Induktionsspannung kann mit Hilfe einer Spannungsmesseinrichtung des Läufers durchgeführt werden. Das Bestimmen der Frequenz der Wechselspannung kann mit Hilfe der vorgenannten Steuereinrichtung des Läufers erfolgen.

In einer weiteren Ausführungsform wird ein Messen eines Summenstroms von bestromten Statorleitern bzw. Mehrphasensystemen des Stators durchgeführt, um die erhöhte Stromaufnahme zu erfassen. Auf der Grundlage des gemessenen Summenstroms kann die infolge des Belastens der wenigstens einen Läuferspule des Läufers hervorgerufene erhöhte Stromaufnahme des Stators festgestellt, und kann auf von dem Läufer erzeugte Datensignale bzw. Symbole geschlossen werden. Das Messen des Summenstroms kann mit Hilfe einer Summenstrommesseinrichtung des Stators durchgeführt werden.

In einer weiteren Ausführungsform wird ein Filtern des gemessenen Summenstroms durchgeführt. Das Filtern des gemessenen Summenstroms kann mit Hilfe eines Bandpassfilters des Stators durchgeführt werden.

In einer weiteren Ausführungsform wird ein Auswerten des gemessenen Summenstroms durchgeführt. Hierbei können Auswertesignale bzw. Auswertedaten bereitgestellt werden, welche von dem Läufer übermittelte Datensignale bzw. Symbole wiedergeben können. Das Auswerten des Summenstroms kann nach dem Filtern durchgeführt werden. Ferner kann das Auswerten des Summenstroms zeitlich abgestimmt auf das mit Hilfe des Stators erzeugte magnetische Wechselfeld erfolgen. Das Auswerten kann ein Korrelieren des Summenstroms mit wenigstens einem Referenzsignal umfassen. Das Auswerten kann mit Hilfe einer Auswerteeinrichtung des Stators durchgeführt werden.

Die vorstehend erläuterten und/oder in den Unteransprüchen wiedergegebenen vorteilhaften Aus- und Weiterbildungen der Erfindung können - außer zum Beispiel in Fällen eindeutiger Abhängigkeiten oder unvereinbarer Alternativen - einzeln oder aber auch in beliebiger Kombination miteinander zur Anwendung kommen.

Die oben beschriebenen Eigenschaften, Merkmale und Vorteile dieser Erfindung, sowie die Art und Weise, wie diese erreicht werden, werden klarer und deutlicher verständlich in Zusammenhang mit der folgenden Beschreibung von Ausführungsbeispielen, die im Zusammenhang mit den schematischen Zeichnungen näher erläutert werden. Es zeigen:
Figur 1 eine perspektivische Darstellung eines Planarantriebssystem mit einem Stator und einem Läufer, wobei der Stator ein Statormodul aufweist;
Figur 2 eine perspektivische Darstellung des Stators mit mehreren nebeneinander angeordneten Statormodulen;
Figur 3 eine perspektivische Darstellung des Läufers, welcher eine Magneteinrichtung und eine von der Magneteinrichtung umgebene Leiterplatte aufweist;
Figur 4 eine perspektivische Darstellung des Statormoduls ohne Läufer;
Figur 5 eine Explosionsdarstellung der Magneteinrichtung des Läufers und von Statorlagen des Statormoduls;
Figuren 6 und 7 Aufsichtsdarstellungen von Statorlagen des Statormoduls;
Figuren 8 und 9 Ersatzschaltbilder von dreiphasigen Spulensystemen des Statormoduls;
Figur 10 eine Verschaltung eines Spulensystems mit einer Endstufeneinrichtung;
Figur 11 einen Regelkreis zur Stromregelung eines Spulensystems des Stators auf Basis der Pulsweitenmodulation;
Figur 12 zeitliche Spannungs- und Stromverläufe bei einer pulsweitenmodulierten Bestromung eines einphasigen und eines dreiphasigen Spulensystems;
Figur 13 eine Darstellung des Läufers mit einem Gleichrichter, einer Läuferspule, einer Schalteinrichtung, einer Spannungsmesseinrichtung und einer Steuereinrichtung, wobei ein Spulenteil der Läuferspule kurzgeschlossen werden kann;
Figuren 14 und 15 zeitliche Steuersignalverläufe zum Kurzschließen des Spulenteils der Läuferspule;
Figur 16 einen weiteren Regelkreis zur Stromregelung eines Spulensystems des Stators auf Basis der Pulsweitenmodulation, wobei der Stator zusätzlich eine Summenstrommesseinrichtung, einen Bandpassfilter und eine Auswerteeinrichtung aufweist;
Figur 17 eine perspektivische Darstellung des Statormoduls und des Läufers, wobei die Leiterplatte des Läufers in einer teilaufgeschnittenen Darstellung des Läufers gezeigt ist;
Figur 18 eine Aufsichtsdarstellung des Statormoduls und des Läufers;
Figur 19 eine Explosionsdarstellung der Leiterplatte des Läufers von Figur 17 mit einer Läuferspule, welche in mehreren Lagen angeordnete spiralförmige Leiterbahnen aufweist;
Figur 20 eine Aufsichtsdarstellung einer spiralförmigen Leiterbahn;
Figur 21 unterschiedliche Leiterquerschnitte von Leiterbahnen;
Figur 22 einen weiteren Regelkreis zur Stromregelung eines Spulensystems des Stators auf Basis der Pulsweitenmodulation, wobei der Stator eine zusätzliche Beeinflussungseinrichtung zum Beeinflussen der Stromregelung aufweist;
Figur 23 zeitliche Spannungs- und Stromverläufe bei einer pulsweitenmodulierten Bestromung eines Spulensystems, wobei eine Beeinflussung durch die Beeinflussungseinrichtung dargestellt ist;
Figuren 24 und 25 weitere Regelkreise zur Stromregelung eines Spulensystems des Stators auf Basis der Pulsweitenmodulation mit weiteren Ausgestaltungen einer Beeinflussungseinrichtung;
Figur 26 eine perspektivische Darstellung einer weiteren Ausgestaltung des Läufers mit einer Leiterplatte, welche an einer Unterseite des Läufers angeordnet ist;
Figur 27 eine Explosionsdarstellung der Leiterplatte des Läufers von Figur 26 mit mehreren Läuferspulen;
Figur 28 eine Darstellung einer weiteren Ausgestaltung des Läufers, welcher mehrere Leiterplatten im Bereich von lateralen Außenseiten aufweist;
Figur 29 eine Darstellung einer weiteren Ausgestaltung des Läufers, welcher eine Läuferspule im Bereich von lateralen Außenseiten aufweist; und
Figur 30 eine perspektivische Darstellung des Planarantriebssystems mit dem Stator und zwei Läufern.

Auf der Grundlage der folgenden schematischen Figuren werden Ausführungsformen eines Planarantriebssystems und eines Verfahrens zum Betreiben eines Planarantriebssystems beschrieben. Das Planarantriebssystem, welches einen planaren Stator und einen beweglichen Läufer umfasst, eignet sich sowohl für eine zuverlässige induktive Energieübertragung von dem Stator zu dem Läufer, als auch für eine zuverlässige Datenübertragung zwischen dem Stator und dem Läufer. Mit Bezug auf die im Folgenden beschriebenen Ausführungsformen wird darauf hingewiesen, dass Aspekte und Details, welche in Bezug auf eine Ausführungsform beschrieben werden, auch bei einer anderen Ausführungsform zur Anwendung kommen können. Des Weiteren besteht die Möglichkeit, Merkmale von mehreren Ausführungsformen miteinander zu kombinieren.

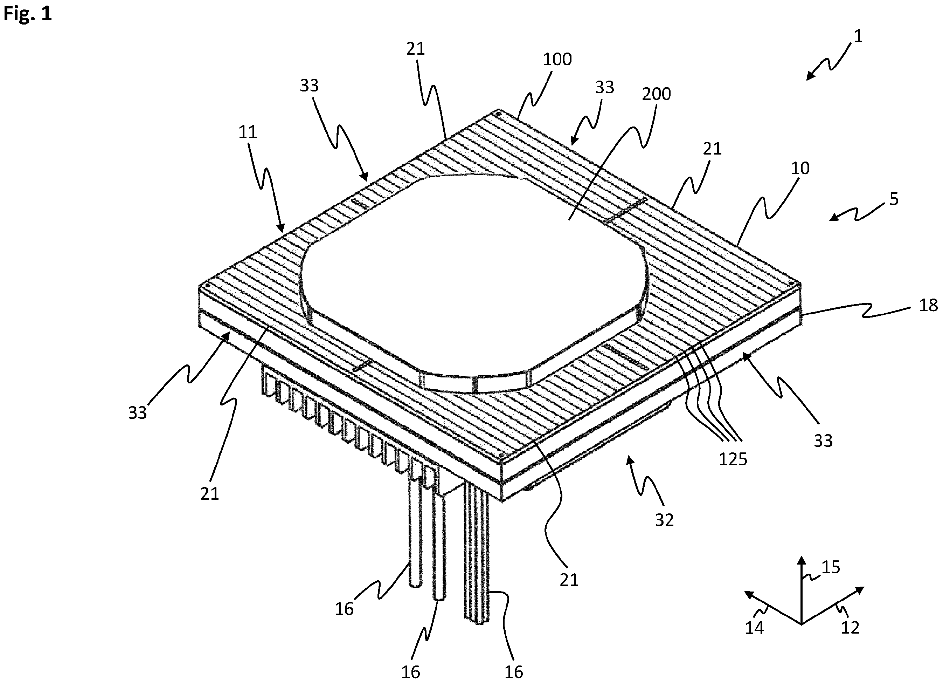

**Figur 1** zeigt eine perspektivische Darstellung einer Ausgestaltung eines Planarantriebssystems 1, welches einen Stator 5 mit wenigstens einem Statormodul 10 und einen Läufer 200 aufweist. Der Läufer 200 ist im Betrieb des Planarantriebssystems 1 beweglich über dem Stator 5 und dem Statormodul 10 angeordnet. Das Statormodul 10 umfasst ein Modulgehäuse 18 und eine Statoreinheit 100, welche an einer Oberseite des Modulgehäuses 18 angeordnet ist. Die Statoreinheit 100 ist als Planarstator ausgebildet und weist eine ebene bzw. planare Statorfläche 11 auf. Die Statorfläche 11 erstreckt sich über die gesamte Oberseite der Statoreinheit 100 und des Statormoduls 10. Die Statoreinheit 100 weist mehrere mit elektrischen Antriebsströmen beaufschlagbare metallische Statorleiter 125 auf. Die Statorleiter 125 können auch als Spulenleiter oder Leiterstreifen bezeichnet werden.

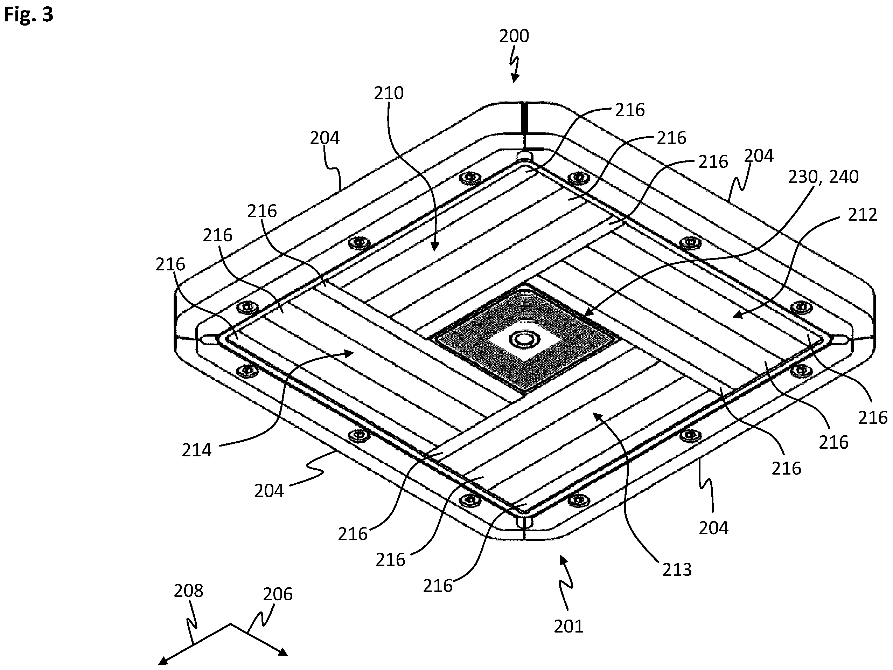

Durch das Bestromen von Statorleitern 125 des Statormoduls 10 kann ein Magnetfeld erzeugt werden, welches den Läufer 200 in Wechselwirkung mit einer Magneteinrichtung 201 des Läufers 200 (vgl. **Figur 3**) antreiben kann. Der Läufer 200 kann hierbei schwebend über der Statorfläche 11 gehalten sowie zusätzlich bewegt werden. Ein Bewegen des Läufers 200 kann sowohl in einer ersten Richtung 12 als auch in einer zweiten Richtung 14 erfolgen. Wie in **Figur 1** gezeigt ist, sind die erste und zweite Richtung 12, 14 senkrecht zueinander, und jeweils parallel zu der Statorfläche 11 orientiert. Indem der Läufer 200 zugleich in der ersten Richtung 12 als auch in der zweiten Richtung 14 bewegt wird, kann der Läufer 200 in einer beliebigen Richtung über der Statorfläche 11 bewegt werden. Ein Bewegen des Läufers 200 ist ferner in einer zu der ersten Richtung 12, der zweiten Richtung 14 und der Statorfläche 11 senkrecht orientierten dritten Richtung 15 möglich. Auf diese Weise kann der Abstand des Läufers 200 zu der Statorfläche 11 variiert werden, der Läufer 200 also über der Statorfläche 11 angehoben oder abgesenkt werden.

In dem Modulgehäuse 18 sind in **Figur 1** nicht dargestellte weitere elektrische und elektronische Komponenten und Einrichtungen des Statormoduls 10 angeordnet. Diese Bestandteile dienen u.a. zur Erzeugung von elektrischen Antriebsströmen und dadurch zur Bestromung von Statorleitern 125 des Statormoduls 10. Wie weiter unten näher erläutert wird, erfolgt die Bestromung durch eine Stromregelung auf Basis der Pulsweitenmodulation. Auch zur Datenübertragung mit dem Läufer 200 eingesetzte Bestandteile des Statormoduls 10, auf welche ebenfalls weiter unten näher eingegangen wird, können in dem Modulgehäuse 18 enthalten sein.

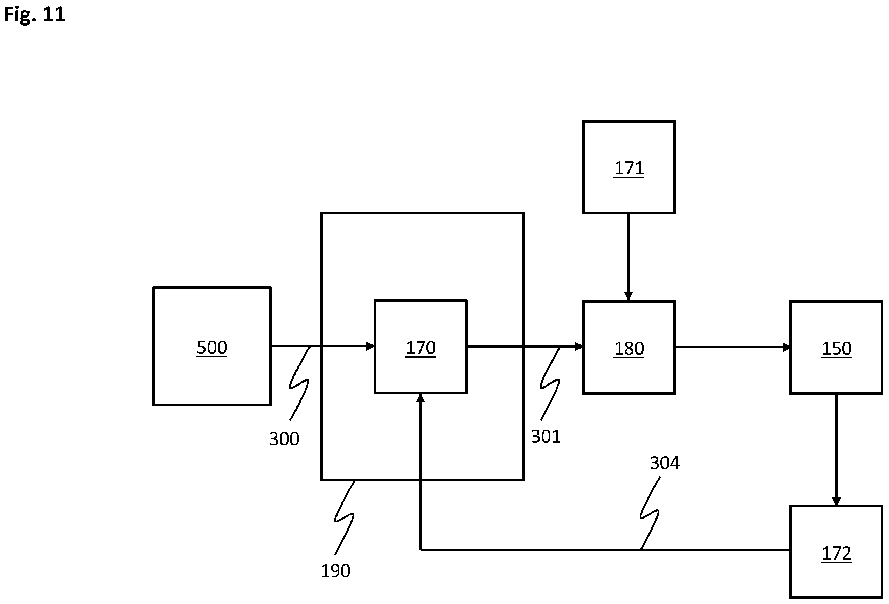

An einer der Statorfläche 11 gegenüberliegenden Unterseite 32 des Modulgehäuses 18 befinden sich in **Figur 1** nicht dargestellte Anschlüsse, welche zur Verbindung des Statormoduls 10 mit mehreren Anschlussleitungen 16 dienen. Die Anschlussleitungen 16 können eine Energieversorgungsleitung zur Versorgung des Statormoduls 10 mit elektrischer Energie, eine Eingangsdatenleitung und eine Ausgangsdatenleitung umfassen. Über die Energieversorgungsleitung kann dem Statormodul 10 elektrische Energie u.a. zur Erzeugung von Antriebsströmen zugeführt werden. Über die Eingangs- und Ausgangsdatenleitung kann ein Senden von Daten an das Statormodul 10 und von dem Statormodul 10 erfolgen. Auf diese Weise kann eine Datenkommunikation zwischen dem Statormodul 10 und einer Hauptsteuervorrichtung 500 (vgl. **Figur 11**) des Planarantriebssystems 1 verwirklicht sein. Dies umfasst zum Beispiel ein Übermitteln von Steuersignalen bzw. Steuerdaten wie beispielsweise elektrischen Sollstromwerten oder auch anderen Datensignalen von der Hauptsteuervorrichtung 500 an das Statormodul 10.

Anhand von **Figur 1** wird deutlich, dass das Modulgehäuse 18, die Statoreinheit 100 und die Statorfläche 11 in der Aufsicht auf die Statorfläche 11 rechteckig bzw. quadratisch ausgebildet sind. Die Statorfläche 11 wird durch vier jeweils gerade Außenkanten 21 begrenzt. Jeweils zwei einander gegenüberliegende Außenkanten 21 sind parallel zu der ersten Richtung 12 und zwei einander gegenüberliegende weitere Außenkanten 21 sind parallel zu der zweiten Richtung 14 orientiert. Das Statormodul 10 und das Modulgehäuse 18 weisen ferner zwischen der Statorfläche 11 und der gegenüberliegenden Unterseite 32 vier ebene Seitenflächen 33 auf, welche an der Statorfläche 11 bündig mit den Außenkanten 21 abschließen.

Der Stator 5 des Planarantriebssystems 1 kann nicht nur mit einem Statormodul 10, sondern mit mehreren baugleichen Exemplaren des in **Figur 1** gezeigten Statormoduls 10 verwirklicht sein. Die mehreren Statormodule 10 können derart nebeneinander angeordnet sein, dass die Außenkanten 21 und Seitenflächen 33 benachbarter Statormodule 10 aneinander liegen. Auf diese Weise können die Statorflächen 11 der Statormodule 10 eine zusammenhängende Arbeitsfläche bilden, über welche der Läufer 200 unterbrechungsfrei bewegt werden kann. Dies erfolgt durch eine entsprechende Bestromung von Statorleitern 125 der Statormodule 10 und dadurch Erzeugen eines den Läufer 200 antreibenden Magnetfelds.

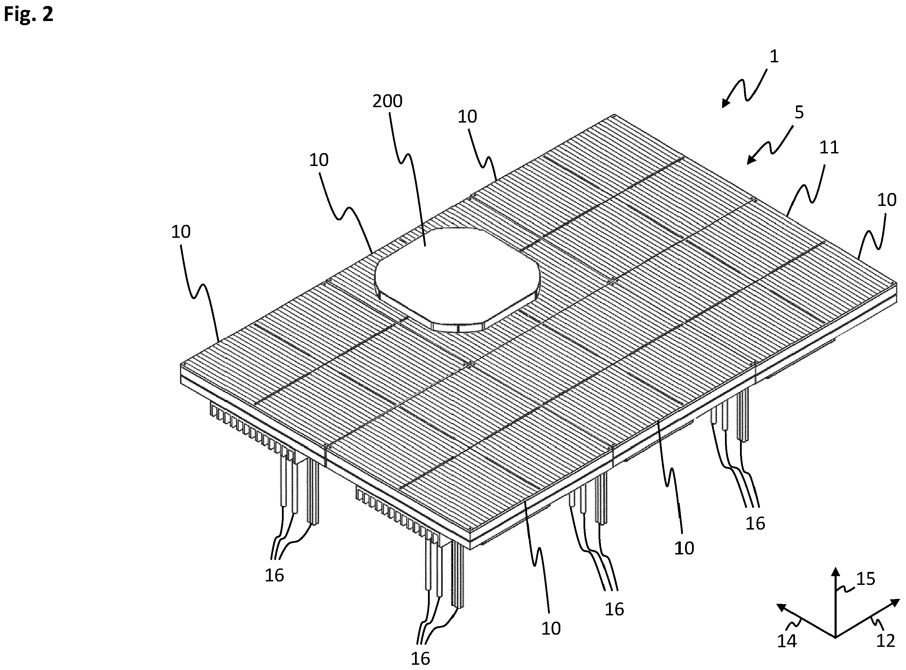

Zur Veranschaulichung zeigt **Figur 2** eine perspektivische Darstellung einer Ausgestaltung des Stators 5 mit sechs nebeneinander angeordneten Statormodulen 10. Die Statormodule 10 sind in zwei in der zweiten Richtung 14 nebeneinanderliegenden und entlang der ersten Richtung 12 ausgedehnten ersten Reihen und in drei in der ersten Richtung 12 nebeneinanderliegenden und entlang der zweiten Richtung 14 ausgedehnten zweiten Reihen bzw. Spalten nebeneinander angeordnet. Die Statorflächen 11 der Statormodule 10 bilden eine zusammenhängende und planare Arbeitsfläche für den Läufer 200. Der Läufer 200 kann jeweils nahtlos von der Statorfläche 11 eines Statormoduls 10 auf die bzw. über die Statorfläche 11 eines benachbarten Statormoduls 10 bewegt werden.

Abgesehen von der in **Figur 2** gezeigten Ausgestaltung können für den Stator 5 des Planarantriebssystems 1 auch andere Ausgestaltungen mit anderen Anordnungen und/oder anderen Anzahlen an nebeneinander angeordneten Statormodulen 10 in Betracht kommen. Die Statormodule 10 können in der ersten und/oder zweiten Richtung 12, 14 prinzipiell zu einem Stator 5 beliebiger Größe zusammengefügt sein.

Die oben erwähnte Energieversorgung und Datenkommunikation mit der Hauptsteuervorrichtung 500 kann bei jedem der Statormodule 10 des Stators 5 über jeweils eigene Anschlussleitungen 16 der Statormodule 10 verwirklicht sein. Alternative, hier nicht dargestellte Ausgestaltungen der Statormodule 10 können ferner elektrische Verbindungselemente aufweisen, mittels derer elektrische Energie und/oder Daten von einem Statormodul 10 zu einem benachbarten Statormodul 10 übertragen werden können. Derartige Verbindungselemente können zum Beispiel an den Seitenflächen 33 der Statormodule 10 angeordnet sein.

**Figur 3** zeigt eine Ausgestaltung des Läufers 200 des Planarantriebssystems 1 in einer perspektivischen Ansicht von unten auf eine Unterseite des Läufers 200. Im Betrieb des Planarantriebssystems 1 ist die Unterseite des Läufers 200 der Statorfläche 11 des Statormoduls 10 bzw. von mehreren Statormodulen 10 des Stators 5 zugewandt angeordnet. Auch sind der Läufer 200 bzw. dessen Unterseite parallel oder im Wesentlichen parallel zu der Statorfläche 11 orientiert. Der Läufer 200 weist an der Unterseite eine Magneteinrichtung 201 auf. Die Magneteinrichtung 201 besitzt eine rechteckige bzw. quadratische Außenkontur, und umfasst eine erste Magneteinheit 210, eine zweite Magneteinheit 212, eine dritte Magneteinheit 213 und eine vierte Magneteinheit 214. Die erste Magneteinheit 210 und die dritte Magneteinheit 213 weisen jeweils in einer ersten Läuferrichtung 206 nebeneinander angeordnete und entlang einer zu der ersten Läuferrichtung 206 senkrecht orientierten zweiten Läuferrichtung 208 ausgedehnte längliche Läufermagnete 216 auf. Die zweite Magneteinheit 212 und die vierte Magneteinheit 214 weisen jeweils in der zweiten Läuferrichtung 208 nebeneinander angeordnete und entlang der ersten Läuferrichtung 206 ausgedehnte längliche Läufermagnete 216 auf. Bei den Läufermagneten 216 handelt es sich um Permanentmagnete. Die erste und die dritte Magneteinheit 210, 213 dienen im Betrieb des Planarantriebssystems 1 einem Antrieb des Läufers 200 in der ersten Läuferrichtung 206. Die zweite und die vierte Magneteinheit 212, 214 dienen im Betrieb einem Antrieb des Läufers 200 in der zweiten Läuferrichtung 208.

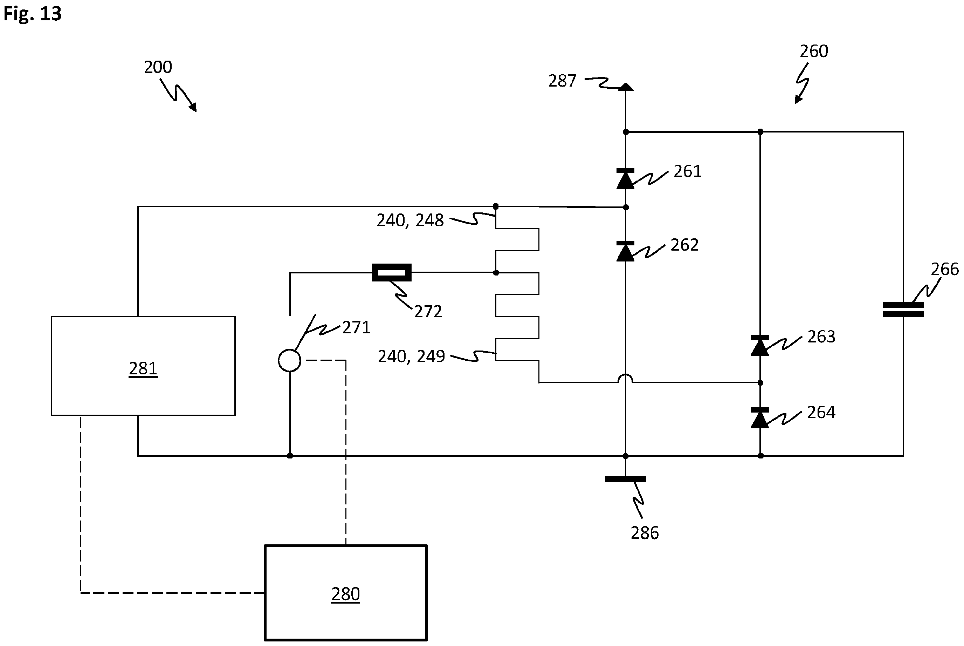

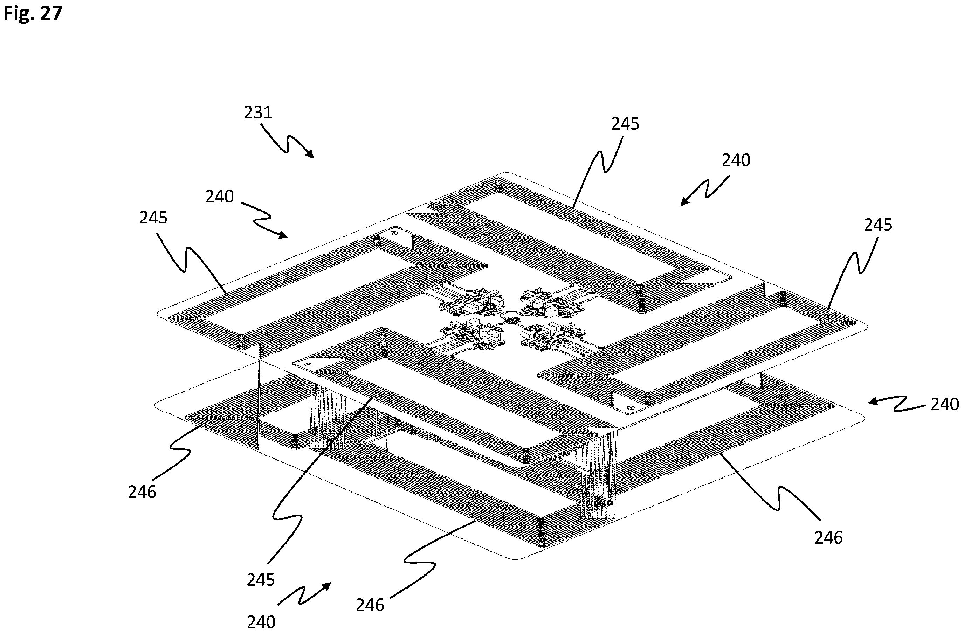

Die Magneteinheiten 210, 212, 213, 214 der Magneteinrichtung 201 und deren Läufermagnete 216 sind derart angeordnet, dass diese einen Bereich umgeben. In dem von den Läufermagneten 216 umgebenen Bereich weist der Läufer 200 gemäß der in **Figur 3** gezeigten Ausgestaltung eine erste Leiterplatte 230 mit einer Läuferspule 240 auf. Die Läuferspule 240 wird, zusammen mit den Statorleitern 125 des Stators 5, für eine induktive Energieübertragung von dem Stator 5 zu dem Läufer 200, und für eine Datenübertragung zwischen dem Stator 5 und dem Läufer 200, eingesetzt. Wie weiter unten näher erläutert wird, wird hierbei ausgenutzt, dass durch die pulsweitenmodulierte elektrische Ansteuerung von Statorleitern 125 ein Rippelstrom und dadurch ein magnetisches Wechselfeld erzeugt wird, so dass eine elektrische Wechselspannung in der Läuferspule 240 induziert werden kann. Die induzierte Wechselspannung kann im Wesentlichen proportional zu der zeitlichen Änderung des die Läuferspule 240 durchsetzenden magnetischen Flusses sein. Die induzierte Wechselspannung kann zur Energieversorgung herangezogen, und zu diesem Zweck mit Hilfe eines Gleichrichters 260 des Läufers 200 (vgl. **Figur 13**) gleichgerichtet werden._Wie ebenfalls weiter unten näher beschrieben wird, sind für den Läufer 200 auch Ausgestaltungen mit mehreren Läuferspulen 240 denkbar (vgl. **Figur 27**).

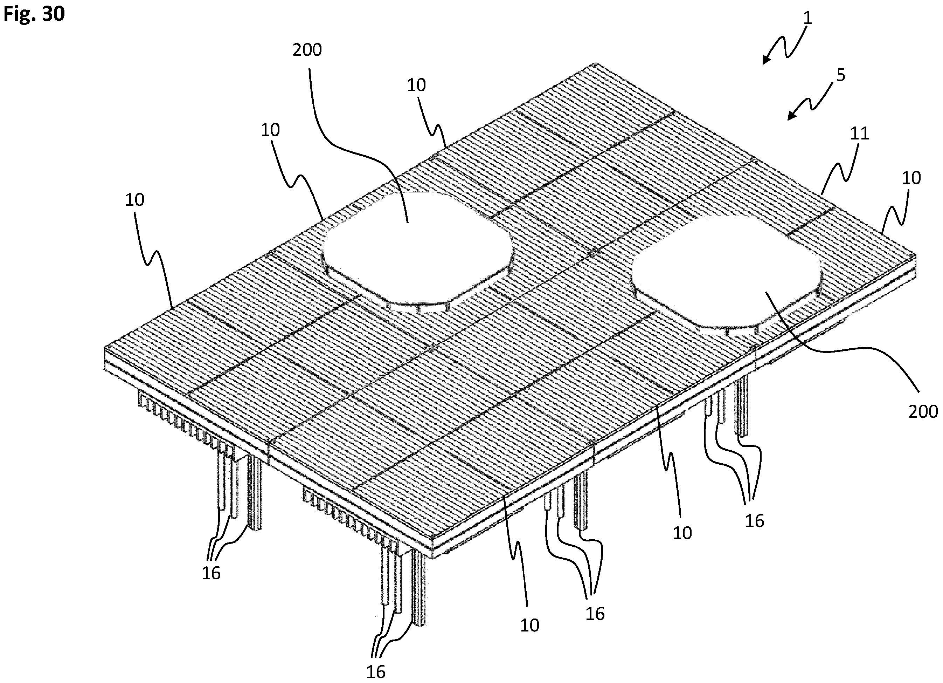

Wie in **Figur 3** gezeigt ist, weist der Läufer 200 ferner vier Abstandshalter 204 auf, welche die Magneteinrichtung 201 umgeben und laterale Außenseiten des Läufers 200 bilden. Bei einer Verwendung von mehreren baugleichen Läufern 200 in dem Planarantriebssystem 1 (vgl. **Figur 30**) können die Abstandshalter 204 dafür sorgen, dass bei sich berührenden Abstandshaltern 204 zweier nebeneinander angeordneter Läufer 200 ein Mindestabstand zwischen den Magneteinrichtungen 201 der Läufer 200 eingehalten wird. Auf diese Weise kann vermieden werden, dass die Unterseiten der Läufer 200 durch eine Anziehungskraft zwischen ihren Magneteinrichtungen 201 aus der zur Statorfläche 11 parallelen Position aufgerichtet werden und die beiden Läufer 200 mit einander zugewandten Unterseiten aneinander magnetisch haften bleiben. Die Abstandshalter 204 können ein elastisch verformbares Material aufweisen oder aus einem solchen Material ausgebildet sein.

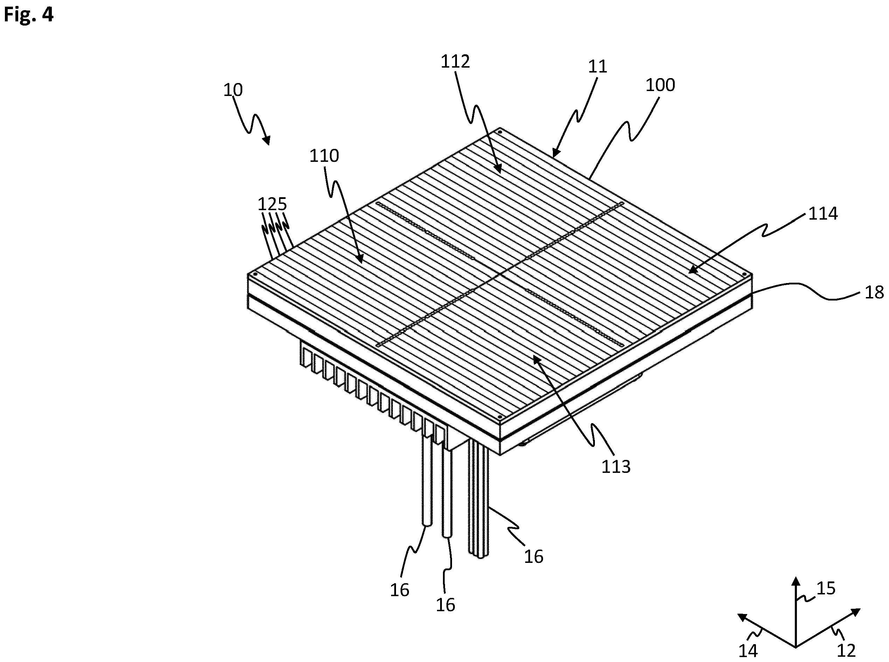

**Figur 4** zeigt eine perspektivische Darstellung des Statormoduls 10 ohne den Läufer 200. Bei einer Ausgestaltung des Stators 5 mit mehreren Statormodulen 10, wie sie beispielhaft in **Figur 2** gezeigt ist, können sämtliche Statormodule 10 baugleich oder im Wesentlichen baugleich ausgeführt sein. Daher können vorstehend als auch nachstehend beschriebene Details in Bezug auf sämtliche Statormodule 10 des Stators 5 zur Anwendung kommen.

Die Statoreinheit 100 der in **Figur 4** veranschaulichten Ausgestaltung des Statormoduls 10 umfasst einen ersten Statorsektor 110, einen zweiten Statorsektor 112, einen dritten Statorsektor 113 und einen vierten Statorsektor 114. Die Statorsektoren 110, 112, 113, 114 umfassen ihrerseits jeweils einen Teil der jeweils elektrisch voneinander isolierten Statorleiter 125. Jeder der Statorleiter 125 ist vollständig in einem der Statorsektoren 110, 112, 113, 114 angeordnet. Die Statorsektoren 110, 112, 113, 114 sind rechteckig ausgebildet. Die Statorsektoren 110, 112, 113, 114 können quadratisch ausgebildet sein, so dass eine Ausdehnung der Statorsektoren 110, 112, 113, 114 in der ersten Richtung 12 einer Ausdehnung der Statorsektoren 110, 112, 113, 114 in der zweiten Richtung 14 entspricht. Die Statorsektoren 110, 112, 113, 114 umfassen jeweils ein Viertel der Fläche, d.h. einen Quadranten, der Statoreinheit 100.

Innerhalb der Statorsektoren 110, 112, 113, 114 können die Statorleiter 125 in mehreren übereinanderliegenden Statorlagen oder Statorebenen angeordnet sein, wobei jede der Statorlagen lediglich Statorleiter 125 aufweist, welche entweder entlang der ersten Richtung 12 oder entlang der zweiten Richtung 14 ausgedehnt sind. Hinsichtlich der Orientierung und Anordnung der Statorleiter 125 und hinsichtlich der Statorlagen können die Statorsektoren 110, 112, 113, 114 identisch oder im Wesentlichen identisch aufgebaut sein.

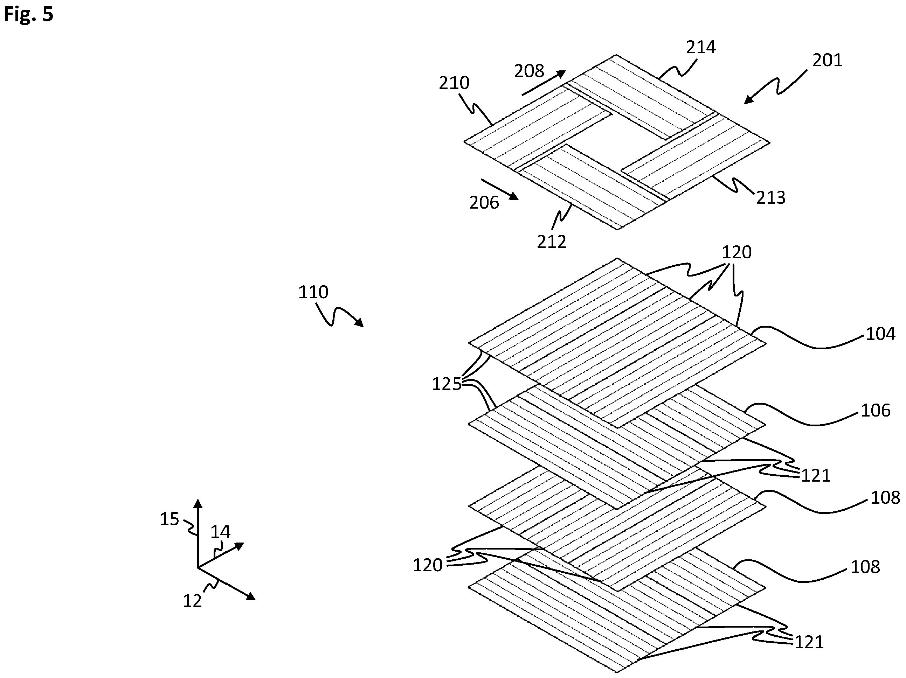

Zur weiteren Veranschaulichung zeigt **Figur 5** eine Explosionsdarstellung der Magneteinrichtung 201 des Läufers 200 und des ersten Statorsektors 110 mit vier übereinanderliegenden Statorlagen. Soweit keine Unterschiede beschrieben werden, sind der zweite, dritte und vierte Statorsektor 112, 113, 114 identisch zu dem ersten Statorsektor 110 aufgebaut. Gemäß der in **Figur 5** gezeigten Ausgestaltung weist der erste Statorsektor 110 eine erste Statorlage 104, eine unter der ersten Statorlage 104 angeordnete zweite Statorlage 106 und zwei unter der zweiten Statorlage 106 angeordnete weitere Statorlagen 108 auf. Die erste Statorlage 104 umfasst lediglich Statorleiter 125, welche entlang der ersten Richtung 12 nebeneinander angeordnet und entlang der zweiten Richtung 14 länglich ausgedehnt sind. Die zweite Statorlage 106 umfasst lediglich Statorleiter 125, welche entlang der zweiten Richtung 14 nebeneinander angeordnet und entlang der ersten Richtung 12 länglich ausgedehnt sind. In entsprechender Weise umfasst eine unter der zweiten Statorlage 106 angeordnete erste der weiteren Statorlagen 108 lediglich Statorleiter 125, welche entlang der zweiten Richtung 14 länglich ausgedehnt sind, und eine unter der ersten der weiteren Statorlagen 108 angeordnete zweite der weiteren Statorlagen 108 umfasst lediglich Statorleiter 125, welche entlang der ersten Richtung 12 länglich ausgedehnt sind.

Der erste Statorsektor 110 kann darüber hinaus unter den in **Figur 5** gezeigten Statorlagen 104, 106, 108 nicht dar-gestellte weitere Statorlagen 108 aufweisen. Insgesamt umfasst der erste Statorsektor 110 damit abwechselnd erste oder weitere Statorlagen 104, 108 mit Statorleitern 125, welche lediglich entlang der zweiten Richtung 14 ausgedehnt sind, und zweite oder weitere Statorlagen 106, 108 mit Statorleitern 125, welche lediglich entlang der ersten Richtung 12 ausgedehnt sind.

Für das Statormodul 10 kann abgesehen von der anhand von **Figur 5** beschriebenen Ausgestaltung eine andere nicht dargestellte Ausgestaltung mit einer anderen Anordnung von Statorlagen 104, 106, 108 mit entlang der ersten Richtung 12 und entlang der zweiten Richtung 14 länglich ausgedehnten Statorleitern 125 in Betracht kommen. Ein mögliches Beispiel ist eine Ausgestaltung, bei welcher zunächst wie in **Figur 5** die erste Statorlage 104 mit lediglich entlang der zweiten Richtung 14 ausgedehnten Statorleitern 125 und darunter die zweite Statorlage 106 mit lediglich entlang der ersten Richtung 12 ausgedehnten Statorleitern 125 vorliegt. Abweichend von **Figur 5** kann die unter der zweiten Statorlage 106 angeordnete erste der weiteren Statorlagen 108 lediglich entlang der ersten Richtung 12 ausgedehnte Statorleiter 125 umfassen, und kann die unter der ersten der weiteren Statorlagen 108 angeordnete zweite der weiteren Statorlagen 108 lediglich entlang der zweiten Richtung 14 ausgedehnte Statorleiter 125 umfassen. Darunter können weitere Statorlagen 108 mit einer der zuvor beschriebenen Orientierung der vier Statorlagen 104, 106, 108 entsprechenden und sich wiederholenden Orientierung der Statorleiter 125 vorhanden sein.

Wie in **Figur 5** dargestellt ist, sind die Statorleiter 125 des ersten Statorsektors 110 innerhalb der Statorlagen 104, 106, 108 jeweils zu Statorsegmenten 120, 121 zusammengefasst. Der erste Statorsektor 110 umfasst in jeder Statorlage 104, 106, 108 jeweils drei nebeneinander und aneinander anschließend angeordnete Statorsegmente 120, 121. Jedes der Statorsegmente 120, 121 umfasst jeweils sechs nebeneinander angeordnete Statorleiter 125. Der erste Statorsektor 110 umfasst in der ersten Statorlage 104 drei erste Statorsegmente 120 und in der zweiten Statorlage 106 drei zweite Statorsegmente 121. Die ersten Statorsegmente 120 umfassen jeweils sechs nebeneinanderliegende und entlang der zweiten Richtung 14 ausgedehnte Statorleiter 125. Die zweiten Statorsegmente 121 umfassen jeweils sechs nebeneinanderliegende und entlang der ersten Richtung 12 ausgedehnte Statorleiter 125. In den weiteren Statorlagen 108 umfasst der erste Statorsektor 110 jeweils abwechselnd, oder in einer anderen Reihenfolge, jeweils drei erste Statorsegmente 120 oder jeweils drei zweite Statorsegmente 121. Die ersten und zweiten Statorsegmente 120, 121 weisen, abgesehen von ihrer Orientierung, identische Abmessungen auf.

Im Betrieb des Planarantriebssystems 1 kann der Läufer 200 derart über der Statoreinheit 100 ausgerichtet sein, dass die erste Läuferrichtung 206 entlang der ersten Richtung 12 und die zweite Läuferrichtung 208 entlang der zweiten Richtung 14 orientiert ist. Eine solche Ausrichtung ist in **Figur 5** veranschaulicht. Hierbei können die erste und dritte Magneteinheit 210, 213 der Magneteinrichtung 201 des Läufers 200 mit dem durch die Statorleiter 125 der ersten Statorsegmente 120 erzeugten Magnetfeld wechselwirken, um eine Bewegung des Läufers 200 entlang der ersten Richtung 12 hervorzurufen. Die zweite und vierte Magneteinheit 212, 214 der Magneteinrichtung 201 des Läufers 200 können mit dem durch die Statorleiter 125 der zweiten Statorsegmente 121 erzeugten Magnetfeld wechselwirken, um eine Bewegung des Läufers 200 entlang der zweiten Richtung 14 zu bewirken.

Alternativ kann der Läufer 200, anders als in **Figur 5** gezeigt, derart ausgerichtet sein, dass die erste Läuferrichtung 206 entlang der zweiten Richtung 14 und die zweite Läuferrichtung 208 entlang der ersten Richtung 12 orientiert ist. Hierbei können die erste und dritte Magneteinheit 210, 213 mit dem Magnetfeld der zweiten Statorsegmente 121 für einen Antrieb des Läufers 200 in der zweiten Richtung 14, und können die zweite und vierte Magneteinheit 212, 214 mit dem Magnetfeld der ersten Statorsegmente 120 für einen Antrieb des Läufers 200 in der ersten Richtung 12 zusammenwirken.

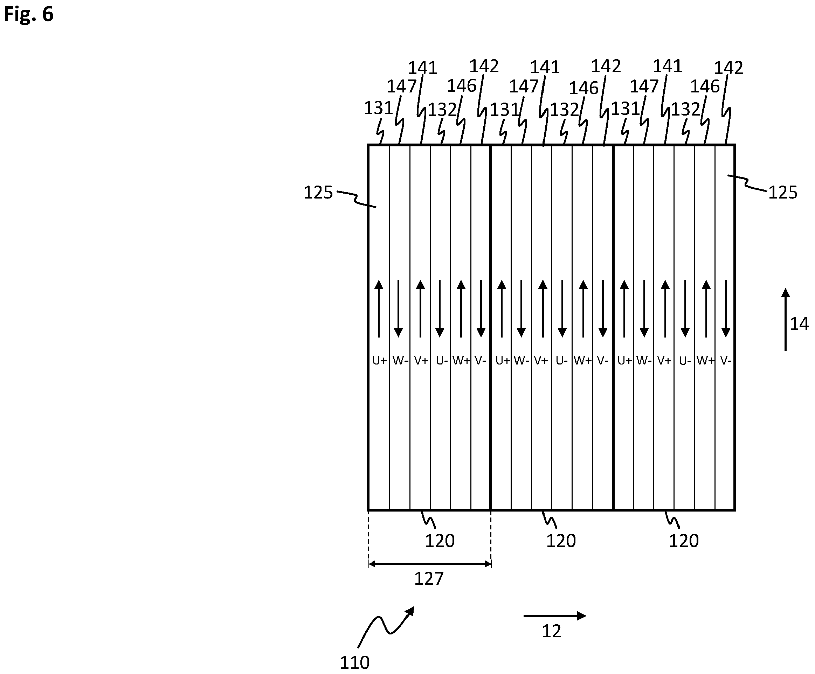

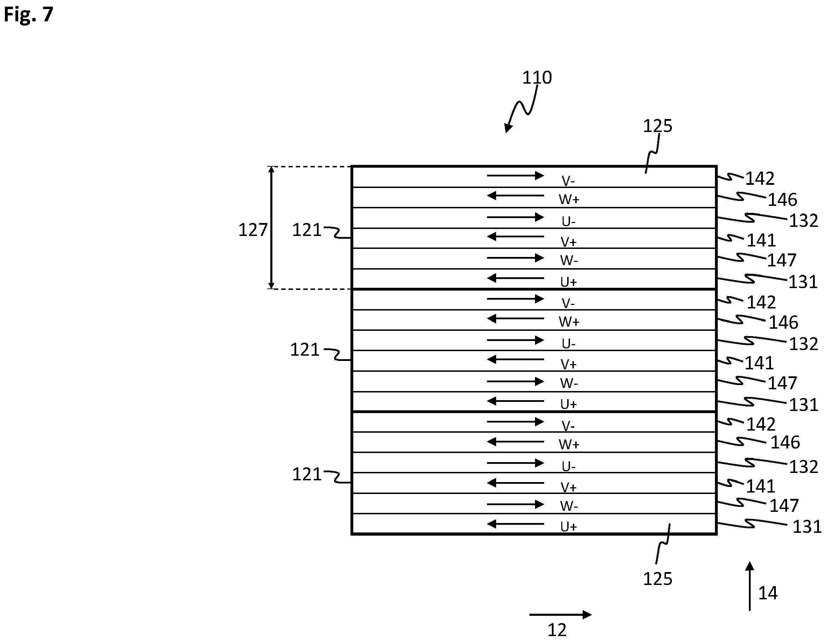

**Figur 6** zeigt eine Aufsichtsdarstellung der ersten Statorsegmente 120 des ersten Statorsektors 110. Eine entsprechende Aufsichtsdarstellung der zweiten Statorsegmente 121 des ersten Statorsektors 110 ist in **Figur 7** veranschaulicht. Soweit keine Unterschiede beschrieben werden, sind der zweite, dritte und vierte Statorsektor 112, 113, 114 identisch zu dem ersten Statorsektor 110 aufgebaut. Gemäß der in den **Figuren 6** **und** **7** gezeigten Ausgestaltung weisen die Statorsegmente 120, 121 eine Segmentbreite 127 auf, welche zum Beispiel 40mm betragen kann. Die Statorleiter 125 jedes der einzelnen Statorsegmente 120, 121 einer entsprechenden Statorlage 104, 106, 108 sind jeweils unabhängig von den Statorleitern 125 der übrigen Statorsegmente 120, 121 der betreffenden Statorlage 104, 106, 108 mit Antriebsströmen bestrombar. Daher hängen die Antriebsströme in einem der Statorsegmente 120, 121 nicht zwingend von Antriebsströmen in einem anderen der Statorsegmente 120, 121 ab. Außerdem können die Statorleiter 125 eines der Statorsegmente 120, 121 mit Antriebsströmen beaufschlagt werden, während die Statorleiter 125 eines anderen, beispielsweise eines benachbarten Statorsegments 120, 121, stromlos sind.

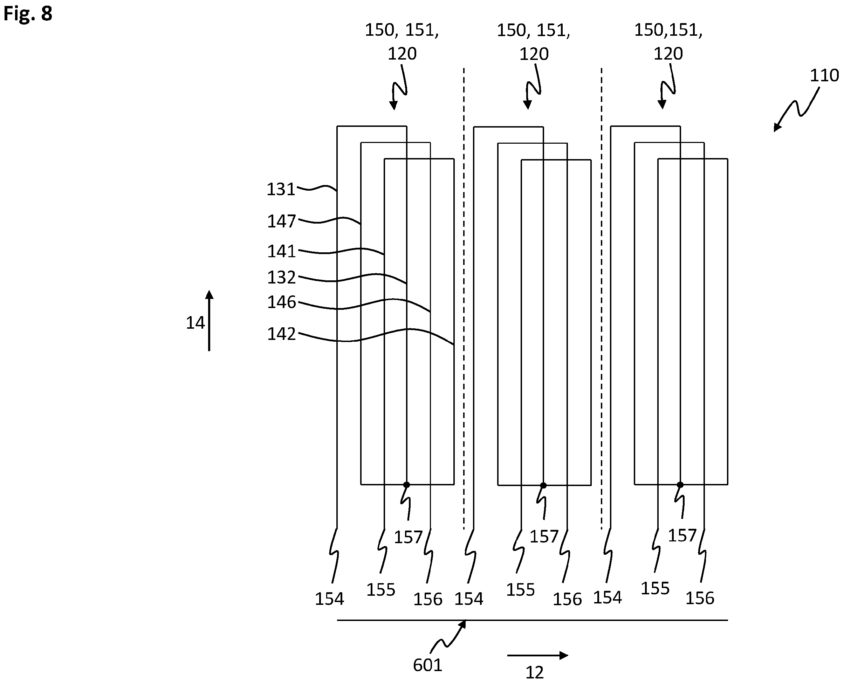

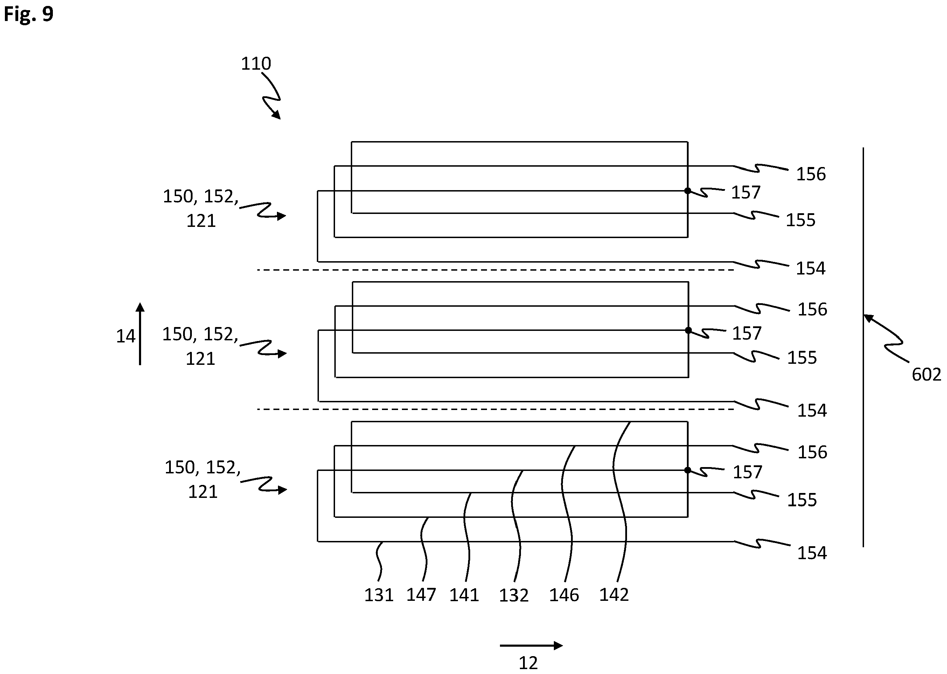

Die Statorleiter 125 der einzelnen Statorsegmente 120, 121 sind jeweils zu unabhängig voneinander bestrombaren dreiphasigen Spulensystemen, im Folgenden auch als Dreiphasensysteme 150 bezeichnet, mit einem gemeinsamen Sternpunkt 157 verschaltet (vgl. die **Figuren 8** **und** **9**). Die Dreiphasensysteme 150 können im Betrieb des Planarantriebssystems 1 mit einem dreiphasigen elektrischen Antriebsstrom beaufschlagt werden. Hierbei können eine erste Phase U, eine zweite Phase V und eine dritte Phase W der Antriebsströme untereinander jeweils einen Phasenversatz von 120° aufweisen.

In den **Figuren 6** **und** **7** ist eine mögliche Verteilung der Phasen U, V, W auf die Statorleiter 125 der ersten und zweiten Statorsegmente 120, 121 dargestellt. Die Statorsegmente 120, 121 weisen jeweils einen ersten Hinleiter 131 und einen ersten Rückleiter 132 für die ersten Phasen U der Antriebsströme, einen zweiten Hinleiter 141 und einen zweiten Rückleiter 142 für die zweiten Phasen V der Antriebsströme und einen dritten Hinleiter 146 und einen dritten Rückleiter 147 für die dritten Phasen W der Antriebsströme auf. Nachdem die einzelnen Statorsegmente 120, 121 jeweils unabhängig voneinander bestrombar sind, können die Antriebsströme, mit denen die einzelnen Statorsegmente 120, 121 beaufschlagt werden, verschieden sein. Insbesondere können jeweils die einzelnen ersten Phasen U, mit denen die verschiedenen Statorsegmente 120, 121 beaufschlagt werden können, verschieden sein. Außerdem können jeweils die einzelnen zweiten Phasen V, mit denen die verschiedenen Statorsegmente 120, 121 beaufschlagt werden können, und die einzelnen dritten Phasen W, mit denen die verschiedenen Statorsegmente 120, 121 beaufschlagt werden können, verschieden sein.

Die Phasen U, V und W können jeweils an einer ersten Seite der Statorsegmente 120, 121 auf die Hinleiter 131, 141, 146 und auf einer entgegengesetzten zweiten Seite der Statorsegmente 120, 121 auf die Rückleiter 132, 142, 147 eingespeist werden. Außerdem können die Phasen U, V und W jeweils an der zweiten Seite der Statorsegmente 120, 121 aus den Hinleitern 131, 141, 146 und auf der ersten Seite der Statorsegmente 120, 121 aus den Rückleitern 132, 142, 147 ausgekoppelt werden.

Die ersten Hin- und Rückleiter 131, 132 von auf mehreren ersten und weiteren Statorlagen 104, 108 übereinanderliegenden ersten Statorsegmenten 120 können jeweils seriell verschaltet sein. Analog können die zweiten Hin- und Rückleiter 141, 142 und die dritten Hin- und Rückleiter 146, 147 von auf mehreren ersten und weiteren Statorlagen 104, 108 übereinanderliegenden ersten Statorsegmenten 120 jeweils seriell verschaltet sein. Hierbei können die Phasen U, V, W jeweils auf einer der ersten und weiteren Statorlagen 104, 108 in die Hinleiter 131, 141, 146 eines der ersten Statorsegmente 120 eingekoppelt werden, anschließend jeweils alle der betreffenden Phase U, V, W zugeordneten Hin- und Rückleiter 131, 141, 146, 132, 142, 147 auf allen ersten und weiteren Statorlagen 104, 108 des betreffenden ersten Statorsegments 120 durchlaufen und schließlich in einem Sternpunkt 157 zusammengeführt werden (vgl. **Figur 8**). Analog zu den ersten Statorsegmenten 120 können auch jeweils die ersten Hin- und Rückleiter 131, 132, die zweiten Hin- und Rückleiter 141, 142 und die dritten Hin- und Rückleiter 146, 147 von auf mehreren zweiten und weiteren Statorlagen 106, 108 übereinanderliegenden zweiten Statorsegmenten 121 seriell verschaltet und in einem Sternpunkt 157 zusammengeführt sein (vgl. **Figur 9**).

**Figur 8** zeigt ein Ersatzschaltbild der ersten Statorsegmente 120 des ersten Statorsektors 110, welches für die vorstehend beschriebene Ausgestaltung in Betracht kommen kann. Bei dem in **Figur 8** dargestellten Ersatzschaltbild sind alle übereinanderliegenden und in Serie geschalteten Statorleiter 125 der ersten Statorsegmente 120 als ein einziger Leiter dargestellt. Der dargestellte erste Hinleiter 131 umfasst alle in verschiedenen ersten und weiteren Statorlagen 104, 108 übereinanderliegenden und in Serie geschalteten Hinleiter 131 der ersten Statorsegmente 120, und der dargestellte erste Rückleiter 132 umfasst alle in verschiedenen ersten und weiteren Statorlagen 104, 108 übereinanderliegenden und in Serie geschalteten ersten Rückleiter 132 der ersten Statorsegmente 120. Analog umfassen die dargestellten zweiten Hinleiter 141, zweiten Rückleiter 142, dritten Hinleiter 146 und dritten Rückleiter 147 jeweils alle in verschiedenen ersten und weiteren Statorlagen 104, 108 übereinanderliegenden und in Serie geschalteten zweiten Hinleiter 141, zweiten Rückleiter 142, dritten Hinleiter 146 und dritten Rückleiter 147 der ersten Statorsegmente 120.

Wie in **Figur 8** gezeigt ist, sind die Statorleiter 125 bzw. die Hin- und Rückleiter 131, 132, 141, 142, 146, 147 der einzelnen ersten Statorsegmente 120 jeweils zu Dreiphasensystemen 150 verschaltet. Mit Bezug auf die ersten Statorsegmente 120 werden diese auch als erste Dreiphasensysteme 151 bezeichnet. An einer entlang der ersten Richtung 12 orientierten ersten Seite 601 der einzelnen ersten Statorsegmente 120 sind jeweils ein erster Anschlusspunkt 154 für das Einspeisen der ersten Phasen U, ein zweiter Anschlusspunkt 155 für das Einspeisen der zweiten Phasen V und ein dritter Anschlusspunkt 156 für das Einspeisen der dritten Phasen W angeordnet. Der erste Anschlusspunkt 154 kann mit einem in einer der ersten oder weiteren Statorlagen 104, 108 angeordneten ersten Hinleiter 131 verbunden sein. Der zweite Anschlusspunkt 155 kann mit einem in einer der ersten oder weiteren Statorlagen 104, 108 angeordneten zweiten Hinleiter 141 verbunden sein. Der dritte Anschlusspunkt 156 kann mit einem in einer der ersten oder weiteren Statorlagen 104, 108 angeordneten dritten Hinleiter 146 verbunden sein. Außerdem ist an der ersten Seite 601 der einzelnen ersten Statorsegmente 120 jeweils ein Sternpunkt 157 angeordnet. In den Sternpunkten 157 können jeweils ein erster Rückleiter 132 einer der ersten oder weiteren Statorlagen 104, 108, ein zweiter Rückleiter 142 einer der ersten oder weiteren Statorlagen 104, 108 und ein dritter Rückleiter 147 einer der ersten oder weiteren Statorlagen 104, 108 miteinander verbunden sein.

**Figur 9** zeigt ein Ersatzschaltbild der zweiten Statorsegmente 121 des ersten Statorsektors 110, welches für die oben beschriebene Ausgestaltung in Betracht kommen kann. Bei dem in **Figur 9** dargestellten Ersatzschaltbild sind, wie bei dem in **Figur 8** dargestellten Ersatzschaltbild der ersten Statorsegmente 120, alle übereinanderliegenden und in Serie geschalteten Statorleiter 125 der zweiten Statorsegmente 121 als ein einziger Leiter dargestellt. Die Statorleiter 125 bzw. die Hin- und Rückleiter 131, 132, 141, 142, 146, 147 der zweiten Statorsegmente 121 sind jeweils zu Dreiphasensystemen 150 verschaltet. Mit Bezug auf die zweiten Statorsegmente 121 werden diese auch als zweite Dreiphasensysteme 152 bezeichnet. An einer entlang der zweiten Richtung 14 orientierten zweiten Seite 602 der zweiten Statorsegmente 121 sind jeweils ein erster Anschlusspunkt 154 für das Einspeisen der ersten Phasen U, ein zweiter Anschlusspunkt 155 für das Einspeisen der zweiten Phasen V und ein dritter Anschlusspunkt 156 für das Einspeisen der dritten Phasen W angeordnet. Der erste Anschlusspunkt 154 kann mit einem in einer der zweiten oder weiteren Statorlagen 106, 108 angeordneten ersten Hinleiter 131 verbunden sein. Der zweite Anschlusspunkt 155 kann mit einem in einer der zweiten oder weiteren Statorlagen 106, 108 angeordneten zweiten Hinleiter 141 verbunden sein. Der dritte Anschlusspunkt 156 kann mit einem in einer der zweiten oder weiteren Statorlagen 106, 108 angeordneten dritten Hinleiter 146 verbunden sein. Außerdem ist an der zweiten Seite 602 der einzelnen zweiten Statorsegmente 121 jeweils ein Sternpunkt 157 angeordnet. In den Sternpunkten 157 können jeweils ein erster Rückleiter 132 einer der zweiten oder weiteren Statorlagen 106, 108, ein zweiter Rückleiter 142 einer der zweiten oder weiteren Statorlagen 106, 108 und ein dritter Rückleiter 147 einer der zweiten oder weiteren Statorlagen 106, 108 miteinander verbunden sein.

Anhand der in den **Figuren 8** **und** **9** gezeigten Ausgestaltung des ersten Statorsektors 110 wird deutlich, dass die die ersten Statorsegmente 120 repräsentierenden ersten Dreiphasensysteme 151 und die die zweiten Statorsegmente 121 repräsentierenden zweiten Dreiphasensysteme 152 des ersten Statorsektors 110 um 90° gegeneinander verdreht angeordnet sind. Der erste Statorsektor 110 umfasst drei erste Dreiphasensysteme 151 und drei zweite Dreiphasensysteme 152. Das durch die ersten Dreiphasensysteme 151 erzeugte Magnetfeld kann für eine Bewegung des Läufers 200 entlang der ersten Richtung 12 sorgen. Das durch die zweiten Dreiphasensysteme 152 erzeugte Magnetfeld kann eine Bewegung des Läufers 200 entlang der zweiten Richtung 14 bewirken. Diese Ausgestaltung gilt in entsprechender Weise für den zweiten, dritten und vierten Statorsektor 112, 113, 114.

Die Statoreinheit 100 des in **Figur 4** veranschaulichten Statormoduls 10 umfasst infolgedessen zwölf erste Dreiphasensysteme 151 und zwölf zweite Dreiphasensysteme 152, und somit insgesamt vierundzwanzig Dreiphasensysteme 150. Die Statoreinheit 100 kann in Form einer nicht dargestellten mehrlagigen Leiterplatte verwirklicht sein, wobei die Statorlagen 104, 106, 108 jeweils in unterschiedlichen Lagen der Leiterplatte angeordnet sind. Um eine Verschaltung der Hin- und Rückleiter 131, 141, 146, 132, 142, 147 gemäß der in den **Figuren 8** **und** **9** gezeigten Ersatzschaltbilder zu erreichen, kann die Statoreinheit 100 nicht dargestellte elektrische Verbindungsstrukturen wie Horizontalverbindungsstrukturen und Vertikalverbindungsstrukturen aufweisen.

Durch eine geeignete Bestromung von Dreiphasensystemen 150 des bzw. wenigstens eines Statormoduls 10 des Stators 5 kann der Läufer 200 wie oben angegeben angetrieben werden. Hierbei kann ein Teil der Dreiphasensysteme 150 zeitgleich bestromt werden. Dies betrifft Dreiphasensysteme 150, welche sich im Bereich des Läufers 200 befinden. In diesem Zusammenhang kann das bzw. jedes Statormodul 10 des Stators 5 nicht dargestellte Positionssensoren wie zum Beispiel Hallsensoren aufweisen, mittels derer die aktuelle Position des Läufers 200 erfasst werden kann. Bei einer Ausgestaltung des Stators 5 mit mehreren Statormodulen 10, wie sie zum Beispiel in **Figur 2** gezeigt ist, kann in entsprechender Weise ein Teil der Dreiphasensysteme 150 eines oder mehrerer benachbarter Statormodule 10 zeitgleich elektrisch angesteuert werden, um den Läufer 200 anzutreiben.

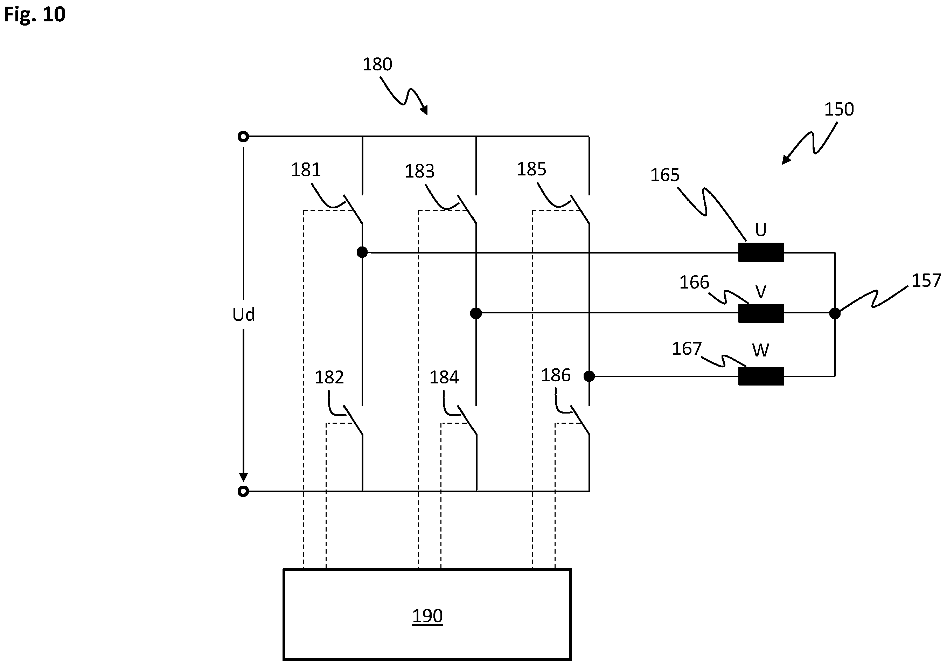

Die Bestromung von Dreiphasensystemen 150 des bzw. jedes Statormoduls 10 des Stators 5 erfolgt, wie oben angedeutet wurde, durch eine Stromregelung auf Basis der Pulsweitenmodulation. Wie in **Figur 10** anhand eines einzelnen Dreiphasensystems 150 eines Statormoduls 10 dargestellt ist, kann zu diesem Zweck u.a. eine dem Dreiphasensystem 150 zugeordnete und mit diesem verbundene Endstufeneinrichtung 180 des Statormoduls 10 zum Einsatz kommen. Das Dreiphasensystem 150 umfasst vorliegend eine erste Spule 165, eine zweite Spule 166 und eine dritte Spule 167, welche in einem gemeinsamen Sternpunkt 157 zusammengeschaltet sind. Mit Bezug auf die in den **Figuren 8** **und** **9** gezeigten Ersatzschaltbilder können die erste Spule 165 erste Hin- und Rückleiter 131, 132, die zweite Spule 166 zweite Hin- und Rückleiter 141, 142, und die dritte Spule 167 dritte Hin- und Rückleiter 146, 147 umfassen. Im Betrieb kann die erste Spule 165 zur Beaufschlagung der ersten Phase U eines dreiphasigen Antriebsstroms dienen, und können die zweite Spule 166 zur Beaufschlagung der zweiten Phase V und die dritte Spule 167 zur Beaufschlagung der dritten Phase W des Antriebsstroms verwendet werden.

Gemäß der in **Figur 10** gezeigten Ausgestaltung ist die Endstufeneinrichtung 180 an eine elektrische Zwischenkreisspannung Ud eines Zwischenkreises 171 (vgl. **Figur 11**) des betreffenden Statormoduls 10 angeschlossen. Die Endstufeneinrichtung 180 umfasst vorliegend einen ersten Schalter 181, einen zweiten Schalter 182, einen dritten Schalter 183, einen vierten Schalter 184, einen fünften Schalter 185 und einen sechsten Schalter 186. Der erste und zweite Schalter 181, 182 sind mit der ersten Spule 165 verbunden und können eine der ersten Spule 165 zugeordnete erste Endstufe bilden. Der dritte und vierte Schalter 183, 184 sind mit der zweiten Spule 166 verbunden und können eine der zweiten Spule 166 zugeordnete zweite Endstufe bilden. Der fünfte und sechste Schalter 185, 186 sind mit der dritten Spule 167 verbunden und können eine der dritten Spule 167 zugeordnete dritte Endstufe bilden.

Die in **Figur 10** dargestellte Endstufeneinrichtung 180 mit den Schaltern 181, 182, 183, 184, 185, 186 kann in Form einer Treiberschaltung mit drei Halbbrücken ausgebildet sein. Bei dieser Ausgestaltung können die Schalter 181, 182, 183, 184, 185, 186 in Form von Transistoren verwirklicht sein.

Im Betrieb ist, abweichend von der Darstellung in **Figur 10**, jeweils einer der beiden ersten und zweiten Schalter 181, 182 geschlossen, und der andere der beiden ersten und zweiten Schalter 181, 182 jeweils geöffnet. In entsprechender Weise sind jeweils einer der beiden dritten und vierten Schalter 183, 184 sowie jeweils einer der beiden fünften und sechsten Schalter 185, 186 geöffnet, und der andere der beiden dritten und vierten Schalter 183, 184 sowie der andere der beiden fünften und sechsten Schalter 185, 186 jeweils geschlossen. In Abhängigkeit der Schaltzustände der Schalter 181, 182, 183, 184, 185, 186 der Endstufeneinrichtung 180 können an die Spulen 165, 166, 167 des Dreiphasensystems 150 elektrische Spannungen bzw. Spannungspulse mit einem Spannungsbetrag in Höhe der Versorgungsspannung Ud oder ein Bezugs- bzw. Massepotential angelegt werden.

In **Figur 10** ist angedeutet, dass die Endstufeneinrichtung 180 mit einer Modulsteuervorrichtung 190 des zugehörigen Statormoduls 10 verbunden ist. Im Betrieb kann über die Modulsteuervorrichtung 190 eine pulsweitenmodulierte periodische Ansteuerung der Endstufeneinrichtung 180 bzw. von deren Schaltern 181, 182, 183, 184, 185, 186 erfolgen. Auf diese Weise können die Spulen 165, 166, 167 des Dreiphasensystems 150 mit pulsweitenmodulierten periodischen Spannungspulsen in Höhe der Zwischenkreisspannung Ud beaufschlagt und dadurch entsprechend bestromt werden.

Zur weiteren Veranschaulichung zeigt **Figur 11** ein Blockschaltbild eines Regelkreises zur Stromregelung eines Dreiphasensystems 150 eines Statormoduls 10 auf Basis der Pulsweitenmodulation, wie er bei dem Planarantriebssystem 1 zur Anwendung kommen kann. Der in **Figur 11** dargestellte Regelkreis umfasst eine externe Hauptsteuervorrichtung 500 des Planarantriebssystems 1, eine Modulsteuervorrichtung 190, eine Endstufeneinrichtung 180, ein Dreiphasensystem 150 und eine Strommesseinrichtung 172. Die Modulsteuervorrichtung 190, welche eine Stromregeleinrichtung 170 umfasst, kann in Form eines FPGAs verwirklicht sein. Die Endstufeneinrichtung 180 ist mit einem Zwischenkreis 171 verbunden, so dass die Endstufeneinrichtung 180, wie vorstehend anhand von **Figur 10** beschrieben wurde, mit einer Zwischenkreisspannung versorgt werden kann. Der Zwischenkreis 171 kann auch als Gleichspannungszwischenkreis bzw. Zwischenkreisspeicher bezeichnet werden. Die Modulsteuervorrichtung 190, die Endstufeneinrichtung 180, der Zwischenkreis 171, das Dreiphasensystem 150 und die Strommesseinrichtung 172 sind Bestandteile des bzw. eines Statormoduls 10 des Stators 5 des Planarantriebssystems 1. Mit Bezug auf das in **Figur 4** gezeigte Statormodul 10 können die Modulsteuervorrichtung 190, die Endstufeneinrichtung 180, der Zwischenkreis 171 und die Strommesseinrichtung 172 in dem Modulgehäuse 18 integriert sein.

Die elektrische Strommesseinrichtung 172, welche einen Analog-Digital-Umsetzer (engl. Analog-to-Digital Converter, ADC) umfassen kann, und welche in geeigneter Weise mit dem Dreiphasensystem 150 verbunden ist, ist zum Erfassen von Iststromwerten des Dreiphasensystems 150 ausgebildet. Dies kann durch periodisches Abtasten zu vorgegebenen Zeitpunkten erfolgen. Bei der Strommessung können lediglich die Ströme von zwei der drei Spulen des Dreiphasensystems 150 abgetastet werden. Denn anhand der in den zwei abgetasteten Spulen fließenden Ströme kann auf den in der nicht abgetasteten Spule fließenden Strom geschlossen werden. Dies liegt an der Sternschaltung der Spulen des Dreiphasensystems 150.

Wie in dem Regelkreis von **Figur 11** dargestellt ist, werden im Betrieb des Planarantriebssystems 1 mit Hilfe der Hauptsteuervorrichtung 500 Sollstromwerte 300 erzeugt und an die Stromregeleinrichtung 170 übermittelt. Des Weiteren werden von der Strommesseinrichtung 172 durch das Abtasten an dem Dreiphasensystem 150 gewonnene Iststromwerte 304 an die Stromregeleinrichtung 170 weitergeleitet. Auf der Grundlage der Sollstromwerte 300 und Iststromwerte 304 werden von der Stromregeleinrichtung 170 pulsweitenmodulierte Steuersignale 301 erzeugt, welche an die Endstufen bzw. Schalter der Endstufeneinrichtung 180 angelegt werden. Basierend auf den Steuersignalen 301 können mit Hilfe der Endstufeneinrichtung 180 pulsweitenmodulierte Spannungspulse an das Dreiphasensystem 150 bzw. dessen Spulen angelegt werden, wodurch in diesen entsprechende Antriebsströme fließen können.

Wie oben angedeutet wurde, umfasst das bzw. jedes Statormodul 10 des Stators 5 vierundzwanzig Dreiphasensysteme 150. Das bzw. jedes Statormodul 10 ist in diesem Zusammenhang ausgebildet, für jedes der zugehörigen Dreiphasensysteme 150 eine eigene, und insofern von anderen Dreiphasensystemen 150 unabhängige Stromregelung entsprechend des in **Figur 11** gezeigten Regelkreises durchzuführen. Daher weist das bzw. jedes Statormodul 10 für jedes zugehörige Dreiphasensystem 150 eine Stromregeleinrichtung 170 und eine Endstufeneinrichtung 180 auf. Pro Statormodul 10 sind infolgedessen vierundzwanzig Stromregeleinrichtungen 170 vorhanden, welche in der zugehörigen Modulsteuervorrichtung 190 des jeweiligen Statormoduls 10 integriert sind, sowie vierundzwanzig Endstufeneinrichtungen 180. Die Endstufeneinrichtungen 180 werden jeweils aus dem Zwischenkreis 171 des betreffenden Statormoduls 10 mit elektrischer Energie versorgt.

Mit Bezug auf die Strommessung besteht ebenfalls die Möglichkeit, für jedes Dreiphasensystem 150 eine Strommesseinrichtung 172 vorzusehen. Alternativ ist folgende Ausgestaltung denkbar, um den Hardwareaufwand gering zu halten. Hierbei weist das bzw. jedes Statormodul 10 des Stators 5 mehrere Strommesseinrichtungen 172 auf, welche jeweils mit einer Gruppe aus drei Dreiphasensystemen 150 verbunden, und dadurch jeweils einer solchen Gruppe aus drei Dreiphasensystemen 150 zur Stromabtastung zugeordnet sind (nicht dargestellt). Im Hinblick auf die oben genannte Implementierung mit vierundzwanzig Dreiphasensystemen 150 weist das bzw. jedes Statormodul 10 in entsprechender Weise acht Strommesseinrichtungen 172 auf. Wie oben anhand der **Figuren 8** **und** **9** erläutert wurde, umfassen die vierundzwanzig Dreiphasensysteme 150 eines Statormoduls 10 zwölf erste Dreiphasensysteme 151 und zwölf zweite Dreiphasensysteme 152, welche eine Bewegung des Läufers 200 entlang der ersten oder zweiten Richtung 12, 14 bewirken können. Das bzw. jedes Statormodul 10 kann in diesem Zusammenhang derart ausgebildet sein, dass einer Strommesseinrichtung 172 drei erste oder drei zweite Dreiphasensysteme 151, 152 zur Strommessung zugeordnet sind.

Die in **Figur 11** gezeigte Hauptsteuervorrichtung 500 des Planarantriebssystems 1 ist in geeigneter Weise mit einem Statormodul 10 des Stators 5, und bei einer Ausgestaltung des Stators 5 mit mehreren Statormodulen 10, wie sie zum Beispiel in **Figur 2** gezeigt ist, mit den mehreren Statormodulen 10 verbunden, um eine Datenkommunikation zwischen der Hauptsteuervorrichtung 500 und dem bzw. den Statormodulen 10 zu ermöglichen. Wie oben beschrieben wurde, können zu diesem Zweck entsprechende Datenleitungen sowie, im Falle mehrerer Statormodule 10, miteinander verbundene Statormodule 10 zur Anwendung kommen. Im Betrieb kann die Hauptsteuervorrichtung 500 Sollstromwerte 300 an eine oder mehrere Stromregeleinrichtungen 170 eines oder mehrerer Statormodule 10 übermitteln, wodurch die zugehörigen Dreiphasensysteme 150 pulsweitenmoduliert bestromt werden können. Mit Bezug auf das Erzeugen und Übermitteln der Sollstromwerte 300 kann die Hauptsteuervorrichtung 500 eine aktuelle Position des Läufers 200 berücksichtigen. Entsprechende Positionsdaten können der Hauptsteuervorrichtung 500 von einem bzw. mehreren Statormodulen 10 übermittelt werden. Derartige Positionsdaten können, wie oben angedeutet wurde, mit Hilfe von Positionssensoren des bzw. der mehreren Statormodule 10 gewonnen werden.

Die Hauptsteuervorrichtung 500 kann ferner zum Festlegen eines Systemtakts des Planarantriebssystems 1 ausgebildet sein, nach welchem sich der zeitliche Ablauf des Betriebs des Planarantriebssystems 1 richten kann. Im Rahmen der Datenkommunikation zwischen der Hauptsteuervorrichtung 500 und dem bzw. mehreren Statormodulen 10 des Stators 5 kann auch eine Übermittlung des Systemtakts erfolgen. Basierend auf dem Systemtakt können zeitliche Parameter der Stromregelung wie eine Taktfrequenz der Pulsweitenmodulation vorgegeben sein. Die PWM-Taktfrequenz kann im kHz-Bereich liegen und zum Beispiel 64kHz betragen.

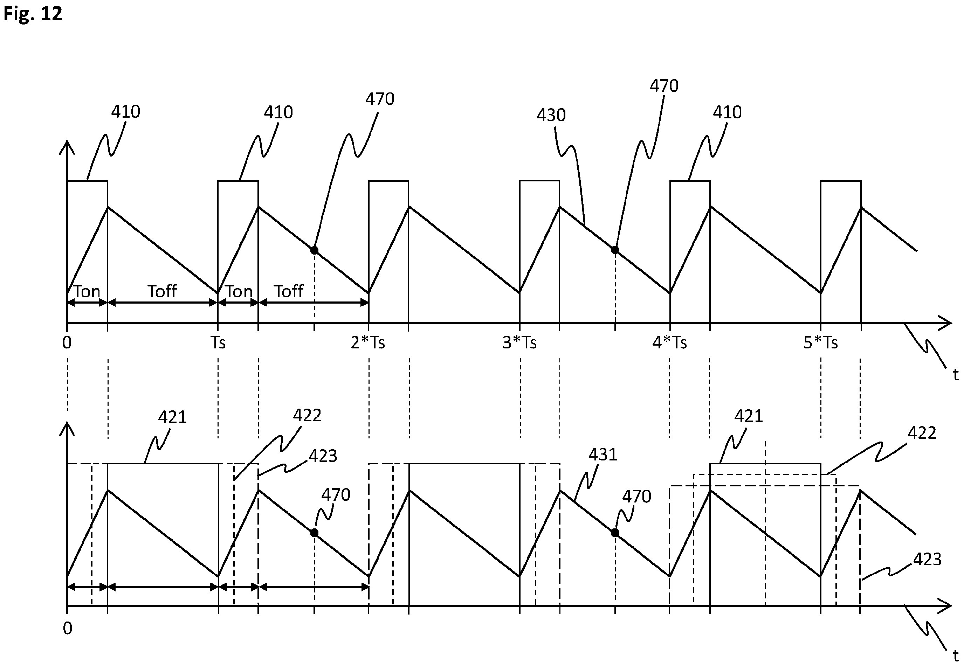

**Figur 12** zeigt mögliche elektrische Spannungs- und Stromverläufe in Abhängigkeit der Zeit t, wie sie bei einer pulsweitenmodulierten elektrischen Ansteuerung von Spulensystemen auftreten können. Das obere Diagramm von **Figur 12** zeigt, zur vereinfachenden Veranschaulichung, Gegebenheiten bei einer Ansteuerung eines nicht dargestellten einphasigen Spulensystems mit lediglich eine Spule. Das Spulensystem wird mit einer durch die PWM-Taktfrequenz vorgegebenen elektrischen Ansteuerspannung, und damit mit periodischen ersten Spannungspulsen 410 beaufschlagt. Die Spannung weist einen nahezu rechteckförmigen Verlauf mit zwei Spannungsniveaus auf. Ergänzend sind eine Periodendauer Ts der Pulsweitenmodulation, sowie eine Pulsdauer Ton und eine Auszeitdauer Toff dargestellt. Während der Pulsdauer Ton, in welcher das Spulensystem mit der Spannung beaufschlagt wird, liegt jeweils ein erster Spannungspuls 410 vor. Während der Auszeitdauer Toff erfolgt keine Spannungsbeaufschlagung des Spulensystems. Aufgrund einer glättenden Wirkung des Spulensystems folgt der in dem Spulensystem fließende elektrische Strom den ersten Spannungspulsen 410 derart, dass ein dreieckförmiger erster Stromverlauf 430 vorliegt. Sofern die ersten Spannungspulse 410 an dem Spulensystem anliegen, erfolgt eine Vergrößerung des Stroms bzw. Strombetrags, und ansonsten eine Verkleinerung. Auf diese Weise pendelt der Strom mit der Taktfrequenz der Pulsweitenmodulation und damit der Periodendauer Ts um einen Mittelwert hin und her. Der Mittelwert des Stroms ist abhängig von dem Tastgrad, also dem Verhältnis aus der Pulsdauer Ton zu der Periodendauer Ts. Der in dem Spulensystem fließende Strom weist somit einen Wechselstromanteil, den sogenannten Rippelstrom, auf, was mit einem Auftreten eines sich zeitlich ändernden Magnetfelds verbunden ist.

Das untere Diagramm von **Figur 12** zeigt entsprechende Gegebenheiten bei einer elektrischen Ansteuerung eines dreiphasigen Spulensystems mit drei Spulen. Diese Art der Ansteuerung, welche auf einer mittenzentrierten Pulsweitenmodulation (engl. Center Aligned PWM) basiert, kann bei den Dreiphasensystemen 150 des Planarantriebssystem 1 eingesetzt und mit Hilfe des oben anhand von **Figur 11** beschriebenen Regelkreises verwirklicht werden. Das dreiphasige Spulensystem wird mit drei durch die PWM-Taktfrequenz vorgegebenen Ansteuerspannungen, und damit mit drei periodischen Spannungspulsen 421, 422, 423 mit unterschiedlichen Pulsbreiten bzw. Pulsdauern beaufschlagt. Diese werden im Folgenden als zweite, dritte und vierte Spannungspulse 421, 422, 423 bezeichnet. Die drei Spannungen weisen nahezu rechteckförmige Verläufe mit zwei Spannungsniveaus auf. Die zweiten Spannungspulse 421 können sich auf die erste Phase U, die dritten Spannungspulse 422 auf die zweite Phase V und die vierten Spannungspulse 423 auf die dritte Phase W eines dreiphasigen Antriebsstroms beziehen. In entsprechender Weise ist es zum Beispiel mit Bezug auf das in **Figur 10** gezeigte Dreiphasensystem 150 möglich, dass die erste Spule 165 mit den zweiten Spannungspulsen 421, die zweite Spule 166 mit den dritten Spannungspulsen 422 und die dritte Spule 167 mit den vierten Spannungspulsen 423 beaufschlagt wird.

Die elektrische Ansteuerung erfolgt derart, dass jeweils ein zweiter, dritter und vierter Spannungspuls 421, 422, 423 mittig zueinander zentriert sind, und damit die Mitten der jeweiligen Spannungspulse 421, 422, 423 übereinanderliegen. Um diesen Aspekt zu verdeutlichen, sind auf der rechten Seite des unteren Diagramms von **Figur 12** ein zweiter, dritter und vierter Spannungspuls 421, 422, 423 mit unterschiedlichen Pulshöhen dargestellt. Die Darstellung mit den unterschiedlichen Pulshöhen dient lediglich dazu, die mittenzentrierte Anordnung der zweiten, dritten und vierten Spannungspulse 421, 422, 423 hervorzuheben. Denn bei der Ansteuerung werden an die Spulen des dreiphasigen Spulensystems zweite, dritte und vierte Spannungspulse 421, 422, 423 mit übereinstimmender Spannungshöhe angelegt, wie es auch bei den übrigen in **Figur 12** gezeigten zweiten, dritten und vierten Spannungspulsen 421, 422, 423 veranschaulicht ist.

In dem unteren Diagramm von **Figur 12** ist ein elektrischer zweiter Stromverlauf 431 dargestellt, wie er bei einer der drei Spulen des mit den zweiten, dritten und vierten Spannungspulsen 421, 422, 423 beaufschlagten dreiphasigen Spulensystems auftreten kann. Hierbei kann es sich zum Beispiel um die erste Phase U des dreiphasigen Antriebsstroms und, mit Bezug auf das in **Figur 10** gezeigte Dreiphasensystem 150, um die erste Spule 165 handeln. Auch der zweite Stromverlauf 431 besitzt, aufgrund einer glättenden Wirkung des Spulensystems, eine dreieckförmige Gestalt, und pendelt mit der PWM-Taktfrequenz um einen Mittelwert hin und her. Eine Vergrößerung des Strombetrags erfolgt, wenn sich alle drei Ansteuerspannungen nicht auf dem gleichen (oberen oder unteren) Spannungsniveau befinden. Sofern die drei Spannungen hingegen das gleiche Spannungsniveau besitzen, erfolgt eine Verkleinerung des Strombetrags. Der dabei vorhandene Rippelstrom führt auch hier zu einem Auftreten eines magnetischen Wechselfelds.

Bei den zwei anderen Spulen des dreiphasigen Spulensystems liegen zu dem zweiten Stromverlauf 431 korrespondierende, nicht dargestellte dreieckförmige und mit dem Rippelstrom behaftete elektrische Stromverläufe vor. Auch hierbei erfolgt jeweils eine Vergrößerung des Strombetrags, wenn sich sämtliche drei Ansteuerspannungen nicht auf dem gleichen Spannungsniveau befinden, und ansonsten eine Verkleinerung des Strombetrags. Wenigstens einer der nicht gezeigten Stromverläufe kann ein zu dem zweiten Stromverlauf 431 inverses Aussehen besitzen, d.h. dass die Stromänderungen mit gegenüber dem zweiten Stromverlauf 431 inversem Vorzeichen stattfinden.

Bei einem bestromten Dreiphasensystem 150 des Planarantriebssystems 1 sind die in den zugehörigen Spulen fließenden Antriebsströme in gleicher Weise mit einem Rippelstrom überlagert. Das Auftreten des Rippelstroms ist mit einem sich zeitlich ändernden Magnetfeld verbunden. Dieser Effekt wird bei dem Planarantriebssystem 1 dazu genutzt, um eine elektrische Wechselspannung in der wenigstens einen Läuferspule 240 des Läufers 200 zu induzieren und dadurch u.a. elektrische Energie von dem Stator 5 auf den Läufer 200 zu übertragen.

In **Figur 12** ist dargestellt, dass der erste Stromverlauf 430 in dem einphasigen Spulensystem mit dem zweiten Stromverlauf 431 in dem dreiphasigen Spulensystem übereinstimmen kann. Daher kann das obere Diagramm von **Figur 12** als Äquivalenzdarstellung für das dreiphasige Spulensystem dienen, und kann sich der erste Stromverlauf 430 auch auf eine der drei Spulen des dreiphasigen Spulensystems beziehen. Bei dieser Betrachtungsweise können die ersten Spannungspulse 410 als effektive und eine Vergrößerung des Strombetrags bewirkende Ersatzpulse für die eigentlich an dem dreiphasigen Spulensystem anliegenden zweiten, dritten und vierten Spannungspulse 421, 422, 423 angesehen werden. Dieser Zusammenhang ist in **Figur 12** anhand der gestrichelten Linien zwischen dem oberen und unteren Diagramm angedeutet.

In **Figur 12** sind darüber hinaus Strommesszeitpunkte 470 dargestellt, an welchen die Spulensysteme zum Gewinnen von elektrischen Iststromwerten abgetastet werden können. Das periodische Abtasten erfolgt zeitlich abgestimmt auf die pulsweitenmodulierte periodische Bestromung, und zwar derart, dass sich die Strommesszeitpunkte 470 mittig zwischen aufeinanderfolgenden ersten Spannungspulsen 410 bzw. zweiten, dritten und vierten Spannungspulsen 421, 422, 423 befinden. Hierdurch kann erreicht werden, dass die durch das Abtasten gewonnenen Iststromwerte dem Mittelwert des jeweiligen Stroms entsprechen (sogenanntes Regular-Sampling-Verfahren). Diese Vorgehensweise ermöglicht eine genaue Stromregelung.

In dem unteren Diagramm von **Figur 12** sind die Strommesszeitpunkte 470 jeweils zwischen den zweiten, dritten und vierten Spannungspulsen 421, 422, 423 angeordnet. In dem oberen Diagramm von **Figur 12** sind die Strommesszeitpunkte 470 korrespondierend zu dem unteren Diagramm dargestellt. Auf diese Weise sind die Strommesszeitpunkte 470 nicht zwischen sämtlichen ersten Spannungspulsen 410 vorhanden. Es ist jedoch auch möglich, die Strommesszeitpunkte 470 zwischen sämtlichen ersten Spannungspulsen 410 vorzusehen und damit pro PWM-Taktperiode jeweils eine Messung durchzuführen.

Die bei dem Planarantriebssystem 1 gemäß des in **Figur 11** gezeigten Regelkreises durchgeführte Stromregelung kann derart erfolgen, dass zu bestromende Dreiphasensysteme 150 entsprechend **Figur 12** pulsweitenmoduliert angesteuert und dadurch bestromt werden. Hierbei werden durch entsprechende Stromregeleinrichtungen 170 unter Verwendung der von der Hauptsteuervorrichtung 500 vorgegebenen Sollstromwerte 300 und der von einer oder mehreren Strommesseinrichtungen 172 durch Abtasten bereitgestellten Iststromwerte 304 pulsweitenmodulierte Steuersignale 301 erzeugt, welche an die jeweiligen Endstufeneinrichtungen 180 übermittelt werden (vgl. **Figur 11**). Auf diese Weise werden die zu bestromenden Dreiphasensysteme 150 mit Spannungspulsen mit vorgegebenen Tastverhältnissen und Pulsdauern beaufschlagt, so dass diese bestromt werden. Die Mittelwerte der in den Dreiphasensystemen 150 fließenden elektrischen Ströme richten sich nach den von der Hauptsteuervorrichtung 500 vorgegebenen Sollstromwerten 300. Durch eine Änderung der Sollstromwerte 300 kann eine Änderung der Steuersignale 301 und damit der Tastverhältnisse und Pulsdauern der Spannungspulse bewirkt werden, wodurch sich auch die Mittelwerte der Ströme ändern. Im Vergleich zu dem überlagerten Rippelstrom können sich derartige Stromänderungen auf wesentlich größere Zeiträume beziehen. Infolgedessen kann die Stromregelung auch als Gleichstromregelung bezeichnet werden.

Im Betrieb des Planarantriebssystems 1 können mehrere Dreiphasensysteme 150 gleichzeitig bestromt werden, um den Läufer 200 anzutreiben. Dies kann durch die Hauptsteuervorrichtung 500 gesteuert werden, indem die Hauptsteuervorrichtung 500 entsprechende Sollstromwerte 300 für zugehörige Stromregeleinrichtungen 170 ausgibt (vgl. **Figur 11**). Bei einer Ausgestaltung des Stators 5 mit mehreren Statormodulen 10 (vgl. **Figur 2**) können mehrere gleichzeitig bestromte Dreiphasensysteme 150, je nach Position des Läufers 200, auch Bestandteile von mehreren benachbarten Statormodulen 10 sein.

Bei einer gleichzeitigen Bestromung von mehreren Dreiphasensystemen 150 können sich der Läufer 200 und damit die wenigstens eine Läuferspule 240 des Läufers 200 im Einflussbereich der mehreren Dreiphasensysteme 150 befinden und dem Einfluss eines resultierenden magnetischen Wechselfelds ausgesetzt sein, welches durch eine Überlagerung mehrerer magnetischer Wechselfelder, jeweils hervorgerufen durch die in den Dreiphasensystemen 150 fließenden Rippelströme, gebildet ist. Die in der Läuferspule 240 induzierte Wechselspannung kann sich dabei nach dem von den mehreren Dreiphasensystemen 150 erzeugten resultierenden magnetischen Wechselfeld richten.

Das pulsweitenmodulierte Bestromen von mehreren Dreiphasensystemen 150 kann zeitlich synchron oder im Wesentlichen zeitlich synchron erfolgen. Mit Bezug auf letztere Variante können mehrere Dreiphasensystemen 150 zeitlich versetzt zueinander und damit in zueinander versetzten Zeitrastern bestromt werden, so dass ein Zeitversatz zwischen den an die jeweiligen Dreiphasensysteme 150 angelegten Spannungspulsen vorliegen kann (nicht dargestellt). Der Zeitversatz kann relativ gering sein und zum Beispiel im einstelligen Mikrosekundenbereich liegen. Diese Gegebenheit kann daher mit Bezug auf die im Folgenden beschriebene Datenübertragung zwischen dem Stator 5 und dem Läufer 200 vernachlässigt werden, weshalb hier nicht näher darauf eingegangen wird.

Das Planarantriebssystem 1 kann dahingehend ausgebildet sein, dass eine Datenübertragung von dem Läufer 200 zu dem Stator 5 möglich ist. In diesem Zusammenhang können im Folgenden beschriebene Ausgestaltungen zum Einsatz kommen.

Für die Datenkommunikation von dem Läufer 200 zu dem Stator 5 kann das Verfahren der Lastmodulation eingesetzt werden. Hierzu kann der Läufer 200 ausgebildet sein, ein zeitweises elektrisches Belasten der wenigstens einen Läuferspule 240 durchzuführen. Das Belasten der Läuferspule 240 hat zur Folge, dass aus dem durch die pulsweitenmodulierte Bestromung von Dreiphasensystemen 150 des Stators 5 erzeugten magnetischen Wechselfeld Energie entzogen bzw. in verstärkter Form entzogen wird. Dies führt zu einer Erhöhung der Stromentnahme von bestromten Dreiphasensystemen 150 des Stators 5. Durch zeitweises bzw. pulsförmiges Belasten der Läuferspule 240 kann in entsprechender Weise eine zeitweise bzw. pulsförmig auftretende erhöhte Stromaufnahme bei dem Stator 5 hervorgerufen, und können hierauf basierend Datensignale bzw. Symbole von dem Läufer 200 zu dem Stator 5 übertragen werden. Durch Erfassen der erhöhten Stromaufnahme, was wie weiter unten beschrieben im Rahmen eines Messens eines Summenstroms von bestromten Dreiphasensystemen 150 erfolgen kann, und durch Durchführen einer entsprechenden Auswertung, kann auf die von dem Läufer 200 erzeugten Datensignale geschlossen werden.

Zur weiteren Veranschaulichung zeigt **Figur 13** eine mögliche Ausgestaltung einer Schaltungsanordnung, wie sie bei dem Läufer 200 für das Durchführen der Lastmodulation vorgesehen sein kann. Der Läufer 200 weist eine Läuferspule 240 auf, in welcher aufgrund des pulsweitenmodulierten Bestromens von Dreiphasensystemen 150 des Stators 5 und dem hiermit verbundenen Hervorrufen eines magnetischen Wechselfelds eine elektrische Wechselspannung induziert werden kann. Weitere Bestandteile des Läufers 200 sind ein mit der Läuferspule 240 verbundener Gleichrichter 260 und ein mit dem Gleichrichter 260 verbundener Glättungskondensator 266. Der Gleichrichter 260, welcher vorliegend in Form eines Brückengleichrichters verwirklicht ist, umfasst eine erste Diode 261, eine zweite Diode 262, eine dritte Diode 263 und eine vierte Diode 264. Mit Hilfe des Gleichrichters 260 kann die in der Läuferspule 240 induzierte Wechselspannung in eine Gleichspannung umgewandelt werden. Der Glättungskondensator 266 dient dazu, die durch den Gleichrichter 260 in ansonsten pulsierender Form bereitgestellte Gleichspannung zu glätten.

Die mit Hilfe des Gleichrichters 260 und des Glättungskondensators 266 erzeugte geglättete Gleichspannung kann gemäß der in **Figur 13** dargestellten Schaltungsanordnung zwischen einem ersten Anschluss 286 und einem zweiten Anschluss 287 anliegen, welche mit dem Gleichrichter 260 und dem Glättungskondensator 266 verbunden sind. Der erste Anschluss 286 kann, wie in **Figur 13** angedeutet ist, ein Masseanschluss sein. Die Gleichspannung kann zur elektrischen Energieversorgung wenigstens einer weiteren Einrichtung genutzt werden. Die weitere Einrichtung kann Bestandteil des Läufers 200 und/oder auf dem Läufer 200 angeordnet sein. Hierunter fällt zum Beispiel eine weiter unten beschriebene Steuereinrichtung 280 des Läufers 200.

Gemäß der in **Figur 13** gezeigten Ausgestaltung ist der Läufer 200 ausgebildet, zum Durchführen der Lastmodulation durch zeitweises elektrisches Belasten der Läuferspule 240 einen Spulenteil der Läuferspule 240 kurzzuschließen. Hierdurch kann erreicht werden, dass während des Belastens die in der Läuferspule 240 induzierte Wechselspannung nur zu einem Teil einbricht, und dadurch die induktive Energieübertragung von dem Stator 5 zu dem Läufer 200 aufrechterhalten bleibt.

Wie in **Figur 13** dargestellt ist, umfasst die Läuferspule 240 zu diesem Zweck einen ersten Spulenteil 248 und einen zweiten Spulenteil 249, wobei der zweite Spulenteil 249 für das zeitweise elektrische Kurzschließen eingesetzt wird. Der Läufer 200 weist ferner einen mit der Läuferspule 240 verbundenen Lastwiderstand 272, und eine mit dem Lastwiderstand 272 und mit dem ersten Anschluss 286 verbundene Schalteinrichtung 271 auf. Die Schalteinrichtung 271 kann in Form eines Transistors verwirklicht sein. Durch Schließen der Schalteinrichtung 271 kann der zweite Spulenteil 249 der Läuferspule 240 über den Lastwiderstand 272 kurzgeschlossen werden. Gemäß der in **Figur 13** gezeigten Schaltungsanordnung wird der zweite Spulenteil 249 bzw. werden dessen Enden hierbei mit dem als Masseanschluss dienenden ersten Anschluss 286 verbunden. Das Kurzschließen des zweiten Spulenteils 249 ist mit Effekten wie einer Impedanzänderung und einem Auftreten eines Wirbelstroms verbunden, so dass wie oben beschrieben eine verstärkte Energieentnahme aus dem magnetischen Wechselfeld des Stators 5 und damit ein erhöhter Stromverbrauch von bestromten Dreiphasensystemen 150 des Stators 5 bewirkt werden kann. Durch Öffnen der Schalteinrichtung 271 kann der Kurzschluss des zweiten Spulenteils 249 wieder aufgehoben, und kann insofern das Vorliegen des erhöhten Stromverbrauchs bei dem Stator 5 wieder beendet werden. Mit Hilfe des Lastwiderstands 272 lässt sich die Größe der Energieentnahme aus dem magnetischen Wechselfeld bei der Belastung der Läuferspule 240 festlegen.

Gemäß der in **Figur 13** gezeigten Schaltungsanordnung weist der Läufer 200 ferner eine mit der Schalteinrichtung 271 verbundene Steuereinrichtung 280 auf. Die Steuereinrichtung 280 dient zum Ansteuern der Schalteinrichtung 271, und damit zum Steuern der Datenübertragung von dem Läufer 200 zu dem Stator 5. Wie oben angedeutet wurde, kann die Steuereinrichtung 280 über die durch den Gleichrichter 260 und den Glättungskondensator 266 bereitgestellte Gleichspannung mit elektrischer Energie versorgt werden (nicht dargestellt). Mit Hilfe der Steuereinrichtung 280 kann die Schalteinrichtung 271 derart periodisch bzw. pulsförmig zum Kurzschließen des zweiten Spulenteils 249 der Läuferspule 240 angesteuert werden, dass entsprechende Datensignale bzw. Symbole von dem Läufer 200 erzeugt und zu dem Stator 5 übertragen werden.

Der Läufer 200 weist des Weiteren, wie in **Figur 13** gezeigt ist, eine mit der Läuferspule 240 verbundene Spannungsmesseinrichtung 281 auf. Mit Hilfe der Spannungsmesseinrichtung 281 kann die in der Läuferspule 240 induzierte Wechselspannung gemessen werden. Dies kann dem Zweck dienen, um hierauf basierend deren Frequenz zu bestimmen. Die Spannungsmesseinrichtung 281 ist mit der Steuereinrichtung 280 verbunden, so dass entsprechende Messsignale der Wechselspannung von der Spannungsmesseinrichtung 281 zum Auswerten an die Steuereinrichtung 280 übermittelt werden können. Durch Auswerten der Messsignale können durch die Steuereinrichtung 280 die Frequenz der Wechselspannung, und infolgedessen die hiermit übereinstimmende Frequenz des durch den Stator 5 erzeugten magnetischen Wechselfelds und entsprechend die PWM-Taktfrequenz der Stromregelung ermittelt werden. Auch die Phasenlage der Wechselspannung und des magnetischen Wechselfelds kann durch die Steuereinrichtung 280 ermittelt werden.

Das Ermitteln der Frequenz sowie der Phasenlage des magnetischen Wechselfelds kann vorgesehen sein, um die Datenübertragung von dem Läufer 200 zu dem Stator 5 unter Verwendung eines Referenztakts, vorliegend in Form des von dem Stator 5 erzeugten magnetischen Wechselfelds bzw. von dessen Frequenz, durchzuführen. Auf diese Weise kann die Datenübertragung mit einer hohen Zuverlässigkeit erfolgen. Die Steuereinrichtung 280 kann in diesem Zusammenhang ausgebildet sein, das Belasten der Läuferspule 240 durch das Ansteuern der Schalteinrichtung 271 zeitlich abgestimmt auf das magnetische Wechselfeld vorzunehmen. Der Referenztakt in Form des magnetischen Wechselfelds kann in entsprechender Weise bei einer durch den Stator 5 vorgenommenen Auswertung zum Einsatz kommen, wie weiter unten näher erläutert wird.

Wie oben angedeutet wurde und weiter unten näher erläutert wird, wird zum Erfassen des durch das Belasten der Läuferspule 240 verursachten erhöhten Stromverbrauchs des Stators 5 ein Summenstrom von bestromten Dreiphasensystemen 150 gemessen. In diesem Zusammenhang ist es möglich, dass die Amplitude von durch den Läufer 200 erzeugten Datensignalen im gemessenen Summenstrom relativ klein ist. Dies gilt zum Beispiel im Vergleich zu einem Mittelwert bzw. Gleichstrompegel des Summenstroms. Darüber hinaus kann der Summenstrom mit Störgrößen wie einem Rauschen behaftet sein. Auf diese Weise kann anhand des gemessenen Summenstroms nicht zuverlässig entschieden werden, ob eine Belastung der Läuferspule 240 vorliegt oder nicht. Dadurch kann die Auswertung der Datensignale beeinträchtigt sein.

Um auch unter solchen Umständen eine zuverlässige und sichere Datenübertragung von dem Läufer 200 zu dem Stator 5 zu ermöglichen, kann es in Betracht kommen, die zur Datenübertragung von der Steuereinrichtung 280 durch Ansteuern der Schalteinrichtung 271 zeitweise vorgenommene Belastung der Läuferspule 240 (vgl. **Figur 13**) in modulierter Form durchzuführen, also unter Verwendung eines Trägersignals bzw. periodischen Trägersignals. Die eingesetzte Modulation kann zum Beispiel eine Phasenmodulation, Amplitudenmodulation oder Frequenzmodulation sein. In dieser Ausgestaltung kann die Belastung der Läuferspule 240 derart moduliert erfolgen, dass ein Trägersignal bzw. eine Trägerfrequenz gesendet wird, welche(s) mit einem Nutzsignal moduliert ist. Das Nutzsignal umfasst dabei die für die Übermittlung vorgesehenen Datensignale bzw. Symbole. Die Trägerfrequenz kann eine Rechteck-Trägerfrequenz sein. Ferner kann die Trägerfrequenz im kHz-Bereich liegen. Möglich ist zum Beispiel der Frequenzbereich von 1kHz bis 2kHz. Das von dem Läufer 200 erzeugte und mit der Nutzinformation bzw. dem Nutzsignal modulierte Trägersignal kann in dem bei dem Stator 5 gemessenen Summenstrom enthalten sein. Durch Auswerten des Summenstroms kann infolgedessen auf das Nutzsignal geschlossen werden.

Im Falle einer Amplitudenmodulation kann zum Beispiel ein Trägersignal mit einer Trägerfrequenz von 1kHz oder 2kHz zur Anwendung kommen. Daten können dadurch übertragen werden, indem entweder ein Senden des Trägersignals durch pulsförmiges Belasten der Läuferspule 240 im Takt der Trägerfrequenz, oder ein Nichtsenden des Trägersignals durch Nichtbelasten der Läuferspule 240 erfolgt. Auf diese Weise können Symbole mit dem Informationsgehalt eines Bits übermittelt werden. Beispielsweise kann durch pulsförmiges Belasten für eine vorgegebene Zeitdauer der logische Zustand 0, und kann durch Nichtbelasten für die vorgegebene Zeitdauer der logische Zustand 1 übertragen werden (oder auch umgekehrt).

Im Hinblick auf eine Frequenzmodulation kann ebenfalls zum Beispiel ein Trägersignal mit einer Trägerfrequenz von 1kHz oder 2kHz eingesetzt werden. Zum Verwirklichen der Datenübertragung kann entweder das Trägersignal mit der Trägerfrequenz von 1kHz bzw. 2kHz, oder ein moduliertes Trägersignal mit einer geänderten, d.h. höheren oder niedrigeren Frequenz von zum Beispiel 2kHz bzw. 1kHz, gesendet werden. Die Läuferspule 240 kann hierzu korrespondierend pulsförmig belastet werden. Auch auf diese Weise können Symbole mit dem Informationsgehalt eines Bits übermittelt werden. Beispielsweise kann durch pulsförmiges Belasten mit der Trägerfrequenz für eine vorgegebene Zeitdauer der logische Zustand 0, und kann durch pulsförmiges Belasten mit der geänderten Frequenz für die vorgegebene Zeitdauer der logische Zustand 1 übertragen werden (oder auch umgekehrt). Es besteht des Weiteren die Möglichkeit, für das Senden eines modulierten Trägersignals eine Mehrzahl unterschiedlicher Frequenzen einzusetzen, wodurch Symbole mit einem größeren Informationsgehalt übermittelt werden können. Ein Beispiel ist eine 4-FSK (engl. Frequency Shift Keying), bei welcher insgesamt vier unterschiedliche Frequenzen zur Anwendung kommen. Auf diese Weise können Symbole mit dem Informationsgehalt eines Dibits übertragen werden.

Bei einer Phasenmodulation, auch als Phasenumtastung (engl. Phase Shift Keying, PSK) bezeichnet, kann in entsprechender Weise zum Beispiel ein Trägersignal mit einer Trägerfrequenz von 1kHz oder 2kHz zum Einsatz kommen. Das Durchführen der Datenübertragung kann ein Senden des Trägersignals in unterschiedlichen und zueinander verschobenen Phasenlagen umfassen, indem die Läuferspule 240 hierzu korrespondierend pulsförmig belastet wird. Möglich sind zum Beispiel zwei unterschiedliche Phasenlagen, so dass eine 2-PSK vorliegt. Hierdurch können Symbole mit dem Informationsgehalt eines Bits übermittelt werden. Alternativ kann eine andere Anzahl an unterschiedlichen Phasenlagen vorgesehen sein, wodurch Symbole mit einem größeren Informationsgehalt übermittelt werden können. Ein Beispiel sind vier verschiedene Phasenlagen, wie es bei einer 4-PSK der Fall ist. Auf diese Weise können Symbole mit dem Informationsgehalt eines Dibits übertragen werden. Auf eine solche Ausgestaltung wird im Folgenden näher eingegangen.

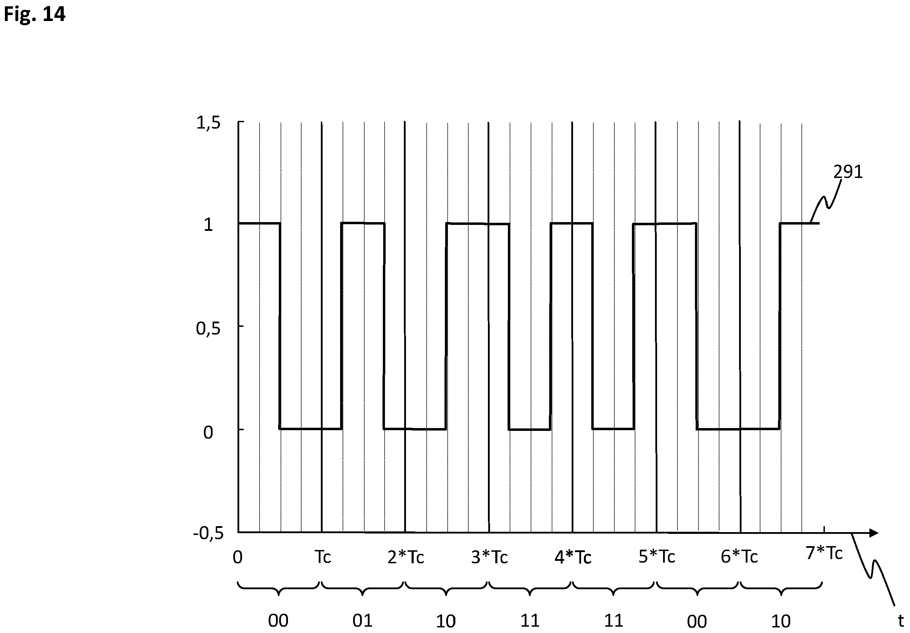

Zur Veranschaulichung eines Durchführens einer 4-PSK zeigt **Figur 14** einen beispielhaften ersten Steuersignalverlauf 291 in Abhängigkeit der Zeit t, welcher bei dem Läufer 200 von der Steuereinrichtung 280 zum Ansteuern der Schalteinrichtung 271 (vgl. **Figur 13**) für das pulsförmige Belasten der Läuferspule 240 durch Kurzschließen derselben ausgegeben werden kann. Der erste Steuersignalverlauf 291 weist einen nahezu rechteckförmigen Verlauf mit zwei Niveaus auf. In Abhängigkeit davon, ob sich das Steuersignal auf dem oberen oder unteren der zwei Niveaus befindet, kann die Schalteinrichtung 271 geschlossen und damit der zweite Spulenteil 249 der Läuferspule 240 kurzgeschlossen, oder kann die Schalteinrichtung 271 geöffnet und damit der zweite Spulenteil 249 nicht kurzgeschlossen sein. Bei einer Ausgestaltung der Schalteinrichtung 271 in Form eines Transistors kann der erste Steuersignalverlauf 291 zum Beispiel der zeitliche Verlauf einer an den Transistor angelegten Steuerspannung sein. Mit Bezug auf den ersten Steuersignalverlauf 291 ist auf der Ordinate eine fiktive Größenskala angedeutet. Auf der Abszisse ist eine Taktperiode Tc des für die Datenübertragung genutzten Trägersignals dargestellt.

Mit Hilfe des in **Figur 14** gezeigten ersten Steuersignalverlaufs 291 wird ein Nutzsignal umfassend vier unterschiedliche Symbole mit dem Informationsgehalt eines Dibits übermittelt, welche die logischen Zustände 00, 01, 10 oder 11 repräsentieren. Die unterschiedlichen Symbole besitzen vier verschiedene Phasenlagen mit Bezug auf die Taktperiode Tc. In **Figur 14** ist unterhalb der Abszisse eine mögliche Zuordnung der unterschiedlichen Phasenlagen zu den logischen Zuständen 00, 01, 10 und 11 dargestellt.

In **Figur 14** ist weiter angedeutet, dass jedes der Symbole pro Taktperiode Tc vier Teilabschnitte aufweist, von denen zwei Teilabschnitte mit dem oberen Niveau des Steuersignals und zwei Teilabschnitte mit dem unteren Niveau des Steuersignals belegt sind. Durch "Verschieben" dieser Teilabschnitte können die unterschiedlichen Symbole dargestellt werden.

Mit Bezug auf die Datenübertragung von dem Läufer 200 zu dem Stator 5 kann es ferner in Betracht kommen, das Erzeugen von Datensignalen bzw. Symbolen jeweils auf eine vorgegebene Länge ausgedehnt durchzuführen, indem die betreffenden Symbole mehrfach mit einer vorgegebenen Wiederholung gesendet werden. Die Wiederholung kann zum Beispiel fünf betragen. Hierdurch wird der Informationsgehalt eines Symbols dadurch übermittelt, dass das betreffende Symbol mehrfach hintereinander gesendet wird. Diese Vorgehensweise führt zwar zu einer Verringerung der übertragbaren Datenrate, ermöglicht es jedoch, die Störfestigkeit und Robustheit der Datenübertragung zu erhöhen.

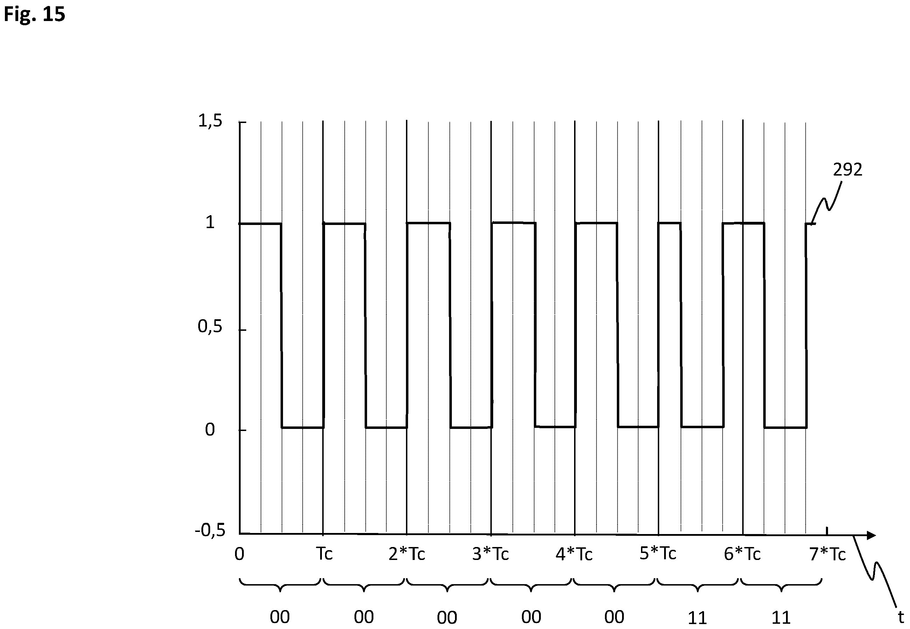

Zur Veranschaulichung der vorgenannten Ausgestaltung zeigt **Figur 15** einen beispielhaften zweiten Steuersignalverlauf 292 in Abhängigkeit der Zeit t, welcher bei dem Läufer 200 von der Steuereinrichtung 280 zum Ansteuern der Schalteinrichtung 271 (vgl. **Figur 13**) für das pulsförmige Belasten der Läuferspule 240 ausgegeben werden kann. Wie in **Figur 15** dargestellt ist, wird zum Übermitteln des logischen Zustands 00 das dazugehörige Symbol fünfmal nacheinander gesendet.

Für den Stator 5 des Planarantriebssystems 1 kann im Hinblick auf die Datenübertragung von dem Läufer 200 zu dem Stator 5 die im Folgenden erläuterte Ausgestaltung zur Anwendung kommen, um die durch das Belasten der Läuferspule 240 hervorgerufene erhöhte Stromaufnahme von bestromten Dreiphasensystemen 150 zuverlässig erfassen und auswerten zu können.

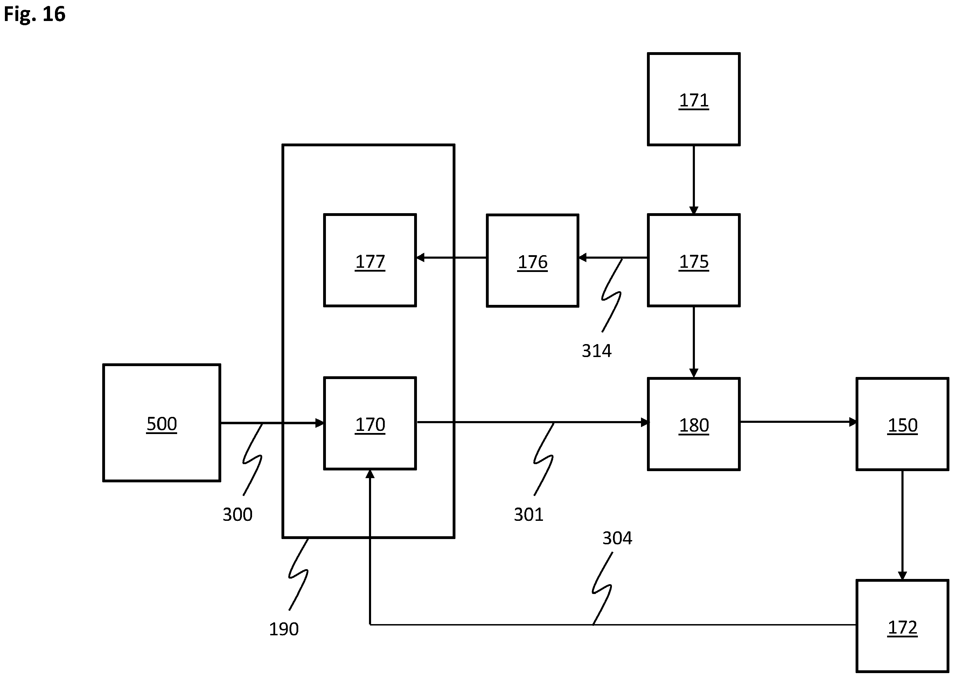

**Figur 16** zeigt ein Blockschaltbild eines weiteren Regelkreises zur Stromregelung eines Dreiphasensystems 150 eines Statormoduls 10, wie er bei dem Planarantriebssystem 1 vorgesehen sein kann. Der Regelkreis basiert auf dem in **Figur 11** gezeigten Regelkreis und umfasst, neben der Hauptsteuervorrichtung 500, oben erläuterte Komponenten wie eine Modulsteuervorrichtung 190, eine Stromregeleinrichtung 170, eine Endstufeneinrichtung 180, einen Zwischenkreis 171, ein Dreiphasensystem 150 und eine Strommesseinrichtung 172. Im Hinblick auf Details zu diesen Komponenten wird auf die obige Beschreibung zu **Figur 11** Bezug genommen.

Gemäß **Figur 16** kommen des Weiteren eine Summenstrommesseinrichtung 175, ein Bandpassfilter 176 und eine Auswerteeinrichtung 177 zum Einsatz. Die Summenstrommesseinrichtung 175, der Bandpassfilter 176 und die Auswerteeinrichtung 177 sind Bestandteile des Stators 5. In diesem Zusammenhang besteht die Möglichkeit, dass das bzw. jedes Statormodul 10 des Stators 5 jeweils eine Summenstrommesseinrichtung 175, einen Bandpassfilter 176 und eine Auswerteeinrichtung 177 umfasst.

Wie in **Figur 16** gezeigt ist, befindet sich die Summenstrommesseinrichtung 175 zwischen dem Zwischenkreis 171 und der Endstufeneinrichtung 180. Hinsichtlich der oben beschriebenen Ausgestaltung eines Statormoduls 10 mit einem Zwischenkreis 171 und mehreren (d.h. vierundzwanzig) Endstufeneinrichtungen 180 ist die Summenstrommesseinrichtung 175 zwischen dem Zwischenkreis 171 und sämtlichen Endstufeneinrichtungen 180 des betreffenden Statormoduls 10 angeordnet, und mit dem Zwischenkreis 171 und den Endstufeneinrichtungen 180 verbunden. Wie oben beschrieben wurde, werden die Endstufeneinrichtungen 180 und damit die Dreiphasensysteme 150 aus dem Zwischenkreis 171 des Statormoduls 10 mit elektrischer Energie versorgt. Mit Hilfe der Summenstrommesseinrichtung 175 kann infolgedessen der Summenstrom von bestromten Dreiphasensystemen 150 des Statormoduls 10 gemessen werden. Der gemessene Summenstrom ist dabei auf den Zwischenkreis 171 bzw. die durch den Zwischenkreis 171 bereitgestellte elektrische Leistung bezogen. Wie ebenfalls oben beschrieben wurde, können mehrere Dreiphasensysteme 150 gleichzeitig bestromt werden. Insofern kann sich der Summenstrom auf den Stromverbrauch der mehreren gleichzeitig bestromten Dreiphasensysteme 150 beziehen.

Die Summenstrommesseinrichtung 175 ist ferner, wie in **Figur 16** gezeigt ist, mit dem der Summenstrommesseinrichtung 175 nachgeordneten Bandpassfilter 176 verbunden. Mit Hilfe des Bandpassfilters 176 erfolgt ein Filtern des durch die Summenstrommesseinrichtung 175 bereitgestellten gemessenen Summenstroms 314. Wie oben beschrieben wurde, kann das Erzeugen von Datensignalen durch den Läufer 200 unter Einsatz einer Modulation mit Hilfe eines Trägersignals mit einer entsprechenden Trägerfrequenz erfolgen.

Hierauf abgestimmt weist der Bandpassfilter 176 einen Durchlassbereich im Bereich der eingesetzten Trägerfrequenz auf. Auf diese Weise können Störgrößen mit Frequenzen außerhalb des Durchlassbereichs herausgefiltert werden. Dadurch wird ein nachfolgendes Auswerten des Summenstroms begünstigt.

Der Bandpassfilter 176 ist des Weiteren, wie in **Figur 16** dargestellt ist, mit der dem Bandpassfilter 176 nachgeordneten Auswerteeinrichtung 177 verbunden. Die Auswerteeinrichtung 177, welche einen Analog-Digital-Umsetzer umfassen kann, ist zum Verarbeiten und Auswerten des gemessenen und durch den Bandpassfilter 176 gefilterten Summenstroms ausgebildet. Wie in **Figur 16** gezeigt ist, kann die Auswerteeinrichtung 177 Bestandteil der Modulsteuervorrichtung 190 des betreffenden Statormoduls 10 sein.

Im Rahmen der Auswertung können Auswertesignale bzw. Auswertedaten durch die Auswerteeinrichtung 177 bereitgestellt werden, welche die von dem Läufer 200 erzeugten Datensignale bzw. Symbole wiedergeben. Mit Bezug auf das oben beschriebene Durchführen der Datenübertragung von dem Läufer 200 zu dem Stator 5 durch pulsförmiges Belasten der Läuferspule 240 zum Übermitteln eines mit einem Nutzsignal modulierten Trägersignals kann das Auswerten des gemessenen und gefilterten Summenstroms durch die Auswerteeinrichtung 177 ein Durchführen einer Korrelation unter Verwendung wenigstens eines Referenzsignals umfassen. Hierbei können jeweils für die Länge eines Symbols Strommesswerte des Summenstroms mit dem wenigstens einen Referenzsignal multipliziert, und können die Produkte aufsummiert werden. Für den Fall, dass ein Symbol in wiederholter Form mehrfach hintereinander gesendet wird (vgl. **Figur 15**), handelt es sich bei der vorgenannten Länge um die ausgedehnte Länge des mehrfach gesendeten Symbols. Die Strommesswerte können im Rahmen der Auswertung durch die Auswerteeinrichtung 177 mittels Abtasten eines gemessenen und gefilterten Summenstromsignals bereitgestellt werden.

Durch das Durchführen der Datenübertragung unter Einsatz einer Modulation kann erreicht werden, dass alle Anteile eines der Auswertung zugrunde gelegten Summenstromsignals, bis auf das Nutzsignal selbst, unkorreliert zu dem Referenzsignal sind. Mit Hilfe der Korrelation kann infolgedessen eine über die Symbol-Länge einstellbare Unterdrückung von Störgrößen, und damit eine Verbesserung des Signal-Rausch-Verhältnisses, erzielt werden. Das wenigstens eine Referenzsignal kann ein periodisches Signal sein. Auch kann das Referenzsignal eine auf die Trägerfrequenz des Trägersignals abgestimmte Frequenz bzw. eine der Trägerfrequenz entsprechende Frequenz besitzen.

In diesem Zusammenhang kann die oben beschriebene Verwendung des durch den Stator 5 erzeugten magnetischen Wechselfelds als Referenztakt genutzt werden. Das durch die Auswerteeinrichtung 177 vorgenommen Auswerten des gemessenen und gefilterten Summenstroms kann zu diesem Zweck zeitlich abgestimmt auf das magnetische Wechselfeld des Stators 5, und damit zeitlich abgestimmt auf die pulsweitenmodulierte Bestromung von Dreiphasensystemen 150 des Stators 5 erfolgen. Auf diese Weise kann das Referenzsignal möglichst gut auf das Trägersignal synchronisiert werden.

Die Hauptsteuervorrichtung 500 des Planarantriebssystems 1 (vgl. **Figur 16**) kann ebenfalls zum Teil bei der Auswertung einbezogen sein. Zu diesem Zweck kann das Planarantriebssystem 1 dahingehend ausgebildet sein, dass der Hauptsteuervorrichtung 500 die von der Auswerteeinrichtung 177 erzeugten Auswertesignale, und bei einer Ausgestaltung des Stators 5 mit mehreren Statormodulen 10, die von einer oder mehreren Auswerteeinrichtungen der jeweiligen Statormodule 5 erzeugten Auswertesignale, übermittelt werden (nicht dargestellt). Hierauf basierend kann mit Hilfe der Hauptsteuervorrichtung 500 ein Weiterverarbeiten der von dem Stator 5 kommenden Auswertesignale erfolgen, um die von dem Läufer 200 erzeugten Datensignale bzw. Symbole zu ermitteln.

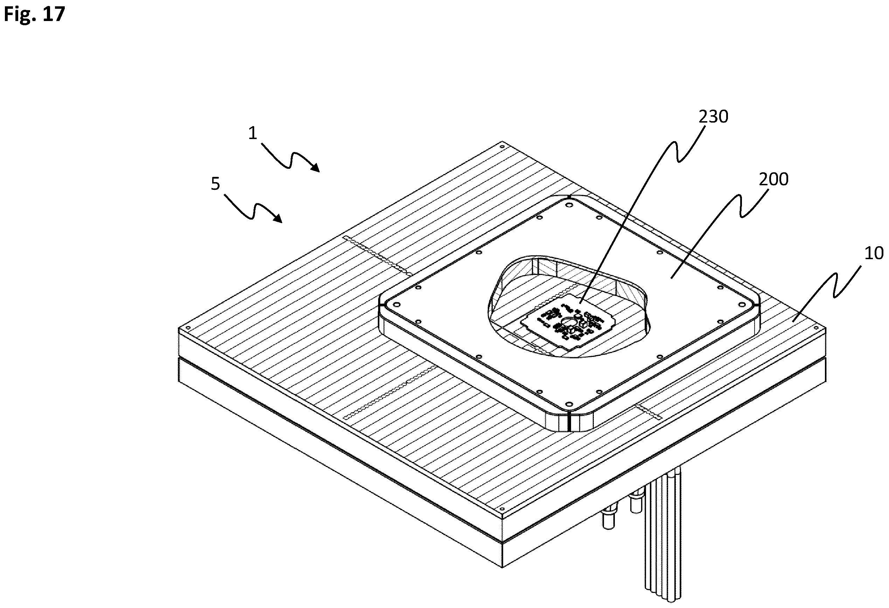

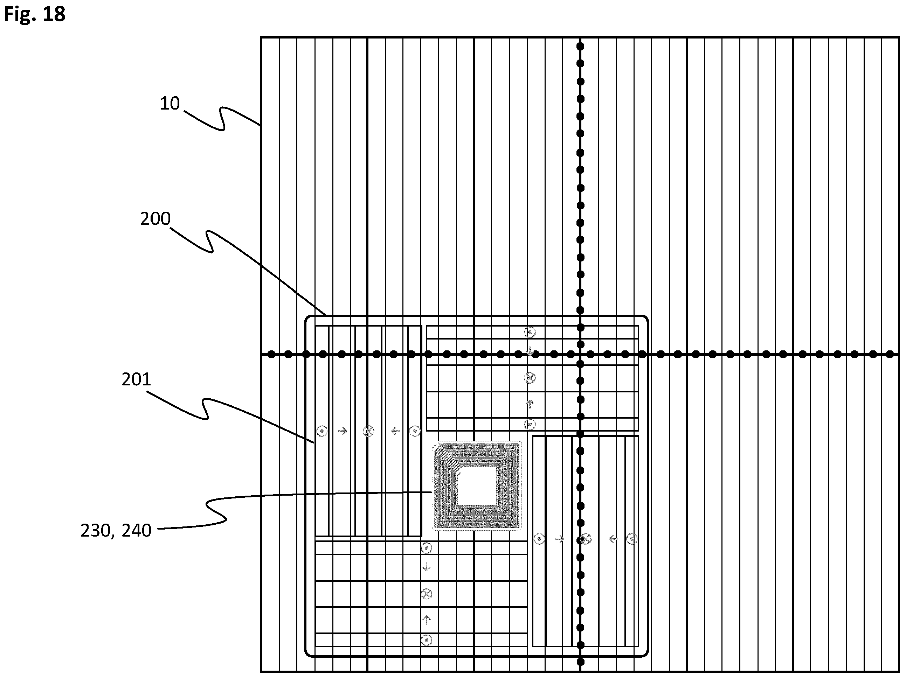

Wie oben anhand von **Figur 3** erläutert wurde, kann der Läufer 200 eine die Läuferspule 240 umfassende erste Leiterplatte 230 aufweisen, welche in dem von den Läufermagneten 216 der Magneteinrichtung 201 des Läufers 200 umgebenen Bereich angeordnet ist. Auf diese Weise können die erste Leiterplatte 230 und die Läuferspule 240 relativ einfach in dem Läufer 200 integriert sein. Zur weiteren Veranschaulichung dieser Ausgestaltung zeigt **Figur 17** eine perspektivische Darstellung des bzw. eines Statormoduls 10 des Stators 5 und des Läufers 200, wobei der Läufer 200 in einer teilaufgeschnittenen Ansicht gezeigt ist. Anhand dieser Darstellung werden eine mögliche Größe und Lage der ersten Leiterplatte 230 des Läufers 200 deutlich. Die erste Leiterplatte 230 besitzt vorliegend eine rechteckige bzw. quadratische Kontur. Ebenfalls zur Veranschaulichung zeigt **Figur 18** eine Aufsichtsdarstellung des Statormoduls 10 und des Läufers 200, wobei von dem Läufer 200 Konturen der Magneteinrichtung 201, der ersten Leiterplatte 230 und der Läuferspule 240 gezeigt sind. Die anhand von **Figur 13** erläuterten weiteren Komponenten des Läufers 200 wie der Gleichrichter 260, der Glättungskondensator 266, der Lastwiderstand 272, die Schalteinrichtung 271, die Steuereinrichtung 280 und die Spannungsmesseinrichtung 281 können in entsprechender Weise Bestandteile der ersten Leiterplatte 230 und/oder auf der ersten Leiterplatte 230 angeordnet sein.

Die in den **Figuren 3****,** **17** **und** **18** gezeigte erste Leiterplatte 230 kann eine Dicke von zum Beispiel 1mm aufweisen. Des Weiteren kann die erste Leiterplatte 230 mehrlagig ausgeführt sein, und eine Mehrzahl an übereinander angeordneten und elektrisch miteinander verbundenen spiralförmigen metallischen Leiterbahnen aufweisen. Die Läuferspule 240 kann durch die miteinander verbundenen spiralförmigen Leiterbahnen gebildet sein. Durch diese Ausgestaltung kann eine effektive induktive Energieübertragung von dem Stator 5 auf den Läufer 200 ermöglicht werden.

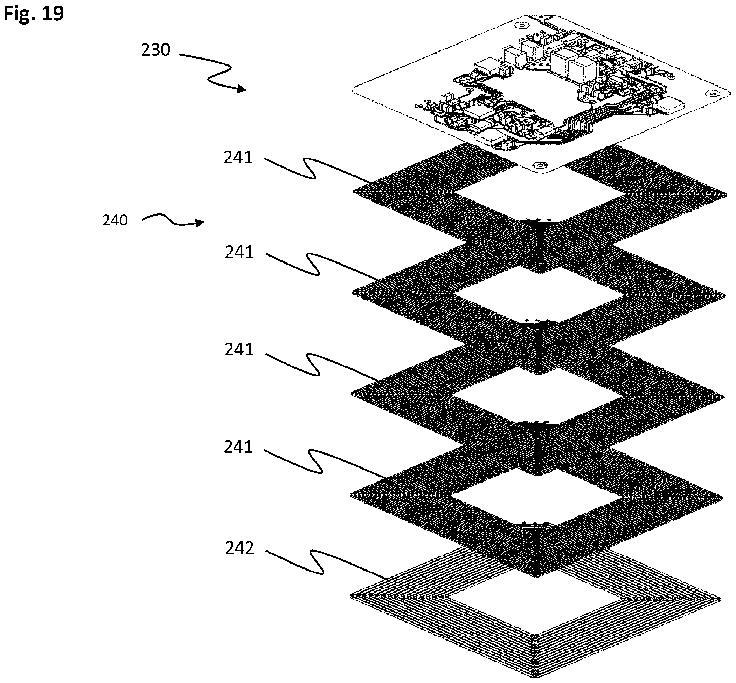

Zur beispielhaften Veranschaulichung dieser Ausgestaltung zeigt **Figur 19** eine Explosionsdarstellung von Bestandteilen der ersten Leiterplatte 230. Die erste Leiterplatte 230 umfasst mehrere, in unterschiedlichen Lagen der ersten Leiterplatte 230 angeordnete spiralförmige erste Leiterbahnen 241 und eine in einer untersten Lage angeordnete spiralförmige zweite Leiterbahn 242. Die ersten Leiterbahnen 241 und die zweite Leiterbahn 242 können über nicht dargestellte elektrische Vertikalverbindungsstrukturen der ersten Leiterplatte 230 elektrisch in Serie verbunden sein. Mit Bezug auf die anhand von **Figur 13** erläuterte Ausgestaltung der Läuferspule 240 mit dem ersten Spulenteil 248 und dem zweiten Spulenteil 249 kann der zum Kurzschließen vorgesehene zweite Spulenteil 249 durch die zweite Leiterbahn 242, und kann der erste Spulenteil 248 durch die ersten Leiterbahnen 241 gebildet sein.

Im Betrieb des Planarantriebssystems 1 kann die unterste spiralförmige zweite Leiterbahn 242 dem Stator 5 zugewandt sein, und im Vergleich zu den spiralförmigen ersten Leiterbahnen 241 den geringsten Abstand zu dem Stator 5 und zu dessen Dreiphasensystemen 150 aufweisen. Auf diese Weise kann eine hohe induktive Kopplung zwischen der zum Kurzschließen genutzten zweiten Leiterbahn 242 der Läuferspule 240 und bestromten Dreiphasensystemen 150 des Stators 5 vorliegen. Infolgedessen kann die mit dem Kurzschließen der zweiten Leiterbahn 242 erzielte Energieentnahme aus dem magnetischen Wechselfeld des Stators 5, und damit die Erhöhung der Stromentnahme von bestromten Dreiphasensystemen 150 des Stators 5, möglichst groß sein. Dies begünstigt die bei dem Stator 5 durchgeführte Auswertung des Summenstroms.

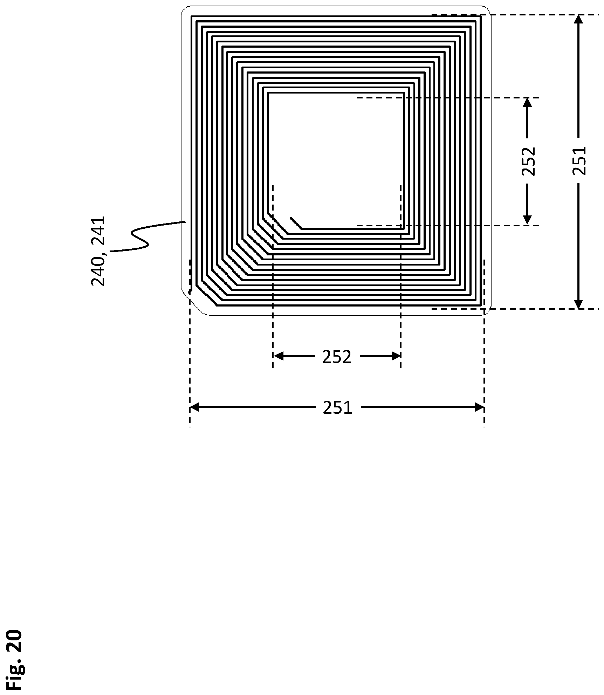

**Figur 20** zeigt eine Aufsichtsdarstellung einer spiralförmigen ersten Leiterbahn 241 der Läuferspule 240, wie sie bei der ersten Leiterplatte 230 vorgesehen sein kann. Die erste Leiterbahn 241 besitzt eine im Wesentlichen rechteckige bzw. quadratische Außenkontur, und umschließt einen im Wesentlichen rechteckigen bzw. quadratischen Innenbereich. Auch besitzt die erste Leiterbahn 241 eine relativ hohe Windungszahl. In **Figur 20** sind des Weiteren eine sich auf die Außenkontur beziehende Außenbreite 251 und eine sich auf die Innenkontur beziehende Innenbreite 252 der ersten Leiterbahn 241 angedeutet. Hierbei können die Außenbreite 251 zum Beispiel 0,85L, und die Innenbreite 252 zum Beispiel 0,4L betragen. Die Variable L kann eine Breite eines Dreiphasensystems 150 bzw. eines Statorsegments 120, 121 sein, und der in den Figuren **6** **und** **7** dargestellten Segmentbreite 127 entsprechen. Der in **Figur 20** gezeigte Aufbau kann in Bezug auf sämtliche spiralförmige erste Leiterbahnen 241 der ersten Leiterplatte 230 zutreffen. Dies kann auch für die zum Kurzschließen verwendete spiralförmige zweite Leiterbahn 242 gelten, welche entsprechend den ersten Leiterbahnen 241 ausgebildet sein kann.

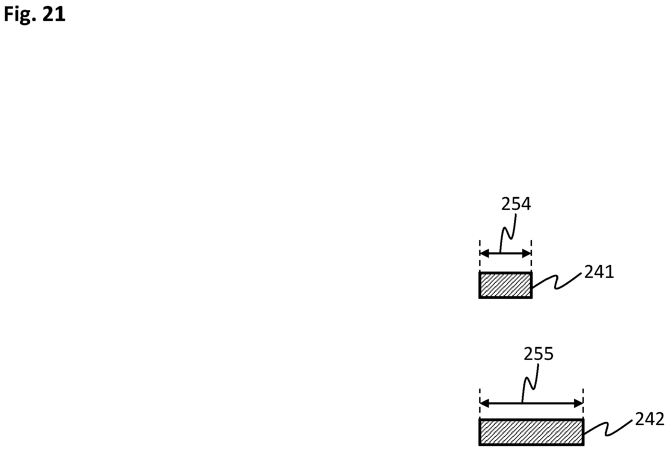

Alternativ kann es in Betracht kommen, die Läuferspule 240 derart auszubilden, dass in dem zum Kurzschließen vorgesehenen zweiten Spulenteil 249 bzw. bei der spiralförmigen zweiten Leiterbahn 242 ein größerer Leiterquerschnitt vorliegt als in dem ersten Spulenteil 248 bzw. den spiralförmigen ersten Leiterbahnen 241. Zur Veranschaulichung zeigt **Figur 21** beispielhaft mögliche Leiterquerschnitte, wie sie für die ersten Leiterbahnen 241 und für die zweite Leiterbahn 242 der Läuferspule 240 vorgesehen sein können. Die in **Figur 21** im Querschnitt dargestellte erste und zweite Leiterbahn 241, 242 besitzen dieselbe Dicke, jedoch unterschiedliche Breiten. Eine erste Leiterbahnbreite 254 der ersten Leiterbahn 241 ist kleiner als eine zweite Leiterbahnbreite 255 der zweiten Leiterbahn 242. Die zweite Leiterbahnbreite 255 kann zum Beispiel doppelt so groß sein wie die erste Leiterbahnbreite 254. Aufgrund der größeren zweiten Leiterbahnbreite 254 kann die zum Kurzschließen genutzte zweite Leiterbahn 242 eine gegenüber den ersten Leiterbahnen 241 höhere Spulengüte besitzen. Auch auf diese Weise kann ein Vorliegen einer hohen induktiven Kopplung zwischen der zum Kurzschließen genutzten zweiten Leiterbahn 242 der Läuferspule 240 und bestromten Dreiphasensystemen 150 des Stators 5 erzielt werden. Bedingt durch die größere zweite Leiterbahnbreite 254 kann die zweite Leiterbahn 242 eine geringere Windungszahl aufweisen als die ersten Leiterbahnen 241.

Das Planarantriebssystem 1 kann nicht nur zum Ermöglichen einer Datenübertragung von dem Läufer 200 zu dem Stator 5, sondern auch zum Ermöglichen einer Datenübertragung von dem Stator 5 zu dem Läufer 200 ausgebildet sein. In diesem Zusammenhang können im Folgenden beschriebene Ausgestaltungen zum Einsatz kommen.

Die Datenkommunikation von dem Stator 5 zu dem Läufer 200 kann auf einem zeitweisen Beeinflussen der Bestromung von wenigstens einem bestromten Dreiphasensystem 150 des Stators 5 beruhen. Hierdurch kann eine Veränderung in Bezug auf das durch den Stator 5 erzeugte magnetische Wechselfeld, und dadurch auf die in der Läuferspule 240 des Läufers 200 induzierte Wechselspannung bewirkt werden. Durch zeitweises bzw. pulsförmiges Beeinflussen der Bestromung kann in entsprechender Weise eine zeitweise bzw. pulsförmig auftretende Veränderung der Induktionsspannung in der Läuferspule 240 des Läufers 200 hervorgerufen werden, und kann hierauf basierend ein Nutzsignal bzw. können Symbole von dem Stator 5 zu dem Läufer 200 übermittelt werden. Durch Messen der Induktionsspannung, was wie oben angegeben mit Hilfe der Spannungsmesseinrichtung 281 des Läufers 200 erfolgen kann (vgl. **Figur 13**), und durch Durchführen einer entsprechenden Auswertung, kann auf die von dem Stator 5 erzeugten Datensignale geschlossen werden.

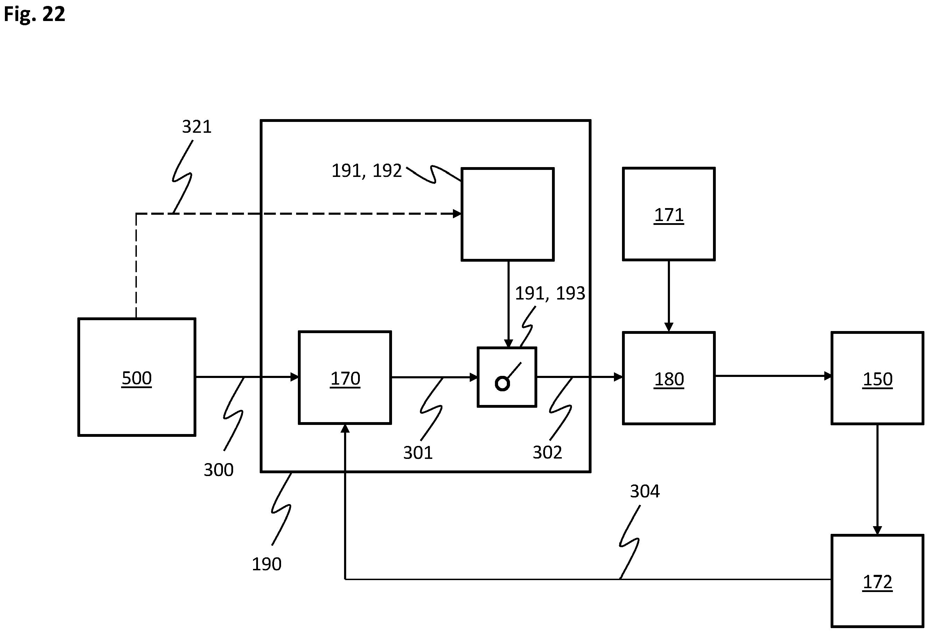

Zur weiteren Veranschaulichung zeigt **Figur 22** ein Blockschaltbild eines weiteren Regelkreises zur Stromregelung eines Dreiphasensystems 150 eines Statormoduls 10, wie er bei dem Planarantriebssystem 1 für die Datenübertragung von dem Stator 5 zu dem Läufer 200 vorgesehen sein kann. Der Regelkreis basiert auf dem in **Figur 11** gezeigten Regelkreis und umfasst, neben der Hauptsteuervorrichtung 500, oben erläuterte Komponenten wie eine Modulsteuervorrichtung 190, eine Stromregeleinrichtung 170, eine Endstufeneinrichtung 180, einen Zwischenkreis 171, ein Dreiphasensystem 150 und eine Strommesseinrichtung 172. Anhand des Regelkreises von **Figur 16** erläuterte weitere Komponenten wie eine Summenstrommesseinrichtung 175, ein Bandpassfilter 176 und eine Auswerteeinrichtung 177, welche im Rahmen der Datenübertragung von dem Läufer 200 zu dem Stator 5 genutzt werden, und welche in entsprechender Weise bei dem Regelkreis von **Figur 22** vorhanden sein können, sind aus Gründen der Übersichtlichkeit in **Figur 22** weggelassen. Im Hinblick auf Details zu den bereits erläuterten Komponenten wird auf die obige Beschreibung zu den **Figuren 11** **und** **16** Bezug genommen.

Gemäß **Figur 22** kommt des Weiteren eine erste Beeinflussungseinrichtung 191 zur Anwendung, welche, wie in **Figur 22** gezeigt ist, Bestandteil der Modulsteuervorrichtung 190 sein kann. Die erste Beeinflussungseinrichtung 191 dient zum zeitweisen Beeinflussen der Stromregelung des Dreiphasensystems 150. Die erste Beeinflussungseinrichtung 191 kann durch die Hauptsteuervorrichtung 500 des Planarantriebssystems 1 angesteuert, und dadurch aktiviert und in Betrieb genommen werden. Sofern die erste Beeinflussungseinrichtung 191 nicht aktiviert ist, erfolgt die Stromregelung bei dem Dreiphasensystem 150 in der oben beschriebenen Art und Weise, wie sie anhand von **Figur 11** erläutert wurde.

Im zur Datenübertragung eingesetzten Betrieb der ersten Beeinflussungseinrichtung 191 erfolgt demgegenüber eine zeitweise Beeinflussung der Stromregelung des Dreiphasensystems 150, und zwar derart, dass das Auftreten des Rippelstroms in dem Dreiphasensystem 150 zeitweise unterdrückt wird. Auf diese Weise kann erzielt werden, dass das mit dem Rippelstrom verknüpfte Erzeugen eines magnetischen Wechselfelds, und damit das Induzieren einer elektrischen Wechselspannung in der Läuferspule 240 des Läufers 200 zeitweise unterdrückt oder im Wesentlichen unterdrückt wird. Infolge der Beeinflussung wird daher keine Induktionsspannung oder nur eine kleine bzw. vernachlässigbar kleine Induktionsspannung in der Läuferspule 240 erzeugt.

Gemäß der in **Figur 22** gezeigten Ausgestaltung umfasst die erste Beeinflussungseinrichtung 191 eine Datensteuereinrichtung 192 und eine Unterbrechungseinrichtung 193. Mit Hilfe der Unterbrechungseinrichtung 193 wird das Übermitteln von durch die Stromregeleinrichtung 170 für die Endstufeneinrichtung 180 ausgegebenen Steuersignalen 301 zeitweise unterbrochen, so dass die Steuersignale 301 nicht mehr an die Endstufeneinrichtung 180 angelegt werden. Dies dient dem Zweck, eine beeinflusste Betriebsweise der Endstufeneinrichtung 180 und damit des Dreiphasensystems 150 hervorzurufen, in welcher das Auftreten des Rippelstroms in dem Dreiphasensystem 150 wie oben angegeben zeitweise unterbleibt. Hierzu können, wie in **Figur 22** gezeigt ist, geänderte Steuersignale 302 von der Unterbrechungseinrichtung 193 erzeugt und an die Endstufeneinrichtung 180 angelegt werden.

Das mit Hilfe der Unterbrechungseinrichtung 193 bewirkte Unterbrechen der von der Stromregeleinrichtung 170 erzeugten Steuersignale 301 und das Ausgeben von geänderten Steuersignalen 302 wird durch die Datensteuereinrichtung 192 der ersten Beeinflussungseinrichtung 191 gesteuert, welche die Unterbrechungseinrichtung 193 zu diesem Zweck ansteuert und entsprechende Steuersignale an die Unterbrechungseinrichtung 193 anlegt. Dieser Vorgang wird durch die Hauptsteuervorrichtung 500 des Planarantriebssystems 1 initiiert, welche der Datensteuereinrichtung 192 sich auf die Datenübertragung von dem Stator 5 zu dem Läufer 200 beziehende Datensignale 321 übermittelt. Basierend auf den Datensignalen 321 steuert die Datensteuereinrichtung 192 die Unterbrechungseinrichtung 193 entsprechend an, um hierdurch zeitweise ein Unterdrücken des Rippelstroms in dem Dreiphasensystem 150 hervorzurufen. Anders ausgedrückt, werden die von der Hauptsteuervorrichtung 500 ausgegebenen Datensignale 321 mit Hilfe der Datensteuereinrichtung 192 in zum Ansteuern der Unterbrechungseinrichtung 193 eingesetzte Steuersignale umgesetzt.

Das auf diese Weise mit Hilfe der ersten Beeinflussungseinrichtung 191 bewirkte zeitweise Unterdrücken des Rippelstroms kann jeweils für eine oder mehrere PWM-Periodendauern erfolgen. Auf diese Weise kann ein Aufaddieren eines Stromanteils bzw.

Gleichstromanteils auf den in dem Dreiphasensystem 150 ausgeregelten Strom, und eine hiermit verbundene Störung der Stromregelung, vermieden werden.

Das zeitweise Unterdrücken des Rippelstroms in dem Dreiphasensystem 150 kann auf unterschiedliche Art und Weise mit Hilfe der ersten Beeinflussungseinrichtung 191 bewirkt werden. Eine mögliche Variante besteht darin, ein Beaufschlagen des Dreiphasensystems 150 mit Spannungspulsen zu unterdrücken, so dass ein Abschalten bzw. Auslassen von Spannungspulsen erfolgt. Alternativ besteht die Möglichkeit, bei dem Beaufschlagen des Dreiphasensystems 150 mit mittenzentrierten Spannungspulsen Spannungspulse mit übereinstimmender Pulsbreite an das Dreiphasensystem 150 anzulegen.

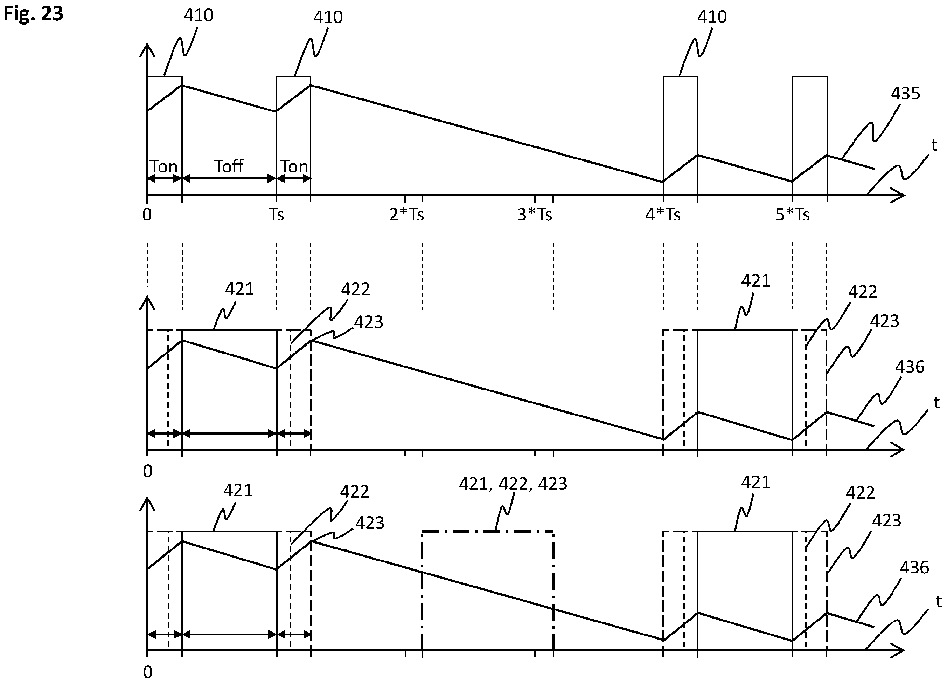

Zur weiteren Veranschaulichung einer zeitweisen Beeinflussung der Stromregelung zeigt **Figur 23** mögliche elektrische Spannungs- und Stromverläufe in Abhängigkeit der Zeit t, wie sie bei einer pulsweitenmodulierten elektrischen Ansteuerung von Spulensystemen, einschließlich einer mit Hilfe der ersten Beeinflussungseinrichtung 191 erzielbaren Beeinflussung, auftreten können. Das obere Diagramm von **Figur 23** zeigt, entsprechend **Figur 12****,** zur vereinfachenden Darstellung Gegebenheiten bei einer Ansteuerung eines einphasigen Spulensystems mit lediglich einer Spule. Das obere Diagramm von **Figur 23** kann auch hier als Äquivalenzdarstellung für ein dreiphasiges Spulensystem dienen. Das mittlere und das untere Diagramm von **Figur 23** beziehen sich auf die Ansteuerung eines dreiphasigen Spulensystems mit drei Spulen, wie sie bei einem Dreiphasensystem 150 des Planarantriebssystems 1 eingesetzt werden kann. Wie oben anhand von **Figur 12** erläutert wurde, basiert die Ansteuerung dabei auf einer mittenzentrierten Pulsweitenmodulation.

Gemäß des oberen Diagramms von **Figur 23** wird das Spulensystem mit ersten Spannungspulsen 410 beaufschlagt, und erfolgt ferner eine Beeinflussung der elektrischen Ansteuerung des Spulensystems, so dass ein dritter Stromverlauf 435 vorliegt. Im Bereich der ersten Spannungspulse 410 folgt der Strom den ersten Spannungspulsen 410, so dass der dritte Stromverlauf 435 in diesem Bereich ein dreieckförmiges Aussehen besitzt, wie es oben anhand von **Figur 12** mit Bezug auf den ersten Stromverlauf 430 erläutert wurde. Die Beeinflussung der Ansteuerung des Spulensystems erstreckt sich gemäß dem in **Figur 23** dargestellten Beispiel über zwei PWM-Taktperioden, d.h. vorliegend vom Zeitpunkt 2*Ts bis zum Zeitpunkt 4*Ts, wodurch zwei erste Spannungspulse 410 ausgelassen werden. Dieser Vorgang kann auch als Austasten der ersten Spannungspulse 410 bezeichnet werden. Die Beeinflussung hat zur Folge, dass in dem beeinflussten Zeitraum kein Rippelstrom vorhanden ist. Aufgrund einer Trägheit des Spulensystems ist in dem beeinflussten Zeitraum weiterhin ein Stromfluss mit abnehmendem Strombetrag vorhanden, wie anhand des dritten Stromverlaufs 435 deutlich wird.

Das mittlere Diagramm von **Figur 23** zeigt entsprechende Gegebenheiten bei einer Ansteuerung und Beeinflussung eines dreiphasigen Spulensystems. Das Spulensystem wird mit mittenzentrierten zweiten, dritten und vierten Spannungspulsen 421, 422, 423 mit unterschiedlichen Pulsbreiten beaufschlagt. Des Weiteren findet eine Beeinflussung der elektrischen Ansteuerung des Spulensystems statt, so dass ein vierter Stromverlauf 436 vorliegt. Der vierte Stromverlauf 436 bezieht sich auf eine der drei Spulen des dreiphasigen Spulensystems. Im Bereich der zweiten bis vierten Spannungspulse 421, 422, 423, also dort, wo sich die zugehörigen drei Ansteuerspannungen nicht auf dem gleichen (oberen oder unteren) Spannungsniveau befinden, liegt eine Vergrößerung des Strombetrags vor und folgt der Strom den Ansteuerspannungen, so dass der vierte Stromverlauf 436 in diesem Bereich ein dreieckförmiges Aussehen besitzt, wie es oben anhand von **Figur 12** mit Bezug auf den zweiten Stromverlauf 431 erläutert wurde.

Die Ansteuerung und deren Beeinflussung wird bei dem mittleren Diagramm von **Figur 23** korrespondierend zu dem oberen Diagramm von **Figur 23** durchgeführt, so dass der vierte Stromverlauf 436 in dem dreiphasigen Spulensystem mit dem dritten Stromverlauf 435 in dem einphasigen Spulensystem übereinstimmt. Das Beeinflussen durch Austasten erfolgt hierbei derart, dass in dem beeinflussten Zeitraum ein zweiter, dritter und vierter Spannungspuls 421, 422, 423 ausgelassen werden. Dies hat zur Folge, dass in dem beeinflussten Zeitraum keine Vergrößerung des Strombetrags und damit kein Rippelstrom auftritt. Aufgrund der Trägheit des Spulensystems ist in dem beeinflussten Zeitraum weiterhin ein Stromfluss mit abnehmendem Strombetrag vorhanden, wie es bei dem vierten Stromverlauf 436 dargestellt ist. Bei den zwei anderen Spulen des dreiphasigen Spulensystems liegen zu dem vierten Stromverlauf 436 korrespondierende, nicht gezeigte Stromverläufe vor. Auch hierbei erfolgt jeweils eine Vergrößerung des Strombetrags, wenn sich sämtliche drei Ansteuerspannungen nicht auf dem gleichen Spannungsniveau befinden, und ansonsten eine Verkleinerung des Strombetrags.

Wie oben anhand von **Figur 22** erläutert wurde, können zur Beeinflussung der Stromregelung zum zeitweisen Unterdrücken des Rippelstroms in einem Dreiphasensystem 150 mit Hilfe der Unterbrechungseinrichtung 193 geänderte Steuersignale 302 an eine zugehörige Endstufeneinrichtung 180 angelegt werden. Eine Beeinflussung der Stromregelung zum Austasten von zweiten bis vierten Spannungspulsen 421, 422, 423 entsprechend des mittleren Diagramms von **Figur 23** kann dabei wie folgt erfolgen. Mit Bezug auf die in **Figur 10** gezeigte Endstufeneinrichtung 180 kann durch die geänderten Steuersignale 302 zum Beispiel eine solche zeitweise Ansteuerung der ersten bis sechsten Schalter 181, 182, 183, 184, 185, 186 bewirkt werden, dass der zweite Schalter 182, der vierte Schalter 184 und der sechste Schalter 186 geschlossen, und der erste Schalter 181, der dritte Schalter 183 und der fünfte Schalter 185 geöffnet sind. Alternativ kann mittels der geänderten Steuersignale 302 zeitweise eine Betriebsweise hervorgerufen werden, in welcher der erste Schalter 181, der dritte Schalter 183 und der fünfte Schalter 185 geschlossen, und der zweite Schalter 182, der vierte Schalter 184 und der sechste Schalter 186 geöffnet sind. Durch eine solche Ansteuerung kann jeweils ein Austasten von zweiten bis vierten Spannungspulsen 421, 422, 423 erzielt werden.

Das Austasten von Spannungspulsen bietet die Möglichkeit, parasitäre kapazitive Kopplungen zwischen dem Stator 5 und dem Läufer 200 zu reduzieren bzw. zu unterdrücken. Dies begünstigt eine bei dem Läufer 200 im Rahmen der Datenübertragung von dem Stator 5 zu dem Läufer 200 durchgeführte Messung der in der Läuferspule 240 induzierten Wechselspannung.

Das untere Diagramm von **Figur 23** veranschaulicht die oben erwähnte alternative Vorgehensweise, statt des Austastens von Spannungspulsen Spannungspulse mit übereinstimmenden Pulsbreiten zu erzeugen. Auch auf diese Weise kann der beeinflusste vierte Stromverlauf 436 in dem betreffenden dreiphasigen Spulensystem hervorgerufen werden. Das Beeinflussen der Stromregelung erfolgt hierbei derart, dass in dem beeinflussten Zeitraum ein zweiter, dritter und vierter Spannungspuls 421, 422, 423 mit übereinstimmenden Pulsbreiten an das Spulensystem angelegt werden. Auf diese Weise befinden sich die zugehörigen drei Ansteuerspannungen auf dem gleichen oberen Spannungsniveau, was ein Ausbleiben der Vergrößerung des Strombetrags, und damit ein Ausbleiben des Rippelstroms zur Folge hat. In dem beeinflussten Zeitraum ist auch hier aufgrund der Trägheit des Spulensystems weiterhin ein Stromfluss mit abnehmendem Strombetrag vorhanden. Bei den zwei anderen Spulen des dreiphasigen Spulensystems liegen zu dem vierten Stromverlauf 436 korrespondierende, nicht gezeigte Stromverläufe vor.

Eine Beeinflussung der Stromregelung entsprechend des unteren Diagramms von **Figur 23** kann ebenfalls mit Hilfe von geänderten Steuersignalen 302 bewirkt werden, welche von der Unterbrechungseinrichtung 193 erzeugt und an eine entsprechende Endstufeneinrichtung 180 bzw. deren Schalter 181, 182, 183, 184, 185, 186 angelegt werden können (vgl. die **Figuren 10** **und** **22**).

Wie oben erläutert wurde, kann die in **Figur 22** gezeigte erste Beeinflussungseinrichtung 191 im Rahmen der Datenübertragung von dem Stator 5 zu dem Läufer 200 mit Hilfe der Hauptsteuervorrichtung 500 des Planarantriebssystems 1 aktiviert bzw. angesteuert werden. Hierauf basierend kann die erste Beeinflussungseinrichtung 191 die Stromregelung des in **Figur 22** gezeigten Dreiphasensystems 150 zeitweise bzw. für definierte Zeiträume beeinflussen. Hierdurch kann auch der Rippelstrom in dem Dreiphasensystem 150, damit das durch den Rippelstrom bedingte Erzeugen eines magnetischen Wechselfelds, und auf diese Weise das Induzieren einer elektrischen Wechselspannung in der Läuferspule 240 des Läufers 200 zeitweise (im Wesentlichen) unterdrückt werden.

Mit Bezug auf den in **Figur 22** gezeigten Regelkreis besteht die Möglichkeit, dass das bzw. jedes Statormodul 10 des Stators 5 eine einzelne erste Beeinflussungseinrichtung 191 aufweist. Die erste Beeinflussungseinrichtung 191 eines Statormoduls 10 kann hierbei dazu ausgebildet sein und in der oben beschriebenen Art und Weise dazu genutzt werden, die von wenigstens einer Stromregeleinrichtung 170 des zugehörigen Statormoduls 10 erzeugten Steuersignale 301 zeitweise zu unterbrechen und zeitweise eine beeinflusste Betriebsweise von wenigstens einer Endstufeneinrichtung 180, und damit ein Unterdrücken des Rippelstroms in wenigstens einem Dreiphasensystem 150 des Statormoduls 10, hervorzurufen. Möglich ist es auch, dass der Stator 5 für jedes Dreiphasensystem 150 und damit jede Stromregeleinrichtung 170 und jede Endstufeneinrichtung 180 eine eigene erste Beeinflussungseinrichtung 191 aufweist. In dieser Ausgestaltung kann das bzw. jedes Statormodul 10 vierundzwanzig erste Beeinflussungseinrichtungen 191 aufweisen, mit deren Hilfe die Stromregelung von jeweils einem Dreiphasensystem 150 beeinflusst werden kann. Die erste Beeinflussungseinrichtung 191 oder die mehreren ersten Beeinflussungseinrichtungen 191 eines Statormoduls 10 können, wie in **Figur 22** dargestellt ist, in der zugehörigen Modulsteuervorrichtung 190 integriert sein.

Wie oben beschrieben wurde, können mehrere Dreiphasensysteme 150 des Stators 5, welche gegebenenfalls auch Bestandteile von mehreren benachbarten Statormodulen 10 sein können, gleichzeitig bestromt werden. In dieser Hinsicht besteht die Möglichkeit, die Stromregelung von einem oder auch mehreren bzw. sämtlichen bestromten Dreiphasensystemen 150 zum Zwecke der Datenübertragung von dem Stator 5 zu dem Läufer 200 mit Hilfe von einer oder mehreren ersten Beeinflussungseinrichtungen 191 zeitweise zu beeinflussen. Dies kann durch die Hauptsteuervorrichtung 500 initiiert und gesteuert werden, indem die Hauptsteuervorrichtung entsprechende Datensignale 321 zum Aktivieren und Ansteuern an eine oder mehrere erste Beeinflussungseinrichtungen 191 übermittelt. Im Falle einer Beeinflussung der Stromregelung von mehreren bestromten Dreiphasensystemen 150 kann die Beeinflussung zeitlich synchron zueinander erfolgen. Im Betrieb von einer oder mehreren ersten Beeinflussungseinrichtungen 191 kann der Rippelstrom in einem oder mehreren Dreiphasensystemen 150 zeitweise unterdrückt werden. In entsprechender Weise kann das mit dem Rippelstrom verknüpfte Erzeugen eines magnetischen Wechselfelds, und damit das Induzieren einer elektrischen Wechselspannung in der Läuferspule 240 des Läufers 200 zeitweise (im Wesentlichen) unterdrückt werden. Hierauf basierend können entsprechende Datensignale von dem Stator 5 zu dem Läufer 200 übertragen werden.

Mit Bezug auf den Läufer 200 des Planarantriebssystems 1 erfolgt im Rahmen der Datenübertragung von dem Stator 5 zu dem Läufer 200 eine Messung der in der Läuferspule 240 induzierten Wechselspannung, um hierauf basierend die zeitweise Beeinflussung der Stromregelung von wenigstens einem Dreiphasensystem 150 des Stators 5 zu erfassen. Ferner erfolgt eine entsprechende Auswertung, um Datensignale bzw. Symbole, welche von dem Stator 5 durch die zeitweise bzw. pulsförmig durchgeführte Beeinflussung erzeugt werden können, zu ermitteln. Durch die Beeinflussung der Stromregelung kann eine Veränderung in Bezug auf die in der Läuferspule 240 induzierte Wechselspannung hervorgerufen werden. Wie oben angegeben wurde, kann hierbei erzielt werden, dass die Spannungsinduktion unterdrückt wird und keine Wechselspannung in der Läuferspule 240 induziert wird. Möglich ist es auch, dass die Spannungsinduktion infolge der Beeinflussung im Wesentlichen unterdrückt wird, wodurch nur eine relativ kleine oder vernachlässigbar kleine Wechselspannung in der Läuferspule 240 induziert wird.

Zum Zwecke der Spannungsmessung und Auswertung können die oben anhand von **Figur 13** erläuterten Komponenten des Läufers 200, d.h. die mit der Läuferspule 240 verbundene Spannungsmesseinrichtung 281 und die Steuereinrichtung 280, genutzt werden. Hierbei dient die Spannungsmesseinrichtung 281 zum Messen der in der Läuferspule 240 induzierten elektrischen Wechselspannung. Die Spannungsmesseinrichtung 281 ist mit der Steuereinrichtung 280 verbunden, so dass entsprechende Messsignale der Wechselspannung von der Spannungsmesseinrichtung 281 zum Verarbeiten und Auswerten an die Steuereinrichtung 280 übermittelt werden können. Durch Auswerten der Messsignale kann die Steuereinrichtung 280 die durch die zeitweise Beeinflussung der Bestromung von wenigstens einem Dreiphasensystem 150 des Stators 5 hervorgerufene Veränderung in Bezug auf die Induktionsspannung erfassen, und hierauf basierend die von dem Stator 5 erzeugten Datensignale bzw. Symbole ermitteln.

Wie oben erläutert wurde, kann die Veränderung darin bestehen, dass das Induzieren der Wechselspannung zeitweise unterdrückt oder im Wesentlichen unterdrückt wird. Die zum Auswerten genutzte Steuereinrichtung 280 des Läufers 200 kann einen Analog-Digital-Umsetzer und einen Schwellwertentscheider aufweisen, wodurch die Veränderung bzw. Unterdrückung der Induktionsspannung, und damit eine bei dem Stator 5 zum Erzeugen eines Sendepulses vorgenommene Beeinflussung der Bestromung, erkannt werden kann.

Mit Bezug auf die Datenübertragung von dem Stator 5 zu dem Läufer 200 kann, im Vergleich zu der mittels Lastmodulation durchgeführten Datenübertragung von dem Läufer 200 zu dem Stator 5, ein stärkeres bzw. weit stärkeres Sendesignal erzeugt werden. Daher kann die Datenübertragung in dieser Übertragungsrichtung ohne eine Modulation eines Nutzsignals auf ein Trägersignal, wie es oben beschrieben wurde, erfolgen.

Die Datenübertragung von dem Stator 5 zu dem Läufer 200 kann gleichwohl auch unter Anwendung einer Modulation erfolgen, indem das vorstehend erläuterte zeitweise Beeinflussen der Stromregelung von wenigstens einem Dreiphasensystem 150 mit Hilfe von wenigstens einer ersten Beeinflussungseinrichtung 191 in modulierter Form durchgeführt wird. Hierdurch kann die Sicherheit der Datenübertragung begünstigt werden. Zu diesem Zweck kann wenigstens eine erste Beeinflussungseinrichtung 191 von der Hauptsteuervorrichtung 500 des Planarantriebssystems angesteuert werden, um die Bestromung von wenigstens eines Dreiphasensystem 150 in modulierter Form zu beeinflussen. Oben mit Bezug auf das Durchführen der Datenübertragung von dem Läufer 200 zu dem Stator 5 unter Anwendung einer Modulation erläuterte Aspekte und Details können auch hier in entsprechender Weise zur Anwendung kommen.

Beispielsweise kann die eingesetzte Modulation eine Phasenmodulation, Amplitudenmodulation oder Frequenzmodulation sein. Die Beeinflussung der Bestromung kann derart moduliert erfolgen, dass ein Trägersignal bzw. eine Trägerfrequenz gesendet wird, welche(s) mit einem Nutzsignal moduliert ist. Das Nutzsignal umfasst dabei die für die Übermittlung vorgesehenen Datensignale bzw. Symbole. Die Trägerfrequenz kann im kHz-Bereich liegen. Möglich ist zum Beispiel der Frequenzbereich von 1kHz bis 2kHz. Das von dem Stator 5 erzeugte und mit der Nutzinformation bzw. dem Nutzsignal modulierte Trägersignal kann in der bei dem Läufer 200 gemessenen Wechselspannung enthalten sein. Durch Auswerten der gemessenen Wechselspannung kann infolgedessen auf das Nutzsignal geschlossen werden.

Hinsichtlich einer Amplitudenmodulation kann zum Beispiel ein Trägersignal mit einer Trägerfrequenz von 1kHz oder 2kHz zur Anwendung kommen. Zur Datenübertragung kann entweder ein Senden des Trägersignals durch pulsförmiges Beeinflussen der Stromregelung wenigstens eines Dreiphasensystems 150, oder ein Nichtsenden des Trägersignals, indem keine Beeinflussung vorgenommen wird, erfolgen. Hierbei kann durch pulsförmiges Beeinflussen für eine vorgegebene Zeitdauer der logische Zustand 0, und kann durch Nichtbeeinflussen für die vorgegebene Zeitdauer der logische Zustand 1 übertragen werden (oder auch umgekehrt).

Im Falle einer Frequenzmodulation kann ebenfalls zum Beispiel ein Trägersignal mit einer Trägerfrequenz von 1kHz oder 2kHz eingesetzt werden. Zum Verwirklichen der Datenübertragung kann entweder das Trägersignal mit der Trägerfrequenz von 1kHz bzw. 2kHz, oder ein moduliertes Trägersignal mit einer geänderten, d.h. höheren oder niedrigeren Frequenz von zum Beispiel 2kHz bzw. 1kHz, gesendet werden. Zu diesem Zweck kann die Bestromung wenigstens eines Dreiphasensystems 150 hierzu korrespondierend pulsförmig beeinflusst werden. Beispielsweise kann durch pulsförmiges Beeinflussen mit der Trägerfrequenz für eine vorgegebene Zeitdauer der logische Zustand 0, und kann durch pulsförmiges Beeinflussen mit der geänderten Frequenz für die vorgegebene Zeitdauer der logische Zustand 1 übertragen werden (oder auch umgekehrt). Es können auch eine größere Anzahl an unterschiedlichen Frequenzen und auf diese Weise zum Beispiel eine 4-FSK zur Anwendung kommen.

Im Hinblick auf eine Phasenmodulation kann in entsprechender Weise zum Beispiel ein Trägersignal mit einer Trägerfrequenz von 1kHz oder 2kHz zum Einsatz kommen. Das Durchführen der Datenübertragung kann ein Senden des Trägersignals in unterschiedlichen Phasenlagen umfassen, indem die Bestromung wenigstens eines Dreiphasensystems 150 hierzu korrespondierend pulsförmig beeinflusst wird. Möglich sind zum Beispiel zwei unterschiedliche Phasenlagen, so dass eine 2-PSK vorliegt, oder auch eine andere Anzahl an unterschiedlichen Phasenlagen wie beispielsweise vier verschiedene Phasenlagen, so dass eine 4-PSK zum Einsatz kommt.

Um die Störfestigkeit zu erhöhen, kann es auch mit Bezug auf die Datenübertragung von dem Stator 5 zu dem Läufer 200 in Betracht kommen, das Erzeugen von Datensignalen bzw. Symbolen jeweils auf eine vorgegebene Länge ausgedehnt durchzuführen, indem die betreffenden Symbole mehrfach mit einer vorgegebenen Wiederholung gesendet werden. Auf diese Weise wird der Informationsgehalt eines Symbols dadurch übermittelt, dass das betreffende Symbol mehrfach hintereinander gesendet wird.

Ein Durchführen der Datenübertragung von dem Stator 5 zu dem Läufer 200 unter Anwendung einer Modulation ist, neben einer Analog-Digital-Wandlung, mit einer komplexeren Signalverarbeitung im Rahmen der Auswertung durch die Steuereinrichtung 280 des Läufers 200 (vgl. **Figur 13**) verbunden. Das Auswerten kann hierbei ein Durchführen einer Korrelation unter Verwendung wenigstens eines Referenzsignals umfassen. Hierbei können jeweils für die Länge eines Symbols abgetastete Messwerte der Induktionsspannung mit dem wenigstens einen Referenzsignal multipliziert, und können die Produkte aufsummiert werden. Das wenigstens eine Referenzsignal kann ein periodisches Signal sein.

Im Folgenden wird auf weitere mögliche bzw. alternative Ausgestaltungen eingegangen, welche in Bezug auf das Planarantriebssystem 1 und dessen Bestandteile in Betracht kommen können. Im Hinblick auf bereits beschriebene Aspekte und Details, welche bei diesen Ausgestaltungen analog zur Anwendung kommen können, wird auf die obige Beschreibung verwiesen.

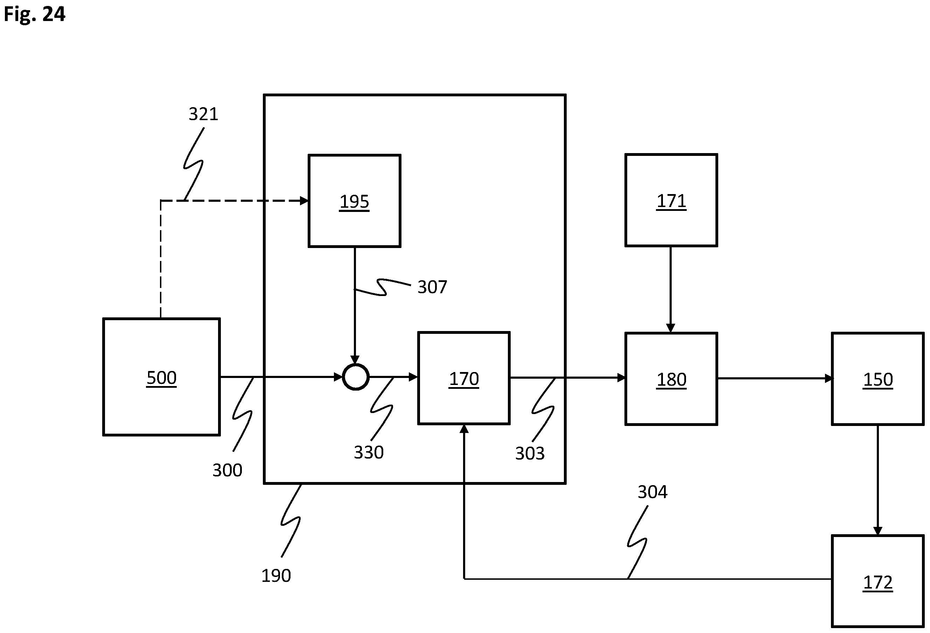

Mit Bezug auf den Stator 5 kann zum Beispiel vorgesehen sein, das zeitweise Beeinflussen der Bestromung wenigstens eines Dreiphasensystems 150 mit einer alternativen Ausgestaltung einer Beeinflussungseinrichtung durchzuführen. Zur Veranschaulichung zeigt **Figur 24** eine gegenüber **Figur 22** abgewandelte Ausgestaltung eines Regelkreises zur Stromregelung eines Dreiphasensystems 150 eines Statormoduls 10, wie er bei dem Planarantriebssystem 1 für die Datenübertragung von dem Stator 5 zu dem Läufer 200 vorgesehen sein kann. Der Regelkreis basiert ebenfalls auf dem in **Figur 11** gezeigten Regelkreis.

Gemäß **Figur 24** wird eine zweite Beeinflussungseinrichtung 195 eingesetzt, welche in der Modulsteuervorrichtung 190 integriert sein kann, und welche zum zeitweisen Beeinflussen bzw. Ändern von bei der Stromregelung verwendeten Sollstromwerten 300 dient. Im Betrieb der zweiten Beeinflussungseinrichtung 195 können, wie in **Figur 24** gezeigt ist, Beeinflussungssignale 307 von der zweiten Beeinflussungseinrichtung 195 erzeugt werden, welche den von der Hauptsteuervorrichtung 500 ausgegebenen Sollstromwerten 300 hinzugefügt werden. Das Aufaddieren der Beeinflussungssignale 307 auf die Sollstromwerte 300 hat zur Folge, dass beeinflusste oder geänderte Sollstromwerte 330 an die Stromregeleinrichtung 170 übermittelt werden. Es ist auch möglich, dass die zweite Beeinflussungseinrichtung 195 selbst geänderte Sollstromwerte 330 erzeugt und an die Stromregeleinrichtung 170 übermittelt (nicht dargestellt). Dies führt jeweils dazu, dass geänderte Steuersignale 303 von der Stromregeleinrichtung 170 erzeugt und an die Endstufeneinrichtung 180 angelegt werden, wodurch es zu einer zeitweisen Beeinflussung der Stromregelung des Dreiphasensystems 150, und damit zu einer bei dem Läufer 200 feststellbaren Veränderung der Induktionsspannung, kommt. Auch die zweite Beeinflussungseinrichtung 195 wird durch die Hauptsteuervorrichtung 500 angesteuert, welche hierzu entsprechende Datensignale 321 an die zweite Beeinflussungseinrichtung 195 übermitteln kann.

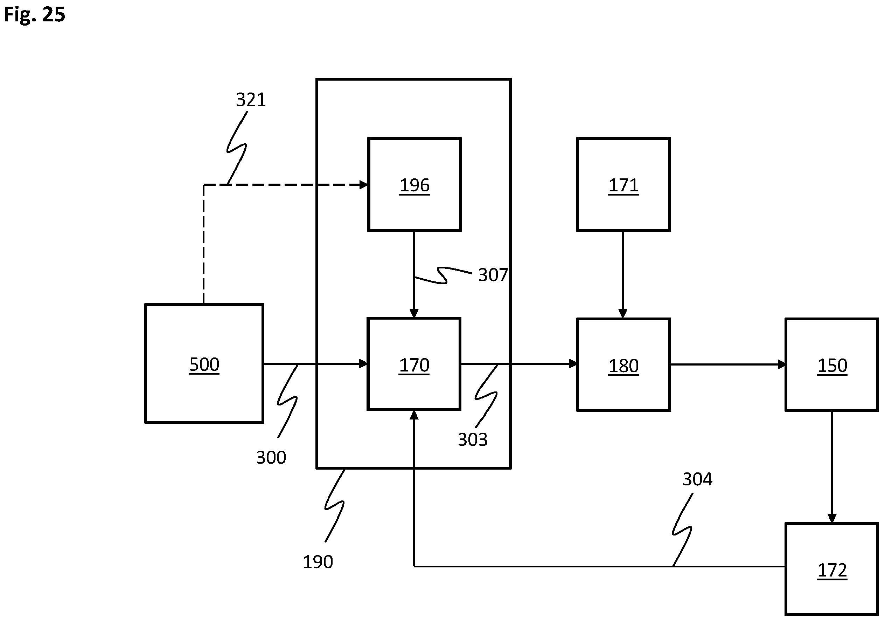

**Figur 25** zeigt eine weitere gegenüber **Figur 22** abgewandelte Ausgestaltung eines Regelkreises zur Stromregelung eines Dreiphasensystems 150 eines Statormoduls 10, wie er bei dem Planarantriebssystem 1 für die Datenübertragung von dem Stator 5 zu dem Läufer 200 zum Einsatz kommen kann. Der Regelkreis basiert ebenfalls auf dem in **Figur** 11 gezeigten Regelkreis.

Gemäß **Figur 25** wird eine dritte Beeinflussungseinrichtung 196 eingesetzt, welche in der Modulsteuervorrichtung 190 integriert sein kann, und welche zum direkten zeitweisen Beeinflussen der Stromregeleinrichtung 170 vorgesehen ist. Im Betrieb der dritten Beeinflussungseinrichtung 196 werden Beeinflussungssignale 307 durch die dritte Beeinflussungseinrichtung 196 erzeugt und an die Stromregeleinrichtung 170 übermittelt. Dies hat zur Folge, dass die Stromregeleinrichtung 170 geänderte Steuersignale 303 erzeugt und an die Endstufeneinrichtung 180 anlegt, wodurch es zu einer zeitweisen Beeinflussung der Stromregelung des Dreiphasensystems 150, und damit zu einer bei dem Läufer 200 feststellbaren Veränderung der Induktionsspannung, kommt. Auch die dritte Beeinflussungseinrichtung 196 wird durch die Hauptsteuervorrichtung 500 angesteuert, welche hierzu entsprechende Datensignale 321 an die dritte Beeinflussungseinrichtung 196 übermitteln kann.

Eine mit Hilfe der zweiten oder dritten Beeinflussungseinrichtung 195, 196 durchgeführte Beeinflussung der Bestromung kann zum Beispiel dazu führen, dass aufgrund der geänderten Steuersignale 303 ein vergrößerter oder verkleinerter Rippelstrom in dem Dreiphasensystem 150 hervorgerufen wird, welcher eine gegenüber dem unbeeinflussten Zustand vergrößerte oder verkleinerte Schwingungsbreite besitzt. In entsprechender Weise kann hierdurch ein schwächeres oder stärkeres magnetisches Wechselfeld durch den Stator 5 erzeugt, und kann dadurch eine kleinere oder größere elektrische Wechselspannung in der Läuferspule 240 des Läufers 200 induziert werden. Dies kann ebenfalls im Rahmen der oben beschriebenen und bei dem Läufer 200 durchgeführten Spannungsmessung und Auswertung erfasst werden.

Entsprechend der obigen Beschreibung zu der ersten Beeinflussungseinrichtung 191 ist es möglich, dass das bzw. jedes Statormodul 10 des Stators 5 eine einzelne zweite oder dritte Beeinflussungseinrichtung 195, 196 aufweist, mit deren Hilfe auf die Betriebsweise von einer oder mehreren Stromregeleinrichtungen 170 und Endstufeneinrichtungen 180 eingewirkt, und damit die Bestromung von einem oder mehreren Dreiphasensystemen 150 zeitweise beeinflusst werden kann. Möglich ist es auch, dass der Stator 5 für jedes Dreiphasensystem 150 eine eigene zweite oder dritte Beeinflussungseinrichtung 195, 196 aufweist. Mit Hilfe von einer oder mehreren zweiten bzw. dritten Beeinflussungseinrichtungen 195, 196 kann die Bestromung von einem oder mehreren bestromten Dreiphasensystemen 150, und dadurch das Induzieren einer Wechselspannung in der Läuferspule 240 des Läufers 200, zeitweise beeinflusst werden. Dies kann durch die Hauptsteuervorrichtung 500 initiiert und gesteuert werden. Möglich ist es ferner, das zeitweise Beeinflussen der Bestromung von einem oder mehreren Dreiphasensystemen 150 mit Hilfe von einer oder mehreren zweiten bzw. dritten Beeinflussungseinrichtungen 195, 196 in modulierter Form, also unter Anwendung einer Modulation wie zum Beispiel einer Phasenmodulation, Amplitudenmodulation oder Frequenzmodulation, durchzuführen.

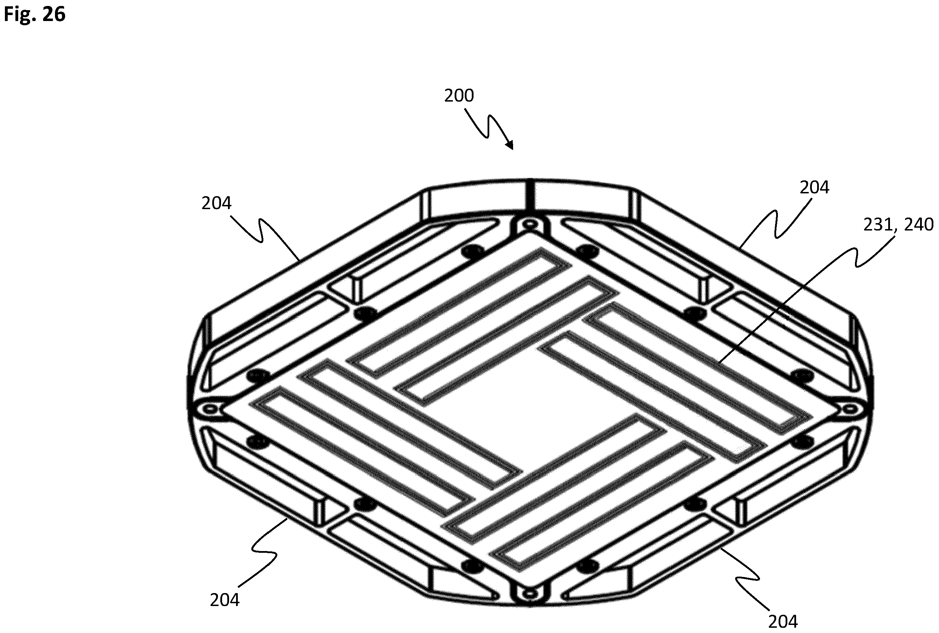

Mit Bezug auf den Läufer 200 können ebenfalls abgewandelte Ausgestaltungen in Betracht kommen. **Figur 26** zeigt in einer perspektivischen Ansicht von unten eine weitere mögliche Ausgestaltung des Läufers 200. Hierbei weist der Läufer 200 eine an der Unterseite angeordnete und sich unterhalb der in **Figur 26** nicht dargestellten Magneteinrichtung 201 befindende zweite Leiterplatte 231 mit mehreren bzw. vier Läuferspulen 240 auf. Die zweite Leiterplatte 231 erstreckt sich im Wesentlichen über die gesamte Fläche des Läufers 200. Auf diese Weise kann eine relativ große Spulenfläche zur Verfügung gestellt werden, was eine effektive Energieübertragung von dem Stator 5 auf den Läufer 200 begünstigt. Die zweite Leiterplatte 231 kann ebenfalls mehrlagig ausgeführt sein.

In der in **Figur 26** gezeigten Ausgestaltung kann die Flughöhe des Läufers 200 um die Dicke der zweiten Leiterplatte 231 verringert sein. Daher kann es in Betracht kommen, die zweite Leiterplatte 231 mit einer im Vergleich zu der in den **Figuren 3****,** **17** **und** **18** gezeigten ersten Leiterplatte 230 geringeren Dicke und einer kleineren Anzahl an Lagen zu verwirklichen. Möglich ist zum Beispiel eine Ausgestaltung der zweiten Leiterplatte 231 mit einer Dicke von 0,3mm und, wie in **Figur 27** in einer Explosionsdarstellung gezeigt ist, mit zwei Lagen.

Gemäß der in **Figur 27** gezeigten Ausgestaltung weist die zweite Leiterplatte 231 in einer oberen Lage vier nebeneinander angeordnete spiralförmige metallische dritte Leiterbahnen 245 und in einer unteren Lage vier nebeneinander angeordnete spiralförmige metallische vierte Leiterbahnen 246 auf. Ein übereinander angeordnetes Paar aus einer dritten und einer vierten Leiterbahn 246, welche über Vertikalverbindungsstrukturen der zweiten Leiterplatte 231 elektrisch verbunden sein können, können jeweils eine der vier Läuferspulen 240 bilden. Ferner können die Läuferspulen 240 miteinander elektrisch verbunden sein.

Mit Bezug auf die in den **Figuren 26** **und** **27** gezeigte Ausgestaltung des Läufers 200 kann die in **Figur 13** gezeigte Schaltungsanordnung in entsprechender Weise zur Anwendung kommen. Hierbei kann die in **Figur 13** dargestellte Läuferspule 240 als Ersatzschaltbild der in **Figur 27** gezeigten Läuferspulen 240 der zweiten Leiterplatte 231 dienen, und sämtliche elektrisch verbundenen Läuferspulen 240 der zweiten Leiterplatte 231 umfassen. Ferner kann der im Rahmen der Lastmodulation zum Kurzschließen genutzte zweite Spulenteil 249 durch sämtliche vierten Leiterbahnen 246, und kann der erste Spulenteil 248 durch sämtliche dritten Leiterbahnen 245 der zweiten Leiterplatte 231 gebildet sein. Die vierten Leiterbahnen 246 können im Betrieb des Planarantriebssystems 1 dem Stator 5 zugewandt sein, und im Vergleich zu den dritten Leiterbahnen 245 den geringsten Abstand zu dem Stator 5 und zu dessen Dreiphasensystemen 150 aufweisen. Analog der in **Figur 21** gezeigten Ausgestaltung können die vierten Leiterbahnen 246 einen größeren Leiterquerschnitt besitzen als die dritten Leiterbahnen 245.

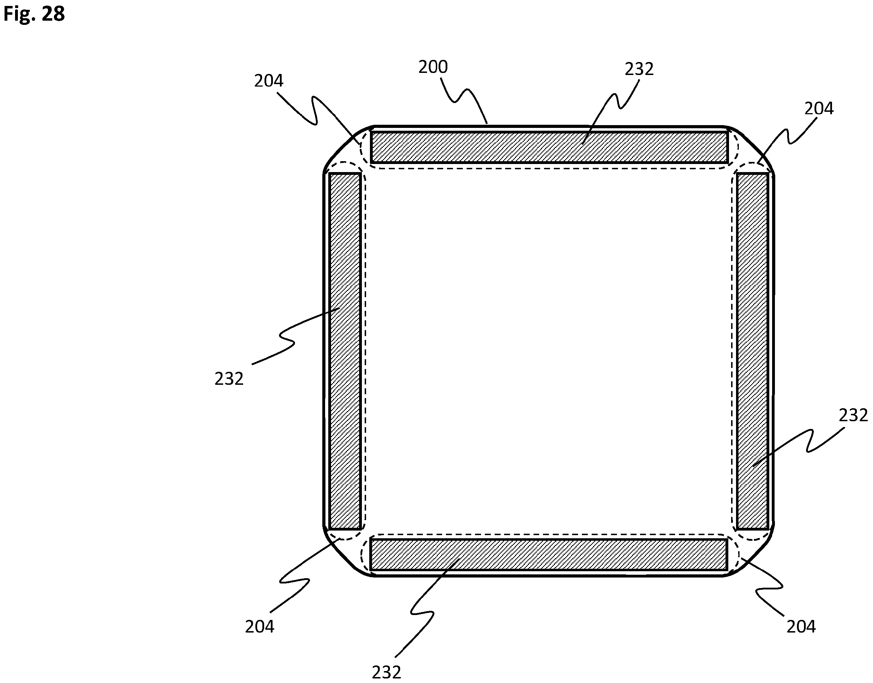

**Figur 28** zeigt eine weitere mögliche Ausgestaltung des Läufers 200. Hierbei weist der Läufer 200 mehrere bzw. vier dritte Leiterplatten 232 auf, welche im Bereich von lateralen Außenseiten des Läufers 200 angeordnet sind. Die dritten Leiterplatten 232 können mehrlagige Leiterplatten sein, und eine Dicke von zum Beispiel 1mm aufweisen. Jede dritte Leiterplatten 232 kann eine Mehrzahl an übereinander angeordneten spiralförmigen Leiterbahnen aufweisen, welche zusammen eine Läuferspule 240 bilden können. Auf diese Weise kann der Läufer 200 pro dritter Leiterplatte 232 eine Läuferspule 240, und damit insgesamt vier Läuferspulen 240 aufweisen (nicht dargestellt). Die Läuferspulen 240 können elektrisch verbunden sein. Die Anzahl der Lagen kann zum Beispiel der in **Figur 19** gezeigten ersten Leiterplatte 230 entsprechen. Die dritten Leiterplatten 232 können in Abstandshaltern 204 des Läufers 200 integriert sein, welche im Bereich der lateralen Au-ßenseiten des Läufers 200 vorhanden sein können.

Mit Bezug auf die in **Figur 28** gezeigte Ausgestaltung des Läufers 200 kann die in **Figur 13** gezeigte Schaltungsanordnung in entsprechender Weise zur Anwendung kommen. Auch hierbei kann die in **Figur 13** dargestellte Läuferspule 240 als Ersatzschaltbild der Läuferspulen 240 der dritten Leiterplatten 232 dienen, und sämtliche Läuferspulen 240 der dritten Leiterplatten 232 umfassen. Der im Rahmen der Lastmodulation zum Kurzschließen genutzte zweite Spulenteil 249 kann durch unterste Leiterbahnen der dritten Leiterplatten 232 gebildet sein.

Eine weitere nicht dargestellte Ausgestaltung für den Läufer 200 ist zum Beispiel eine Abwandlung der in **Figur 28** gezeigten Bauform dahingehend, dass der Läufer 200 anstelle von vier dritten Leiterplatten 232 lediglich zwei dritte Leiterplatten 232 aufweist, welche im Bereich von lateralen Außenseiten des Läufers 200 angeordnet bzw. in Abstandshaltern 204 des Läufers 200 integriert sind. Hierbei können sich die zwei dritten Leiterplatten 232 in unterschiedliche laterale Richtungen erstrecken. Mit Bezug auf **Figur 28** können zum Beispiel lediglich die zwei in der Darstellung von **Figur 28** oben und links angeordneten Leiterplatten 232 vorgesehen sein.

Im Hinblick auf die Energie- und Datenübertragung zwischen dem Stator 5 und dem Läufer 200 des Planarantriebssystems 1 können ferner folgende Aspekte und Ausgestaltungen zur Anwendung kommen.

Es ist zum Beispiel möglich, dass im Rahmen der Datenkommunikation nacheinander eine Datenübertragung von dem Stator 5 zu dem Läufer 200 (oder umgekehrt von dem Läufer 200 zu dem Stator 5) und nachfolgend in der hierzu inversen Übertragungsrichtung eine Datenübertragung von dem Läufer 200 zu dem Stator 5 (oder umgekehrt von dem Stator 5 zu dem Läufer 200) durchgeführt wird.

In dieser Hinsicht kann zum Beispiel durch den Stator 5 (oder die Hauptsteuervorrichtung 500) ein vorgegebener Frequenzbereich mit möglichst geringen Störungen ausgewählt bzw. festgelegt und dieser an den Läufer 200 kommuniziert werden. Hierauf basierend kann eine nachfolgende Datenübertragung von dem Läufer 200 zu dem Stator 5 durch Senden auf dem vorgegebenen Frequenzbereich erfolgen. Dies kann durch Belasten der Läuferspule 240 in modulierter Form unter Verwendung eines Trägersignals mit einer Trägerfrequenz innerhalb des vorgegebenen Frequenzbereichs durchgeführt werden. Hierdurch kann ein möglichst großes Signal-Rausch-Verhältnis unter im Voraus unbekannten Umgebungsbedingungen erreicht werden.

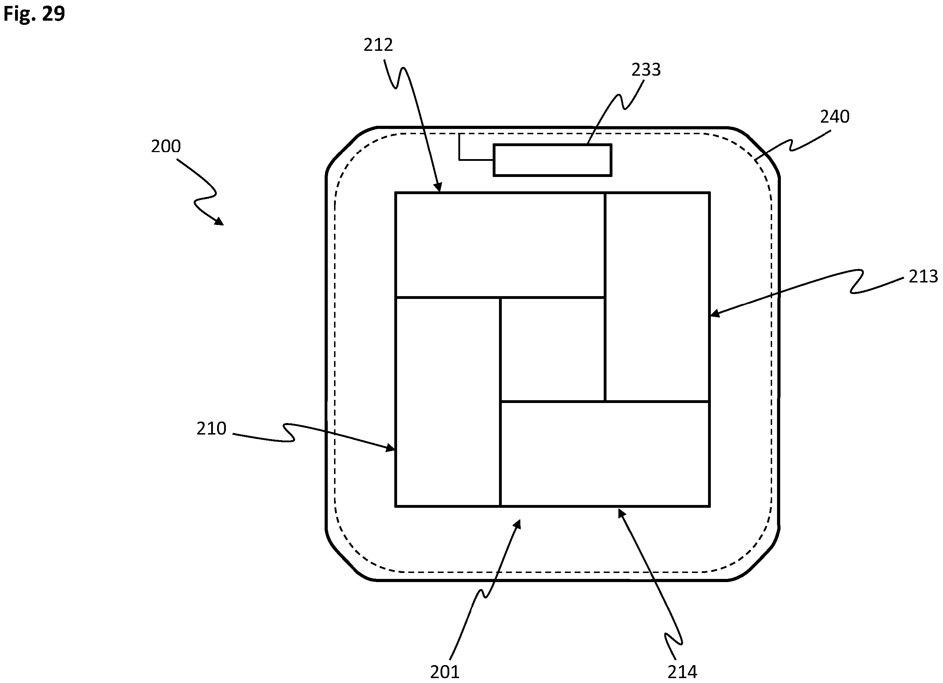

**Figur 29** zeigt eine weitere mögliche Ausgestaltung, welche für den Läufer 200 des Planarantriebssystems 1 in Betracht kommen kann. Der in **Figur 29** gezeigte Läufer 200 weist eine Läuferspule 240 auf, welche wie vorstehend beschrieben für eine induktive Energieübertragung und für eine Datenübertragung zwischen dem Stator 5 und dem Läufer 200 eingesetzt werden kann. Die Läuferspule 240 ist in einem die Magneteinrichtung 201 aus den vier Magneteinheiten 210, 212, 213, 214 lateral umgebenden Bereich bzw. Bauraum des Läufers 200 angeordnet. Die Läuferspule 240, welche sich im Bereich von lateralen Außenseiten des Läufers 200 befindet, kann zum Beispiel in Abstandshaltern des Läufers 200 integriert sein. Auch kann die Läuferspule 240 in Form eines mehrfach gewickelten Drahts verwirklicht sein (nicht dargestellt).

Wie in **Figur 29** angedeutet ist, kann der Läufer 200 ferner an einer geeigneten Stelle eine vierte Leiterplatte 233 aufweisen. Auf der vierten Leiterplatte 233 können anhand von **Figur 13** erläuterte und mit der Läuferspule 240 verbundene Komponenten des Läufers 200 wie der Gleichrichter 260, die Schalteinrichtung 271, die Steuereinrichtung 280 und die Spannungsmesseinrichtung 281 angeordnet sein. Des Weiteren können der in **Figur 13** dargestellte erste und zweite Spulenteil 248, 249 durch unterschiedliche Windungen der in Form eines gewickelten Drahts verwirklichten Läuferspule 240 gebildet sein (nicht dargestellt).

Mit Bezug auf die anhand von **Figur 29** erläuterte Bauform kann der Läufer 200 ferner derart ausgebildet sein, dass die vierte Leiterplatte 233 eine die Magneteinrichtung 201 umlaufende Form besitzt (nicht dargestellt). Die vierte Leiterplatte 233 kann in dieser Ausgestaltung mehrlagig ausgeführt sein. Des Weiteren kann die Läuferspule 240 durch übereinander angeordnete spiralförmige Leiterbahnen der vierten Leiterplatte 233, und können der in **Figur 13** gezeigte erste und zweite Spulenteil 248, 249 durch unterschiedliche Leiterbahnen der Leiterplatte 233 gebildet sein.

Die Magneteinrichtung 201 des Läufers 200 kann, abweichend von **Figur 29****,** auch derart ausgebildet sein, dass die Magneteinrichtung 201 keinen Bereich bzw. Freiraum umgibt (nicht dargestellt). Auf diese Weise ist eine Ausgestaltung des Läufers 200 mit kleinen bzw. kleineren Abmessungen möglich. Bei einer Verwendung von mehreren baugleichen Läufern 200 in dem Planarantriebssystem 1 (vgl. **Figur 30**) können insofern mehr Läufer 200 auf dem Stator 5 genutzt werden.

Für das Durchführen der Energie- sowie Datenübertragung zwischen dem Stator 5 und dem bzw. den Läufern 200 des Planarantriebssystems 1 können der bzw. die Läufer 200 ortsfest auf dem Stator 5 gehalten bzw. an den Stator 5 herangezogen werden. Es ist möglich, eine Energie- und Datenübertragung auch während des normalen Betriebs des Planarantriebssystems 1 durchzuführen, in welchem der bzw. die Läufer 200 angetrieben und bewegt werden. Letztere Variante kann durch die in **Figur 29** gezeigte Ausgestaltung des Läufers 200 begünstigt werden. Diese Bauform ermöglicht die Übertragung einer relativ großen elektrischen Leistung von dem Stator 5 zu dem Läufer 200, so dass ein relativ großer Abstand zwischen dem Läufer 200 und dem Stator 5 während der Energie- und Datenübertragung eingehalten werden kann.

Wie in **Figur 30** gezeigt ist, kann das Planarantriebssystem 1 mehrere bzw. wie dargestellt zwei Läufer 200 umfassen. Durch eine geeignete Bestromung von Dreiphasensystemen 150 des Stators 5 können die mehreren Läufer 200 wie oben angegeben angetrieben werden. Im Hinblick auf eine Datenübertagung zwischen den mehreren Läufern 200 und dem Stator 5 kann es in Betracht kommen, eine gleichzeitige Datenübertragung auf mehreren unterschiedlichen Frequenzbändern bzw. Frequenzbereichen durchzuführen. Dies bezieht sich jeweils auf das Durchführen einer Datenübertragung in modulierter Form, also unter Verwendung eines Trägersignals mit einer Trägerfrequenz. Hierbei können unterschiedliche Trägersignale mit in unterschiedlichen Frequenzbereichen liegenden Trägerfrequenzen zum Einsatz kommen. Auf diese können zum Beispiel mehrere Läufer 200 unter Verwendung von Trägersignalen mit unterschiedlichen Trägerfrequenzen aus unterschiedlichen Frequenzbereichen gleichzeitig Daten zu dem Stator 5 übertragen. Aufgrund der unterschiedlichen Frequenzbereiche können die Datenströme der Läufer 200 im Rahmen einer durch den Stator 5 durchgeführten Auswertung voneinander getrennt werden.

Eine weitere mögliche Ausgestaltung besteht darin, bei einer in modulierter Form durchgeführten Datenübertragung anstelle eines Trägersignals mit einer festen Trägerfrequenz bzw. Rechteck-Trägerfrequenz ein anderes Trägersignal zu verwenden. Beispielsweise kann eine Pseudozufalls-Sequenz verwendet werden. Auf diese Weise kann ein zu übertragendes Nutzsignal über einen breiteren Frequenzbereich verteilt werden, wodurch die Datenübertragung unempfindlicher gegenüber schmalbandigen Störquellen sein kann. Eine Modulation eines zu sendenden Nutzsignals auf ein Pseudozufalls-Trägersignal mit einer Pseudozufalls-Sequenz kann zum Beispiel dadurch erfolgen, dass die Pseudozufalls-Sequenz in unterschiedlichen Phasenlagen gesendet wird, oder dass ein Senden der Pseudozufalls-Sequenz durchgeführt wird oder nicht. Bei einer Auswertung kann auch hier eine Korrelation unter Verwendung wenigstens eines Referenzsignals durchgeführt werden.

Der vorgenannte Ansatz kann in entsprechender Weise zum Unterscheiden von verschiedenen Datenströmen verwendet werden, welche zum Beispiel von mehreren Läufern 200 (vgl. **Figur 30**) gesendet werden können. Eine Unterscheidung der Datenströme kann durch die Verwendung von unterschiedlichen Trägersignalen mit verschiedenen Pseudozufalls-Sequenzen erreicht werden.

Es wird darauf hingewiesen, dass abgesehen von den vorstehend beschriebenen Ausgestaltungen zusätzlich oder alternativ weitere nicht dargestellte drahtlose Kommunikationsmöglichkeiten für ein Planarantriebssystem umfassend einen Stator und wenigstens einen Läufer in Betracht kommen können. Denkbar ist zum Beispiel der Einsatz von RFID (engl. Radio-Frequency Identification) bzw. NFC (engl. Near Field Communication). In diesem Zusammenhang kann der bzw. wenigstens ein Läufer des Planarantriebssystems einen Transponder wie beispielsweise einen NFC-Chip aufweisen, und kann der Stator eine zur Kommunikation mit dem Transponder ausgebildete Leseeinrichtung aufweisen. Der Transponder kann sich zum Beispiel am Rand des Läufers oder seitlich einer Läuferspule oder Leiterplatte des Läufers befinden.

Auch andere drahtlose Kommunikationsarten bzw. Funktechnologien können zur Anwendung kommen. Hierbei können der bzw. wenigstens ein Läufer des Planarantriebssystems und der Stator geeignete Kommunikationseinrichtungen (Sendeeinrichtung, Empfangseinrichtung, Transceiver bzw. Sendeempfänger) umfassen. Denkbar sind Funktechnologien bzw. (Mobil-)Funkstandards wie zum Beispiel 5G, 4G (LTE, engl. Long Term Evolution), 3G (UMTS, engl. Universal Mobile Telecommunications System), 2G (GSM, engl. Global System for Mobile Communications), Bluetooth, WLAN (engl. Wireless Local Area Network), WAN (engl. Wide Area Network), ZigBee, Loran (engl. Long Range Navigation), DECT (engl. Digital Enhanced Cordless Telecommunications), EnOcean, Wibree oder WiMAX (engl. Worldwide Interoperability for Microwave Access) im Radiofrequenzbereich, sowie zum Beispiel IrDA (engl. Infrared Data Association) und optischer Richtfunk (FSO, engl. Free-Space Optics) im infraroten bzw. optischen Frequenzbereich.

Möglich ist des Weiteren eine externe Kommunikation bzw. RFID-Kommunikation ohne Beteiligung des Stators. Hierbei kann der bzw. wenigstens ein Läufer des Planarantriebssystems einen Transponder oder eine andere Kommunikationseinrichtung aufweisen, und kann hierzu korrespondierend eine externe Leseeinrichtung bzw. eine weitere externe Kommunikationseinrichtung zum Einsatz kommen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Planarantriebssystem (1), aufweisend einen Stator (5) und einen Läufer (200),
wobei der Stator (5) mehrere bestrombare Statorleiter (125) aufweist,
wobei der Läufer (200) eine Magneteinrichtung (201) mit wenigstens einem Läufermagneten (216) aufweist,
wobei zwischen bestromten Statorleitern (125) des Stators (5) und der Magneteinrichtung (201) des Läufers (200) eine magnetische Wechselwirkung hervorrufbar ist, um den Läufer (200) anzutreiben,
wobei der Stator (5) ausgebildet ist, das Bestromen von Statorleitern (125) derart durchzuführen, dass mit Hilfe von bestromten Statorleitern (125) ein magnetisches Wechselfeld erzeugbar ist,
wobei der Läufer (200) wenigstens eine Läuferspule (240) aufweist, in welcher aufgrund des magnetischen Wechselfelds eine Wechselspannung induzierbar ist,
und wobei das Planarantriebssystem (1) ausgebildet ist zur Datenübertragung von dem Stator (5) zu dem Läufer (200),
indem der Stator (5) ausgebildet ist zum zeitweisen Beeinflussen des Bestromens von Statorleitern (125), um dadurch zeitweise eine Veränderung in Bezug auf die in der wenigstens einen Läuferspule (240) des Läufers (200) induzierbare Wechselspannung hervorzurufen.

2. Planarantriebssystem nach Anspruch 1,
wobei der Stator (5) eine Beeinflussungseinrichtung (191, 195, 196) zum zeitweisen Beeinflussen des Bestromens von Statorleitern aufweist.

3. Planarantriebssystem nach Anspruch 2,
wobei der Stator (5) ausgebildet ist, das Bestromen von Statorleitern (125) durch eine Stromregelung auf Basis einer Pulsweitenmodulation durchzuführen,
und wobei die Beeinflussungseinrichtung (191, 195, 196) ausgebildet ist zum zeitweisen Beeinflussen der Stromregelung.

4. Planarantriebssystem nach Anspruch 3,
wobei aufgrund der Stromregelung ein Rippelstrom in bestromten Statorleitern (125) des Stators (5) und dadurch das magnetische Wechselfeld erzeugbar ist,
und wobei die Beeinflussungseinrichtung (191, 195, 196) ausgebildet ist, die Stromregelung derart zu beeinflussen, dass eine Veränderung in Bezug auf den Rippelstrom in bestromten Statorleitern (125) hervorgerufen wird.

5. Planarantriebssystem nach einem der Ansprüche 3 oder 4,
wobei die Beeinflussungseinrichtung (191) ausgebildet ist, ein bei der Stromregelung durchgeführtes Beaufschlagen von Statorleitern (125) mit Spannungspulsen (421, 422, 423) zu unterdrücken.

6. Planarantriebssystem nach einem der Ansprüche 3 oder 4,
wobei die Statorleiter (125) des Stators (5) zu unabhängig voneinander bestrombaren Mehrphasensystemen (150) zusammengeschaltet sind,
wobei bestromte Mehrphasensysteme (150) bei der Stromregelung mit mittig zueinander zentrierten Spannungspulsen (421, 422, 423) beaufschlagt werden,
und wobei die Beeinflussungseinrichtung (191) ausgebildet ist, die Stromregelung wenigstens eines Mehrphasensystems (150) derart zu beeinflussen, dass das Mehrphasensystem (150) mit Spannungspulsen (421, 422, 423) mit übereinstimmenden Pulsbreiten beaufschlagt wird.

7. Planarantriebssystem nach einem der vorhergehenden Ansprüche,
wobei der Stator (5) ausgebildet ist, das Beeinflussen des Bestromens von Statorleitern (125) in modulierter Form durchzuführen.

8. Planarantriebssystem nach einem der vorhergehenden Ansprüche,
wobei der Läufer (200) eine Spannungsmesseinrichtung (281) zum Messen der induzierten Wechselspannung aufweist.

9. Planarantriebssystem nach Anspruch 8,
wobei der Läufer (200) eine Verarbeitungseinrichtung (280) zum Auswerten der gemessenen induzierten Wechselspannung aufweist.

10. Planarantriebssystem nach einem der vorhergehenden Ansprüche,
wobei der Läufer (200) einen Gleichrichter (260) zum Umwandeln der induzierten Wechselspannung in eine Gleichspannung aufweist.

11. Planarantriebssystem nach einem der vorhergehenden Ansprüche,
wobei das Planarantriebssystem ausgebildet ist zur Datenübertragung von dem Läufer (200) zu dem Stator (5),
indem der Läufer (200) ausgebildet ist zum zeitweisen Belasten der wenigstens einen Läuferspule (240), um dadurch zeitweise eine erhöhte Stromaufnahme von bestromten Statorleitern (125) des Stators (5) hervorzurufen.

12. Verfahren zum Betreiben eines Planarantriebssystems (1),
wobei das Planarantriebssystem (1) einen Stator (5) und einen Läufer (200) aufweist,
wobei der Stator (5) mehrere bestrombare Statorleiter (125) aufweist,
wobei der Läufer (200) eine Magneteinrichtung (201) mit wenigstens einem Läufermagneten (216) aufweist,
wobei durch Bestromen von Statorleitern (125) des Stators (5) eine magnetische Wechselwirkung zwischen bestromten Statorleitern (125) und der Magneteinrichtung (201) des Läufers (200) hervorgerufen wird, um den Läufer (200) anzutreiben,
wobei das Bestromen von Statorleitern (125) derart durchgeführt wird, dass mit Hilfe von bestromten Statorleitern (125) ein magnetisches Wechselfeld erzeugt wird,
wobei der Läufer (200) wenigstens eine Läuferspule (240) aufweist, in welcher aufgrund des magnetischen Wechselfelds eine Wechselspannung induziert wird,
und wobei eine Datenübertragung von dem Stator (5) zu dem Läufer (200) durchgeführt wird,
indem das Bestromen von Statorleitern (125) des Stators (5) zeitweise beeinflusst und dadurch zeitweise eine Veränderung in Bezug auf die in der wenigstens einen Läuferspule (240) des Läufers (200) induzierte Wechselspannung hervorgerufen wird.

13. Verfahren nach Anspruch 12,
wobei das Bestromen von Statorleitern (125) durch eine Stromregelung auf Basis einer Pulsweitenmodulation durchgeführt wird,
und wobei das zeitweise Beeinflussen des Bestromens von Statorleitern (125) durch ein zeitweises Beeinflussen der Stromregelung durchgeführt wird.

14. Verfahren nach Anspruch 13,
wobei aufgrund der Stromregelung ein Rippelstrom in bestromten Statorleitern (125) des Stators (5) und dadurch das magnetische Wechselfeld erzeugt wird,
und wobei das Beeinflussen der Stromregelung derart durchgeführt wird, dass eine Veränderung in Bezug auf den Rippelstrom in bestromten Statorleitern (125) hervorgerufen wird.

15. Verfahren nach einem der Ansprüche 13 oder 14,
wobei das Beeinflussen der Stromregelung dadurch erfolgt, dass ein bei der Stromregelung durchgeführtes Beaufschlagen von Statorleitern (125) mit Spannungspulsen (421, 422, 423) unterdrückt wird.

16. Verfahren nach einem der Ansprüche 13 oder 14,
wobei die Statorleiter (125) des Stators (5) zu unabhängig voneinander bestrombaren Mehrphasensystemen (150) zusammengeschaltet sind,
wobei bestromte Mehrphasensysteme (150) bei der Stromregelung mit mittig zueinander zentrierten Spannungspulsen (421, 422, 423) beaufschlagt werden,
und wobei die Stromregelung wenigstens eines Mehrphasensystems (150) derart beeinflusst wird, dass das Mehrphasensystem (150) mit Spannungspulsen (421, 422, 423) mit übereinstimmenden Pulsbreiten beaufschlagt wird.

17. Verfahren nach einem der Ansprüche 12 bis 16,
wobei das Beeinflussen des Bestromens von Statorleitern (125) in modulierter Form durchgeführt wird.

18. Verfahren nach einem der Ansprüche 12 bis 17,
wobei ein Messen der induzierten Wechselspannung durchgeführt wird, um die Veränderung in Bezug auf die induzierte Wechselspannung zu erfassen.

19. Verfahren nach Anspruch 18,
wobei ein Auswerten der gemessenen induzierten Wechselspannung durchgeführt wird.

20. Verfahren nach einem der Ansprüche 12 bis 19,
wobei eine Datenübertragung von dem Läufer (200) zu dem Stator (5) durchgeführt wird,
indem die wenigstens eine Läuferspule (240) des Läufers (200) zeitweise belastet und dadurch zeitweise eine erhöhte Stromaufnahme von bestromten Statorleitern (125) des Stators (5) hervorgerufen wird.
